(19) Europäisches Patentamt
European Patent Office
Office européen des brevets

(11) EP 4 358 431 B1

(12) # EUROPEAN PATENT SPECIFICATION

(45) Date of publication and mention of the grant of the patent:
**18.03.2026 Bulletin 2026/12**

(21) Application number: **22852093.8**

(22) Date of filing: **30.07.2022**

(51) International Patent Classification (IPC):
***H04L 69/323*** *(2022.01)* ***H04B 7/185*** *(2006.01)*
***H04L 1/1607*** *(2023.01)*

(52) Cooperative Patent Classification (CPC):
**H04L 1/1642; H04L 1/1671;** H04L 69/323

(86) International application number:
**PCT/CN2022/109291**

(87) International publication number:
**WO 2023/011380 (09.02.2023 Gazette 2023/06)**

(54) **MULTI-FRAME FUSION TRANSMISSION METHOD IN A COMMUNICATION SYSTEM, AND RELATED APPARATUS**

FUSIONSÜBERTRAGUNGSVERFAHREN MIT MEHREREN RAHMEN IN EINEM KOMMUNIKATIONSSYSTEM UND ZUGEHÖRIGE VORRICHTUNG

PROCÉDÉ DE TRANSMISSION PAR FUSION MULTI-TRAMES DANS UN SYSTÈME DE COMMUNICATION, ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2021 CN 202110877395**

(43) Date of publication of application:
**24.04.2024 Bulletin 2024/17**

(73) Proprietor: **Huawei Technologies Co., Ltd.**
**Shenzhen, Guangdong 518129 (CN)**

(72) Inventors:
- **ZHU, Xudong**
  **Shenzhen, Guangdong 518129 (CN)**
- **GAN, Wenyu**
  **Shenzhen, Guangdong 518129 (CN)**
- **LI, Zhenzhou**
  **Shenzhen, Guangdong 518129 (CN)**
- **LIN, Lixin**
  **Shenzhen, Guangdong 518129 (CN)**
- **QIAN, Feng**
  **Shenzhen, Guangdong 518129 (CN)**

(74) Representative: **Maiwald GmbH**
**Engineering**
**Elisenhof**
**Elisenstrasse 3**
**80335 München (DE)**

(56) References cited:
**WO-A1-2021/126075**
**CN-A- 104 683 017**
**CN-A- 107 210 868**
**CN-A- 109 219 144**
**US-A1- 2003 212 822**
**US-A1- 2003 212 822**
**US-A1- 2018 191 480**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 358 431 B1

## Description

This application claims priority to Chinese Patent Application No. 202110877395.3, filed with the China National Intellectual Property Administration on July 31, 2021 and entitled "MULTI-FRAME INTEGRATED TRANSMISSION METHOD IN BEIDOU COMMUNICATION SYSTEM AND RELATED APPARATUS".

## TECHNICAL FIELD

This application relates to the field of satellite communication, and in particular, to a multi-frame integrated transmission method in a communication system that supports a short packet communication function, and a related apparatus.

## BACKGROUND

A BeiDou satellite navigation system is a major infrastructure that integrates positioning, timing, and communication. One of the features that distinguish the BeiDou satellite navigation system from other global positioning and navigation systems such as a global positioning system (global positioning system, GPS) and a global navigation satellite system (global navigation satellite system, GLONASS) is that the BeiDou satellite navigation system is especially suitable for positioning and communication in areas in which mobile communication is not covered or cannot be covered or communication systems are destroyed, such as oceans, deserts, grasslands, and no-man's land. A communication system of a BeiDou short packet service upgrades a technology system, and opens some necessary resources of the communication system of the BeiDou short packet service to civil use. For civil services and device characteristics, a communication protocol needs to be designed based on characteristics of the communication system of the BeiDou short packet service.

Currently, in the communication system of the BeiDou short packet service, when sending a service data packet, a transmit end needs to segment a long data packet into a plurality of small data segments due to a limitation of a sending capability of an underlying layer, and add frame header information before each data segment to generate a plurality of data frames. The frame header information may include an indication of a location of the data segment in the service data packet. The transmit end may send the data frames to a receive end. After receiving the data frames, the receive end may reassemble and restore the entire service data packet based on the frame header information. To ensure that the data packet is correctly sent, the receive end needs to feed back acknowledgment information to the transmit end after receiving the data frames, to notify the transmit end of a receiving status of the data frames. Currently, there are two acknowledgment modes for transmission of a plurality of data frames: a stop and wait mode and a parallel mode. In the stop and wait mode, after the transmit end sends one data frame, the receive end immediately feeds back acknowledgment information to the transmit end, and the transmit end sends a next data frame after determining, based on the acknowledgment information, that the receive end receives the data frame. In the parallel mode, the transmit end may send one group of (a plurality of) data frames simultaneously, then the receive end sends acknowledgment information to the transmit end after waiting for the transmit end to complete sending the group of data frames, and the transmit end sends a next group of data frames after determining, based on the acknowledgment information, that the receive end receives the group of data frames. However, in the communication system of the BeiDou short packet service, due to limited air interface resources, it is not supported to negotiate an acknowledgment mode between the transmit end and the receive end through complex control signaling interaction before data transmission.

US 2003/212822 describes a system, applicable to satellite networks, for communicating in a meshed network. The SLC layer is responsible for end-to-end packet delivery from one ST to the other, and has two modes of operation: SLC unacknowledged (SLC-Unack) mode and SLC acknowledged (SLC-Ack) mode.

## SUMMARY

This application provides a multi-frame integrated transmission method in a satellite communication system that supports a short packet communication function, according to claim 1, and a related apparatus, according to claim 14, so that a transmit end may negotiate an acknowledgment mode with a receive end based on a total frame quantity field and a frame sequence number field in frame header information of a data frame. In this way, when the transmit end negotiates the acknowledgment mode with the receive end, additional frame header cell overheads and control signaling overheads may not be required.

According to a first aspect, this application provides a multi-frame integrated transmission method in a communication system that supports a short packet communication function, including: A terminal sends a first satellite link control layer protocol data unit SLC PDU to a network device that supports a short packet communication function, where frame header information of the first SLC PDU includes a first total frame quantity field and a first frame sequence number field, and the first total frame quantity field and the first frame sequence number field jointly indicate an acknowledgment mode that the terminal requests the network device to use; and when the acknowledgment mode that is jointly indicated by the first total frame quantity field and the first frame sequence number field is a parallel acknowledgment mode, and the terminal receives a first acknowledgment character ACK sent by the network device, the terminal resends, to the network device, an SLC PDU that is in a first SLC SDU and that is not received by the BeiDou network device, where the first ACK indicates a frame sequence number of the SLC PDU that is in N SLC PDUs of the first satellite link control layer service data unit SLC SDU and that is not received by the BeiDou network device, the N SLC PDUs of the first SLC SDU include the first SLC PDU, the first total frame quantity field indicates a total quantity N of SLC PDUs in the first SLC SDU, and the first frame sequence number field indicates a frame sequence number of the first SLC PDU in the first SLC SDU.

According to the multi-frame integrated transmission method in the BeiDou communication system provided in this application, the terminal may negotiate the acknowledgment mode with the network device based on the total frame quantity field and the frame sequence number field in the frame header information of the data frame. In this way, when the terminal negotiates the acknowledgment mode with the network device, additional frame header cell overheads and control signaling overheads may not be required.

In a possible implementation, when the acknowledgment mode that is jointly indicated by the first total frame quantity field and the first frame sequence number field is the parallel acknowledgment mode, and the terminal 100 receives a second ACK sent by the network device 200, the terminal 100 sends one or more SLC PDUs in a second SLC SDU to the network device 200, where the second ACK indicates that the network device 200 receives the N SLC PDUs in the first SLC SDU.

In a possible implementation, when the acknowledgment mode that is jointly indicated by the first total frame quantity field and the first frame sequence number field is the parallel acknowledgment mode, and the terminal 100 does not receive, in an ACK receiving time window after sending the N SLC PDUs in the first SLC SDU, an ACK sent by the BeiDou network device 200, the terminal 100 resends the N SLC PDUs in the first SLC SDU to the BeiDou network device 200.

In a possible implementation, when the acknowledgment mode that is jointly indicated by the first total frame quantity field and the first frame sequence number field is a stop and wait acknowledgment mode, the terminal 100 receives a third ACK sent by the network device 200, where the third ACK indicates that the network device 200 receives the first SLC PDU; and the terminal 100 sends a second SLC PDU to the BeiDou network device 200.

In a possible implementation, the method further includes: when the acknowledgment mode that is jointly indicated by the first total frame quantity field and the first frame sequence number field is a stop and wait acknowledgment mode, and the terminal 100 does not receive, in an ACK receiving time window after sending the first SLC PDU, an ACK sent by the network device 200, the terminal 100 resends the first SLC PDU to the BeiDou network device 200.

In a possible implementation, in the stop and wait acknowledgment mode, a value of a second frame sequence number field in the second SLC PDU is different from a value of the first frame sequence number field, and a value of a second total frame quantity field is the same as a value of the first total frame quantity field; or a value of a second frame sequence number field is the same as a value of the first frame sequence number field, and a value of a second total frame quantity field is different from a value of the first total frame quantity field; or a value of a second frame sequence number field is different from a value of the first frame sequence number field, and a value of a second total frame quantity field is different from a value of the first total frame quantity field.

In a possible implementation, in the parallel acknowledgment mode, a value of the first total frame quantity field is greater than or equal to a value of the first frame sequence number field.

In a possible implementation, in the stop and wait acknowledgment mode, the value of the first total frame quantity field is less than the value of the first frame sequence number field.

In a possible implementation, in the parallel acknowledgment mode, the terminal 100 determines a start moment of the ACK receiving time window based on a moment at which the terminal 100 completes sending a last SLC PDU in the first SLC SDU, duration of switching the terminal 100 from a transmitting state to a receiving state, an air interface propagation delay, and a signal processing scheduling delay of the network device 200; and the terminal 100 starts, at the start moment of the ACK receiving time window, to receive the ACK sent by the BeiDou network device 200.

A formula for determining, by the terminal 100, the start moment of the ACK receiving time window is:

$$tUeTxEnd + tTx2RxSwitch < tUeStartRcvAck < tUeTxEnd + 2 * tPropagate + tStationProcess,$$

*where*

*tUeStartRcvAck* is the start moment of the ACK receiving time window, *tUeTxEnd* is the moment at which the terminal 100 completes sending the last SLC PDU in the first SLC SDU, *tTx2RxSwitch* is the duration of switching the terminal 100 from the transmitting state to the receiving state, *tPropagate* is the air interface propagation delay, and *tStationProcess* is the signal processing scheduling delay of the network device 200

In a possible implementation, in the parallel acknowledgment mode, the terminal 100 determines an end moment of the ACK receiving time window based on a time length of a physical frame sent by the terminal 100, an air interface propagation delay, a signal processing scheduling delay of the network device 200, a time length of a physical frame sent by the network device 200, and a time alignment deviation of sending the physical frame by the BeiDou network device 200; and the terminal 100 stops, at the end moment of the ACK receiving time window, receiving the ACK sent by the network device 200.

A formula for determining, by the terminal 100, the end moment of the ACK receiving time window is:

$$tUeEndRcvAck = tUeTxEnd + tUeUlFrameLen + 2 * tPropagate + tStationProcess + tStationDlFrameLen + \delta,$$

where

t*UeEndRcvAck* is the end moment of the ACK receiving time window, *tUeUlFrameLen* is the time length of the physical frame sent by the terminal 100, *tPropagate* is the air interface propagation delay, *tStationProcess* is the signal processing scheduling delay of the network device 200, *tStationDlFrameLen* is the time length of the physical frame sent by the network device 200, and $\delta$ is the time alignment deviation of sending the physical frame by the BeiDou network device 200.

In a possible implementation, in the stop and wait acknowledgment mode, the terminal 100 determines a start moment of the ACK receiving time window based on a start moment at which the terminal 100 sends the first SLC PDU, a time length of a physical frame sent by the terminal 100, duration of switching the terminal 100 from a transmitting state to a receiving state, an air interface propagation delay, and a signal processing scheduling delay of the network device 200; and the terminal 100 starts, at the start moment of the ACK receiving time window, to receive the ACK sent by the network device 200.

A formula for determining, by the terminal 100, the start moment of the ACK receiving time window is:

$$t0 + tUeUlFrameLen + tTx2RxSwitch < tUeStartRcvAck < t0 + tUeUlFrameLen + 2 * tPropagate + tStationProcess,$$

where

t*UeEndRcvAck* is the end moment of the ACK receiving time window, *t*0 is the start moment at which the terminal 100 sends the first SLC PDU, *tUeUlFrameLen* is the time length of the physical frame sent by the terminal 100, *tTx*2*RxSwitch* is the duration of switching the terminal 100 from the transmitting state to the receiving state, *tPropagate* is the air interface propagation delay, and *tStationProcess* is the signal processing scheduling delay of the network device 200.

In a possible implementation, in the stop and wait acknowledgment mode, the terminal 100 determines an end moment of the ACK receiving time window based on a time length of a physical frame sent by the terminal 100, an air interface propagation delay, a signal processing scheduling delay of the network device 200, a time length of a physical frame sent by the network device 200, and a time alignment deviation of sending the physical frame by the network device 200; and the terminal 100 stops, at the end moment of the ACK receiving time window, receiving the ACK sent by the BeiDou network device 200.

A formula for determining, by the terminal 100, the end moment of the ACK receiving time window is:

$$tUeEndRcvAck = t0 + UeUlFrameLen + tPropagate * 2 + tStationProcess + tStationDlFrameLen + \delta,$$

where

*tUeEndRcvAck* is the end moment of the ACK receiving time window, *t*0 is a start moment at which the terminal 100 sends the first SLC PDU, *tUeUlFrameLen* is the time length of the physical frame sent by the terminal 100, *tStationDlFrameLen* is the time length of the physical frame sent by the network device 200, *tPropagate* is the air interface propagation delay, *tStationProcess* is the signal processing scheduling delay of the BeiDou network device 200, and $\delta$ is the time alignment deviation of sending the physical frame by the BeiDou network device 200.

According to a second aspect, not claimed, this application provides a multi-frame integrated transmission method in a BeiDou communication system, including:

A BeiDou network device receives a first SLC PDU sent by a terminal, where frame header information of the first SLC PDU includes a first total frame quantity field and a first frame sequence number field, and the first total frame quantity field and the first frame sequence number field jointly indicate an acknowledgment mode that the terminal requests the BeiDou network device to use; when the acknowledgment mode that is jointly indicated by the first total frame quantity field and the first frame sequence number field is a parallel acknowledgment mode, the BeiDou network device continues to receive an SLC PDU in a first SLC SDU sent by the terminal, where the first total frame quantity field indicates a total quantity N of SLC PDUs in the first SLC SDU, and the first frame sequence number field indicates a frame sequence number of the first SLC PDU in the first SLC SDU; when a quantity M of SLC PDUs that are in the first SLC SDU and that are received by the BeiDou network device is less than N, the BeiDou network device sends a first ACK to the terminal, where M is a positive integer, and the first ACK indicates a frame sequence number of an SLC PDU that is in the N SLC PDUs of the first SLC SDU and that is not received by the BeiDou network device; and the BeiDou network device receives an SLC PDU that is in the first SLC SDU and resent by the terminal and that is not received by the BeiDou network device.

According to the multi-frame integrated transmission method in the BeiDou communication system provided in this application, the terminal may negotiate the acknowledgment mode with the BeiDou network device based on the total frame quantity field and the frame sequence number field in the frame header information of the data frame. In this way, when the terminal negotiates the acknowledgment mode with the BeiDou network device, additional frame header cell overheads and control signaling overheads may not be required.

In a possible implementation, when M is equal to N, the BeiDou network device 200 sends a second ACK to the terminal 100, where the second ACK indicates that the BeiDou network device 200 receives the N SLC PDUs in the first SLC SDU; and the BeiDou network device 200 receives one or more SLC PDUs in a second SLC SDU sent by the terminal 100.

In a possible implementation, when the acknowledgment mode that is jointly indicated by the first total frame quantity field and the first frame sequence number field is a stop and wait acknowledgment mode, the BeiDou network device 200 sends a third ACK to the terminal 100, where the third ACK indicates that the BeiDou network device 200 receives the first SLC PDU; and the BeiDou network device 200 receives a second SLC PDU sent by the terminal 100.

In a possible implementation, in the stop and wait acknowledgment mode, a value of a second frame sequence number field in the second SLC PDU is different from a value of the first frame sequence number field, and a value of a second total frame quantity field is the same as a value of the first total frame quantity field; or a value of a second frame sequence number field is the same as a value of the first frame sequence number field, and a value of a second total frame quantity field is different from a value of the first total frame quantity field; or a value of a second frame sequence number field is different from a value of the first frame sequence number field, and a value of a second total frame quantity field is different from a value of the first total frame quantity field.

In a possible implementation, in the parallel acknowledgment mode, a value of the first total frame quantity field is greater than or equal to a value of the first frame sequence number field.

In a possible implementation, in the stop and wait acknowledgment mode, the value of the first total frame quantity field is less than the value of the first frame sequence number field.

In a possible implementation, in the parallel acknowledgment mode, the BeiDou network device 200 determines a remaining time length of an SLC PDU receiving window based on the frame sequence number of the first SLC PDU, the total quantity of SLC PDUs in the first SLC SDU, a receiving moment of the first SLC PDU, a frame interval at which the terminal 100 sends a physical frame, and a time length of the physical frame sent by the terminal 100.

The BeiDou network device 200 determines the remaining time length of the SLC PDU receiving window according to the following formula:

*tStationRevWindow* = *tStaRevRctSP* + (nUeTotalFrameNum - nRevFrameSN - 1) * (tUeTxInterval + tUeUlFrameLen), where

*tStationRevWindow* is the remaining time length of the SLC PDU receiving window, *ttStaRevRctSP* is the receiving moment of the first SLC PDU, *ttStaRevRctSP* is the total quantity of SLC PDUs in the first SLC SDU, *nRevFrameSN* is the frame sequence number of the first SLC PDU, *tUeTxInterval* is the frame interval at which the terminal 100 sends a physical frame, and *tUeUlFrameLen* is the time length of the physical frame sent by the terminal 100.

In a possible implementation, in the parallel acknowledgment mode, the BeiDou network device 200 determines, based on the remaining time length of the SLC PDU receiving window and a signal processing scheduling delay of the BeiDou network device 200, a time point for sending an ACK.

The BeiDou network device 200 determines, according to the following formula, the time point for sending the ACK:

$$tStationSendAck = tStationRevWindow + tStationProcess + \delta,$$

where
*tStationSendAck* is the time point at which the BeiDou network device 200 sends the ACK, *tStationRevWindow* is the remaining time length of the SLC PDU receiving window, *tStationProcess* is the signal processing scheduling delay of the BeiDou network device 200, and $\delta$ is a sending time alignment deviation of an outbound physical frame on the BeiDou network device 200.

According to a third aspect, not claimed, this application provides a BeiDou communication system, including a terminal and a BeiDou network device.

The terminal is configured to send a first SLC PDU to the BeiDou network device, where frame header information of the first SLC PDU includes a first total frame quantity field and a first frame sequence number field, and the first total frame quantity field and the first frame sequence number field jointly indicate an acknowledgment mode that the terminal requests the BeiDou network device to use. The BeiDou network device is configured to: when the acknowledgment mode that is jointly indicated by the first total frame quantity field and the first frame sequence number field is a parallel acknowledgment mode, send a first ACK to the terminal, where the first ACK indicates a frame sequence number of an SLC PDU that is in N SLC PDUs of a first SLC SDU and that is not received by the BeiDou network device, the N SLC PDUs of the first SLC SDU include the first SLC PDU, the first total frame quantity field indicates a total quantity N of SLC SDUs in the first SLC PDU, and the first frame sequence number field indicates a frame sequence number of the first SLC PDU in the first SLC SDU. The terminal is further configured to: after receiving the first ACK, resend, to the BeiDou network device, the SLC PDU that is in the first SLC SDU and that is not received by the BeiDou network device.

In a possible implementation, the terminal may further perform the method in any one of the possible implementations of the first aspect.

In a possible implementation, the BeiDou network device may further perform the method in any one of the possible implementations of the first aspect.

According to a fourth aspect, this application provides a communication apparatus, including one or more processors, one or more memories, and a transceiver. The transceiver and the one or more memories are coupled to the one or more processors. The one or more memories are configured to store computer program code. The computer program code includes computer instructions. When the one or more processors execute the computer instructions, the communication apparatus is enabled to perform the method according to any one of the possible implementations of the first aspect.

The communication apparatus may be a terminal or a device in another product form.

According to a fifth aspect, not claimed, this application provides a communication apparatus, including one or more processors, one or more memories, and a transceiver. The transceiver and the one or more memories are coupled to the one or more processors. The one or more memories are configured to store computer program code. The computer program code includes computer instructions. When the one or more processors execute the computer instructions, the communication apparatus is enabled to perform the method according to any one of the possible implementations of the second aspect.

The communication apparatus may be a BeiDou network device, or one network element or a combination of a plurality of network elements of a BeiDou network device.

According to a sixth aspect, this application provides a computer storage medium, including computer instructions. When the computer instructions are run on a computer, the computer is enabled to perform the method according to any one of the possible implementations of the first aspect.

According to a seventh aspect, not claimed, this application provides a computer storage medium, including computer instructions. When the computer instructions are run on a computer, the computer is enabled to perform the method according to any one of the possible implementations of the second aspect.

According to an eighth aspect, this application provides a computer program product. When the computer program product runs on a computer, the computer is enabled to perform the method according to any one of the possible implementations of the first aspect.

According to a ninth aspect, not claimed, this application provides a computer program product. When the computer program product runs on a computer, the computer is enabled to perform the method according to any one of the possible implementations of the second aspect.

According to a tenth aspect, not claimed, this application provides a chip or a chip system, used in a terminal and including a processing circuit and an interface circuit. The interface circuit is configured to receive code instructions and send the code instructions to the processing circuit. The processing circuit is configured to run the code instructions to perform the method according to any one of the possible implementations of the first aspect.

## BRIEF DESCRIPTION OF DRAWINGS

FIG. 1 is a schematic diagram of an architecture of a BeiDou communication system according to an embodiment of this application;

FIG. 2A is a schematic diagram of an inbound data transmission process in a BeiDou communication system according to an embodiment of this application;

FIG. 2B is a schematic diagram of an outbound data transmission process in a BeiDou communication system according to an embodiment of this application;

FIG. 3 is a schematic flowchart of transmission in a block answer mechanism in a Wi-Fi technology according to an embodiment of this application;

FIG. 4 is a schematic diagram of a structure of a terminal according to an embodiment of this application;

FIG. 5A and FIG. 5B are a schematic diagram of a protocol encapsulation architecture for inbound data of a BeiDou communication system according to an embodiment of this application;

FIG. 6A and FIG. 6B are a schematic diagram of a protocol parsing architecture for inbound data of a BeiDou communication system according to an embodiment of this application;

FIG. 7A and FIG. 7B are a schematic diagram of a protocol encapsulation architecture for outbound data of a BeiDou communication system according to an embodiment of this application;

FIG. 8A and FIG. 8B are a schematic diagram of a protocol parsing architecture for outbound data of a BeiDou communication system according to an embodiment of this application;

FIG. 9 is a schematic diagram of a stop and wait feedback mode at an SLC layer according to an embodiment of this application;

FIG. 10 is a schematic diagram of a parallel feedback mode at an SLC layer according to an embodiment of this application;

FIG. 11 is a schematic diagram of a frame format of an inbound SLC PDU according to an embodiment of this application;

FIG. 12 is a schematic diagram of a frame format of an outbound SLC PDU according to an embodiment of this application;

FIG. 13 is a diagram of a processing sequence of a stop and wait acknowledgment mode at an SLC layer when data is inbound according to an embodiment of this application;

FIG. 14 is a diagram of a processing sequence of a stop and wait acknowledgment mode at an SLC layer when data is outbound according to an embodiment of this application;

FIG. 15 is a diagram of a processing sequence of a parallel acknowledgment mode at an SLC layer when data is inbound according to an embodiment of this application;

FIG. 16 is a diagram of a processing sequence of a parallel acknowledgment mode at an SLC layer when data is outbound according to an embodiment of this application;

FIG. 17 is a schematic flowchart of a multi-frame integrated transmission method in a BeiDou communication system according to an embodiment of this application;

FIG. 18 is a schematic diagram of a structure of a communication apparatus according to an embodiment of this application;

FIG. 19 is a schematic diagram of a structure of another communication apparatus according to an embodiment of this application;

FIG. 20 is a schematic diagram of a structure of another communication apparatus according to an embodiment of this application; and

FIG. 21 is a schematic diagram of a structure of another communication apparatus according to an embodiment of this application.

## DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

**The following describes a BeiDou communication system 10 according to an embodiment of this application.**

FIG. 1 is a schematic diagram of an architecture of the BeiDou communication system 10 according to an embodiment of this application.

As shown in FIG. 1, the BeiDou communication system 10 may include a terminal 100, a BeiDou short packet satellite 21, a BeiDou network device 200, a short message service center 25, and a terminal 300. Optionally, the BeiDou communication system 10 may further include an emergency rescue platform 26 and an emergency rescue center 27.

The terminal 100 may send short packet information to the BeiDou short packet satellite 21, and the BeiDou short packet satellite 21 only performs relay, and directly forwards the short packet information sent by the terminal 100 to the BeiDou network device 200 on the ground. The BeiDou network device 200 may parse, according to a BeiDou communication protocol, the short packet information forwarded by the satellite, and forward packet content that is of a general packet type and that is obtained through parsing from the short packet information to the short message service center (short message service center, SMSC) 25. The short message service center 25 may forward the packet content to the terminal 300 through a conventional cellular communication network. The BeiDou network device 200 may also send, through the emergency rescue platform 26 to the emergency rescue center 27, a packet that is of an emergency help type and that is sent by the terminal 100.

The terminal 300 may also send a short message to the short message service center 25 through the conventional cellular communication network. The short message service center 25 may forward the short message from the terminal 300 to the BeiDou network device 200. The BeiDou network device 200 may send the short message from the terminal 300 to the terminal 100 through relay of the BeiDou short packet satellite 21.

The BeiDou network device 200 may include a BeiDou ground transceiver station 22, a BeiDou central station 23, and a BeiDou short packet converged communication platform 24. The BeiDou ground transceiver station 22 may include one or more devices having a sending function and one or more devices having a receiving function, or may include one or more devices having a sending function and a receiving function. This is not limited herein. The BeiDou ground transceiver station 22 may be used for a data processing function of the BeiDou network device 200 at a physical (physical layer protocol, PHY) layer. The BeiDou central station 23 may be used for a data processing function of the BeiDou network device 200 at a satellite link control (satellite link control protocol, SLC) layer and a message convergence protocol (message data convergence protocol, MDCP) layer. The BeiDou short packet converged communication platform 24 may be used for a data processing function at an application (application layer protocol, APP) layer.

Because the BeiDou communication system 10 performs communication through a satellite link, main characteristics of the BeiDou communication system 10 are a long delay (about 270 ms in one direction) and a large link loss. Currently, services supported by the BeiDou communication system 10 are mainly burst short message services, and link state management, mobility management, broadcast control information, and the like are not supported.

The terminal 100 may actively send data to the BeiDou network device 200 through the BeiDou short packet satellite 21. However, because there is no air interface signaling, the central station on the ground cannot actively page a user. Because a satellite communication propagation distance is long, the BeiDou communication system 10 has a high requirement on transmit power of the terminal 100. Due to a limitation of a radio frequency component on the current terminal 100, the terminal 100 cannot continuously send signals to the BeiDou short packet satellite 21 for a long time. To avoid damaging the radio frequency component on the terminal 100 as much as possible, after the radio frequency component on the terminal 100 continuously works in a transmitting state for a period of time, the radio frequency component on the terminal 100 needs to stop working for a period of time before continuing to switch to the transmitting state to continue working. Duration of the transmitting state on the terminal 100 is determined by an underlying hardware capability of the terminal 100. In the BeiDou communication system 10, to ensure that data received by the terminal 100 and data sent by the terminal 100 do not interfere with each other, the terminal 100 does not support simultaneous data sending and data receiving. After sending the data, the terminal 100 needs to wait to receive data sent by the BeiDou network device 200.

A working mode of the BeiDou network device 200 may be a duplex mode, and data may be sent and received simultaneously. In addition, the BeiDou network device 200 may send and receive data for a long time.

**FIG. 2A shows an inbound data transmission process in the BeiDou communication system according to an embodiment of this application.**

As shown in FIG. 2A, data inbound may mean that the terminal 100 sends data to the BeiDou network device 200. For example, the terminal 100 may send a data frame to the BeiDou ground transceiver station 22. The BeiDou ground transceiver station 22 may send the data frame to the BeiDou central station 23. The BeiDou central station 23 may aggregate the data frame into an application layer packet and report the application layer packet to the BeiDou short packet converged communication platform 24. After receiving the data frame sent by the terminal 100, the BeiDou central station 23 may return an acknowledgment character (acknowledge character, ACK) at an SLC layer to the terminal 100. The ACK may indicate whether the BeiDou network device 200 successfully receives the data frame sent by the terminal 100.

**FIG. 2B shows an outbound data transmission process in the BeiDou communication system according to an embodiment of this application.**

As shown in FIG. 2B, data outbound may mean that the BeiDou network device 200 sends data to the terminal 100. For example, the BeiDou short packet converged communication platform 24 in the BeiDou network device 200 may send an application layer packet to the BeiDou central station 23. Then, the BeiDou central station 23 may segment the application layer packet into one or more data frames and send the one or more data frames to the BeiDou ground transceiver station 22. The BeiDou short packet satellite 21 relays and sends the data frames to the terminal 100. After receiving the data frame, the terminal 100 may return an ACK at an SLC layer to the BeiDou central station 23. The ACK may indicate whether the terminal 100 successfully receives the data frames sent by the BeiDou network device 200.

**The following describes a block answer mechanism in a Wi-Fi technology according to this application.**

In the Wi-Fi technology, there are two block answer mechanisms: an immediate block answer mechanism and a delayed block answer mechanism. The immediate block answer mechanism is applicable to high-bandwidth and low-delay services. The delayed block answer mechanism is applicable to services that can tolerate appropriate delays.

The immediate block answer mechanism means that after an initiator sends a data frame to a receiver, the receiver may return an acknowledgment (acknowledge, ACK) information frame to the initiator. After receiving the ACK frame and determining that the receiver receives the data frame, the initiator sends a next data frame to the receiver. If the initiator determines that the receiver does not receive the sent data frame, the initiator may resend the data frame to the receiver.

The delayed block answer mechanism means that an initiator may continuously send a plurality of data frames to a receiver. After receiving the plurality of data frames, the receiver returns an ACK frame for feeding back a receiving status of the plurality of data frames to the initiator. After receiving the ACK frame, if the initiator determines, based on the ACK frame, that there is a lost data frame in the plurality of sent data frames, the initiator may resend the lost data frame to the receiver. If the initiator determines, based on the ACK frame, that all the plurality of sent data frames are received by the receiver, the initiator may send a new data frame to the receiver.

In the Wi-Fi technology, the initiator needs to negotiate a block answer mechanism with the receiver through signaling interaction before sending a data frame. After a transmission session of the block answer mechanism ends, the initiator also needs to disable the negotiated block answer mechanism with the receiver through signaling interaction. During a next transmission session, the initiator needs to negotiate a block answer mechanism with the receiver through signaling interaction again.

FIG. 3 is a schematic flowchart of transmission in the block answer mechanism in the Wi-Fi technology.

As shown in FIG. 3, a transmission procedure in the block answer mechanism in the Wi-Fi technology may include the following steps.

(a) Session setup phase:

1. An initiator (originator) sends a block answer adding request (ADDBA Request) to a receiver (recipient). The ADDBA request is used to request to set up a specified block answer mechanism with the receiver. The specified block answer mechanism includes the immediate block answer mechanism or the delayed block answer mechanism.
2. After receiving the ADDBA request, the receiver returns an ACK to the initiator. The ACK indicates that the receiver receives the ADDBA request.
3. After sending the ACK indicating that the ADDBA request is received, the receiver sends a block answer adding response (ADDBA Response) to the initiator. The ADDBA response indicates that the receiver agrees to use the specified block answer mechanism.
4. After receiving the ADDBA response, the initiator may return an ACK to the receiver. The ACK indicates that the initiator receives the ADDBA response.

(b) Data transmission (Data and Block ACK) phase:

5. The initiator sends a data frame in a QoS data MAC protocol data unit (QoS Data MPDU) to the receiver according to a data frame sending mechanism in the specified block answer mechanism.
6. After sending the data frame according to the data frame sending mechanism in the specified block answer mechanism, the initiator sends a block ACK request (Block ACK Request) frame to the receiver. The block ACK request frame is used to request the receiver to send a block ACK (Block ACK) for the data frame in the received QoS data MPDU.
7. After receiving the block ACK request frame sent by the initiator, the receiver may return, to the initiator, the block ACK for the data frame in the received QoS data MPDU.

After the initiator receives the block ACK, if the block ACK indicates that the receiver receives all data frames, the initiator may continue to send a new data frame to the receiver.

In one session, steps 5 to 7 may be cyclically performed a plurality of times.

(c) Session closing (Tear Down) phase:

8. After the initiator sends all the data frames in the session, the initiator may send a block answer deleting request (DELBA Request) frame to the receiver. The DELBA request frame is used to request the receiver to close the session that uses the specified block answer mechanism.
9. After receiving the DELBA request frame, the receiver may return an ACK for the DELBA request frame to the initiator.

After receiving the ACK for the DELBA request frame, the initiator determines that the session that uses the specified block answer mechanism is closed with the receiver.

It can be learned from the foregoing process that, in a Wi-Fi block answer transmission process, before data is sent each time, the initiator and the receiver need to negotiate, through complex signaling interaction, a block answer mechanism used in a current session. At the end of the session, the initiator and the receiver need to cancel, through complex signaling interaction, the block answer mechanism used in the session. Main characteristics of the BeiDou communication system 10 are: 1. A delay is long. 2. A link loss is large. 3. Supported services are mainly burst short message services. 4. Link status management, mobility management, and broadcast control information are not supported. Air interface resources in the BeiDou communication system 10 are limited, and signaling interaction similar to that in the block answer mechanism negotiation in the Wi-Fi cannot be satisfied.

Therefore, embodiments of this application provide a multi-frame integrated transmission method in a BeiDou communication system. Therefore, in the BeiDou communication system, a transmit end may negotiate an acknowledgment mode with a receive end based on a total frame quantity field and a frame sequence number field in frame header information of a data frame. In this way, when the transmit end negotiates the acknowledgment mode with the receive end, additional frame header and control signaling overheads may not be required.

**FIG. 4 is a schematic diagram of a structure of a terminal 100.**

The following uses the terminal 100 as an example to specifically describe this embodiment. It should be understood that the terminal 100 shown in FIG. 4 is merely an example. The terminal 100 may have more or fewer components than those shown in FIG. 4, or may combine two or more components, or may have different component configurations. The various components shown in FIG. 4 may be implemented in hardware including one or more signal processing circuits and/or application-specific integrated circuits, software, or a combination thereof.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

It may be understood that an illustrated structure in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-inter-integrated circuit sound (inter-inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may send an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also send an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-sent data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may send an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal 100. The processor 110 communicates with the display 194 through the DSI, to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the terminal 100, or may be configured to send data between the terminal 100 and a peripheral device, or may be configured to connect to a headset for playing audio through the headset. The interface may be further configured to connect to another electronic device such as an AR device.

It may be understood that an interface connection relationship between the modules illustrated in embodiments of the present invention is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the terminal 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to send and receive electromagnetic wave signals. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and send the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator sends the low-frequency baseband signal obtained through demodulation to the baseband processor for processing. The low-frequency baseband signal is processed by the baseband processor and then sent to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the terminal 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The satellite communication module may be configured to communicate with the satellite network device. For example, in a BeiDou communication system, the satellite communication module may communicate with the BeiDou network device 200. The satellite communication module may support short packet transmission with the BeiDou network device 200.

In some embodiments, the antenna 1 and the mobile communication module 150 in the terminal 100 are coupled, and the antenna 2 and the wireless communication module 160 in the terminal 100 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the terminal 100 may include 1 or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is sent to a photosensitive element of the camera through a lens. An optical signal is converted into an electrical signal, and the photosensitive element of the camera sends the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then sends the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal 100 may be implemented through the NPU, for example, image recognition, facial recognition, speech recognition, and text understanding.

The external memory interface 120 may be used to connect to an external memory card, for example, a micro SD card, to extend a storage capability of the terminal 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the terminal 100. The internal memory 121 may include a program storage area and a data storage area. The program storage area may store an operating system, an application required by at least one function (for example, a voice playing function or an image playing function), and the like. The data storage area may store data (such as audio data and an address book) created during use of the terminal 100, and the like. In addition, the internal memory 121 may include a highspeed random access memory, or may include a nonvolatile memory, for example, at least one magnetic disk storage device, a flash memory, or a universal flash storage (universal flash storage, UFS).

The terminal 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode over the speaker 170A.

The receiver 170B, also referred to as an "earpiece", is configured to convert an electrical audio signal into a sound signal. When a call is answered or speech information is received through the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through a mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on the change of the capacitance. When a touch operation is performed on the display 194, the terminal 100 detects intensity of the touch operation by using the pressure sensor 180A. The terminal 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the terminal 100. In some embodiments, angular velocities of the terminal 100 around three axes (namely, x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyroscope sensor 180B may also be used in a navigation scenario or a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a flip phone, the terminal 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations of the terminal 100 in various directions (usually on three axes). A magnitude and a direction of gravity may be detected when the terminal 100 is still. The acceleration sensor 180E may be further configured to identify a posture of the electronic device, and is used in an application such as switching between a landscape mode and a portrait mode or a pedometer.

The distance sensor 180F is configured to measure a distance. The terminal 100 may measure the distance in an infrared manner or a laser manner. In some embodiments, in a photographing scenario, the terminal 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The terminal 100 emits infrared light by using the light-emitting diode. The terminal 100 detects infrared reflected light from a nearby object by using the photodiode. When sufficient reflected light is detected, the terminal 100 may determine that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy based on the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may alternatively be disposed on a surface of the terminal 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external memory card. The terminal 100 interacts with a network by using the SIM card, to implement functions such as conversation and data communication. In some embodiments, the terminal 100 uses an eSIM, that is, an embedded SIM card. The eSIM card may be embedded into the terminal 100, and cannot be separated from the terminal 100.

The following describes a protocol encapsulation architecture for inbound data of a BeiDou communication system 10 according to an embodiment of this application.

FIG. 5A and FIG. 5B are a schematic diagram of the protocol encapsulation architecture for the inbound data of the BeiDou communication system 10 according to an embodiment of this application.

As shown in FIG. 5A and FIG. 5B, a BeiDou packet transmission protocol layer of a terminal 100 may be divided into an application (application layer protocol) layer, a message data convergence protocol (message data convergence protocol, MDCP) layer, a satellite link control (satellite link control protocol, SLC) layer, and a physical (physical layer protocol, PHY) layer.

When the terminal 100 sends data to a BeiDou network device 200, a working procedure of the BeiDou packet transmission protocol of the terminal 100 may be as follows:

At the APP layer, the terminal 100 may compress original data into compressed data according to a compression algorithm, and add a compression indicator field before the compressed data, where the compression indicator field may indicate a compression algorithm type of the compressed data. Then, the terminal 100 may encrypt the compressed data to obtain encrypted data, and add an encryption indicator field to a header of the encrypted data, where the encryption indicator field indicates an encryption algorithm type of the encrypted data. The terminal 100 may encapsulate the encrypted data, the compression indicator field, and the encryption indicator field into an application layer packet and deliver the application layer packet to the MDCP layer. The application layer packet includes a packet header and packet data. The packet header includes the compression indicator field, the encryption indicator field, a service type field, and the like. The packet data includes the encrypted data.

Optionally, the terminal 100 may encrypt the compression indicator field and the compressed data together, to obtain encrypted data.

At the MDCP layer, the terminal 100 may obtain, through an inter-layer interface, the application layer packet delivered by the APP layer, where the application layer packet is used as an MDCP SDU. Due to a limitation of an air interface, the terminal 100 can send only a physical frame of a specified length at the physical layer each time. Therefore, a length of the MDCP layer data is restricted to be the specified length. Therefore, at the MDCP layer, the terminal 100 may add padding (padding) data to a tail of the MDCP SDU to the specified length, and add a redundancy length indicator field to a header of the MDCP SDU. The redundancy length indicator field may indicate a length of the padding data. The terminal 100 may segment the padding data and the MDCP SDU to which the redundancy length indicator field is added into one or more pieces of fixed-length MDCP segment data (M_segment), and add a succession indicator field to a header of each piece of MDCP segment data, to obtain an MDCP PDU. That is, the MDCP PDU includes an M_segment and a succession indicator field. The succession indicator field may indicate that a current MDCP PDU is a first MDCP PDU, an intermediate MDCP PDU, or a last MDCP PDU of a plurality of consecutively sent MDCP PDUs, or an MDCP PDU that is sent separately.

At the SLC layer, the terminal 100 may obtain, through an inter-layer interface, the MDCP PDU delivered by the MDCP layer, where the MDCP PDU is used as an SLC SDU. At the SLC layer, the terminal 100 may segment the SLC SDU into one or more (at most four) pieces of fixed-length SLC segment data (S_segment), and add frame header information to a header of each S_segment, to obtain an SLC PDU. The frame header information includes a service data unit alternated indicator (service data unit alternated Indicator, SAI) field, a total frame quantity field, and a frame sequence number field.

The SAI field may indicate whether the SLC PDU belongs to an SLC SDU that is not sent.

The total frame quantity field may indicate a total quantity of SLC PDUs included in the SLC SDU to which the SLC PDU belongs.

The frame sequence number field may indicate a sequence number of the SLC PDU in the SLC SDU to which the SLC PDU belongs.

At the PHY layer, the terminal 100 may obtain, through an inter-layer interface, the SLC PDU delivered by the SLC layer as a code block (code block) of the PHY layer, add a synchronization header to a header of the code block, and add a check bit field to a tail of the code block. In the BeiDou communication system 10, the code block may be checked by using cyclic redundancy check (cyclic redundancy check, CRC). Therefore, the check bit field may include CRC code. The terminal 100 may encode (for example, polar encoding) the code block and the check bit field to obtain coded data (coded data), and then insert a pilot into the coded data to obtain pilot coded data (pilot + data). Then, the terminal 100 sequentially modulates the synchronization header and the pilot coded data by using bottom-layer hardware to obtain modulated data (modulated data). The terminal 100 may perform spreading on the modulated data to obtain spread modulated data (spread + modulated data). The terminal 100 may send the spread modulated data to the BeiDou short packet satellite 21, and the BeiDou short packet satellite 21 relays and forwards the data to the BeiDou network device 200.

The following describes a protocol parsing architecture for inbound data of a BeiDou communication system 10 according to an embodiment of this application.

FIG. 6A and FIG. 6B are a schematic diagram of the protocol parsing architecture for the inbound data of the BeiDou communication system 10 according to an embodiment of this application.

As shown in FIG. 6A and FIG. 6B, a BeiDou short packet transmission protocol layer of a BeiDou network device 200 may be divided into an application (application layer protocol) layer, a message data convergence protocol (message data convergence protocol, MDCP) layer, a satellite link control (satellite link control protocol, SLC) layer, and a physical (physical layer protocol, PHY) layer. The BeiDou network device 200 may include a BeiDou ground transceiver station 22, a BeiDou central station 23, and a BeiDou short packet converged communication platform 24. The BeiDou ground transceiver station 22 may be responsible for protocol processing at the PHY layer. The BeiDou central station 23 may be responsible for protocol processing at the SLC layer and the MDCP layer. The BeiDou short packet converged communication platform 24 may be responsible for protocol processing at the APP layer.

When the BeiDou network device 200 receives data sent by a terminal 100, a working procedure of the BeiDou short packet transmission protocol layer of the BeiDou network device 200 may be as follows:

At the PHY layer, the BeiDou network device 200 may obtain pilot encoded data that is sent by the terminal 100 and that is modulated and spread. The BeiDou network device 200 may perform despreading on received spread modulated data (spread + modulated data), to obtain modulated data (modulated data). Then, the BeiDou network device 200 may demodulate the modulated data, to obtain the pilot coded data (pilot + data). Then, the BeiDou network device 200 removes pilot information from the pilot coded data, to obtain coded data (code data). Then, the BeiDou network device 200 may decode the coded data, and verify integrity of a code block (code block) based on check data in a check bit field. If the code block is complete, the BeiDou network device 200 may extract the code block (code block), and deliver the code block to the SLC layer through an inter-layer interface, where the code block is used as an SLC PDU of the SLC layer.

At the SLC layer, the BeiDou network device 200 may concatenate, based on frame header information of an SLC PDU, SLC PDUs belonging to a same SLC SDU into one SLC SDU. The BeiDou network device 200 may deliver the SLC SDU to the MDCP layer through an inter-layer interface, where the SLC SDU is used as an MDCP PDU of the MDCP layer.

At the MDCP layer, the BeiDou network device 200 may concatenate all MDCP PDUs belonging to a same MDCP SDU into one MDCP SDU. The BeiDou network device 200 may deliver the MDCP SDU to the APP layer through an inter-layer interface, where the MDCP SDU is used as an application layer packet received by the APP layer.

At the APP layer, the BeiDou network device 200 may decrypt and decompress the application layer packet based on a packet header of the application layer packet, to obtain original data.

In this embodiment of this application, the foregoing protocol processing process is merely an example for description, and a specific operation of protocol processing is not limited in this application.

**The following describes a protocol encapsulation architecture for outbound data of a BeiDou communication** system **10 according to an embodiment of this application.**

FIG. 7A and FIG. 7B are a schematic diagram of the protocol encapsulation architecture for the outbound data of the BeiDou communication system 10 according to an embodiment of this application.

As shown in FIG. 7A and FIG. 7B, a BeiDou short packet transmission protocol layer of a BeiDou network device 200 may be divided into an APP layer, an MDCP layer, an SLC layer, and a PHY layer. The BeiDou network device 200 may include a BeiDou ground transceiver station 22, a BeiDou central station 23, and a BeiDou short packet converged communication platform 24. The BeiDou ground transceiver station 22 may be responsible for protocol processing at the PHY layer. The BeiDou central station 23 may be responsible for protocol processing at the SLC layer and the MDCP layer. The BeiDou short packet converged communication platform 24 may be responsible for protocol processing at the APP layer.

When the BeiDou network device 200 sends data to a terminal 100, a working procedure of the BeiDou short packet transmission protocol of the BeiDou network device 200 may be as follows:

At the APP layer, the BeiDou network device 200 may compress original data into compressed data according to a compression algorithm, and add a compression indicator field before the compressed data, where the compression indicator field may indicate a compression algorithm type of the compressed data. Then, the BeiDou network device 200 may encrypt the compressed data to obtain encrypted data, and add an encryption indicator field to a header of the encrypted data, where the encryption indicator field indicates an encryption algorithm type of the encrypted data. The BeiDou network device 200 may encapsulate the encrypted data, the compression indicator field, and the encryption indicator field into an application layer packet and deliver the application layer packet to the MDCP layer. The application layer packet may include a packet header and packet data. The packet header may include the compression indicator field, the encryption indicator field, a service type field, and the like. The packet data includes the encrypted data.

Optionally, the BeiDou network device 200 may encrypt the compression indicator field and the compressed data together, to obtain encrypted data.

At the MDCP layer, the BeiDou network device 200 may obtain, through an inter-layer interface, the application layer packet delivered by the APP layer, where the application layer packet is used as an MDCP SDU. At the MDCP layer, the BeiDou network device 200 may segment one MDCP SDU into one or more pieces of fixed-length MDCP segment data (M_segment), and add a succession indicator field to a header of each piece of MDCP segment data, to obtain an MDCP PDU. That is, the MDCP PDU includes an M_segment field and a succession indicator field. The succession indicator field may indicate that a current MDCP PDU is a first MDCP PDU, an intermediate MDCP PDU, or a last MDCP PDU of a plurality of consecutively sent MDCP PDUs, or an MDCP PDU that is sent separately.

At the SLC layer, the BeiDou network device 200 may obtain, through an inter-layer interface, the MDCP PDU delivered by the MDCP layer, where the MDCP PDU is used as an SLC SDU. At the SLC layer, the BeiDou network device 200 may segment the SLC SDU into one or more (at most four) pieces of fixed-length SLC segment data (S_segment), and add frame header information to a header of each S_segment, to obtain an SLC PDU.

At the PHY layer, the BeiDou network device 200 may obtain, through an inter-layer interface, the SLC PDU delivered by the SLC layer. The BeiDou network device 200 may obtain an SLC PDU of one or more users from the SLC layer. The BeiDou network device 200 may concatenate SLC PDUs of a plurality of users, add a frame header (for example, a version number) of a physical frame to use the SLC PDUs as a code block (code block) of the PHY layer, add a check bit (for example, cyclic redundancy check (cyclic redundancy check, CRC) code) to a tail of the code block, and encode (for example, polar encoding) the code block and the CRC code. The coded physical frame and a reserved segment may form coded data of a telegraphic message branch (S2C_d branch) of a physical slot of a fixed length. The BeiDou network device 200 may separately place a plurality of SLC PDUs of one user into different physical frames. Then, the BeiDou network device 200 combines the coded data of the S2C_d branch and pilot information of a pilot branch (S2C_p branch) into pilot coded data, that is, outbound data. The BeiDou network device 200 may send the outbound data to the BeiDou short packet satellite 21, and the BeiDou short packet satellite 21 relays and forwards the outbound data to the terminal 100.

It may be understood that the pilot information of the S2C_p branch is related to a satellite beam. When a satellite beam number is known information, the pilot information of the S2C_p branch is also known and does not need to be decoded. The encoded data of the S2C_d branch needs to be decoded.

**The following describes a protocol parsing architecture for outbound data of a BeiDou communication system 10 according to an embodiment of this application.**

FIG. 8A and FIG. 8B are a schematic diagram of the protocol parsing architecture for the outbound data of the BeiDou communication system 10 according to an embodiment of this application.

As shown in FIG. 8A and FIG. 8B, a BeiDou short packet transmission protocol layer of a terminal 100 may be divided into an APP layer, an MDCP layer, an SLC layer, and a PHY layer.

When the terminal 100 receives data from a BeiDou network device, a working procedure of the BeiDou short packet transmission protocol layer of the terminal 100 may be as follows:

At the PHY layer, the terminal 100 may obtain pilot encoded data that is sent by the BeiDou network device 200 and that is modulated and spread. The terminal 100 may perform despreading on received spread modulated data (spread + modulated data), to obtain modulated data (modulated data). Then, the terminal 100 may demodulate the modulated data, to obtain the pilot coded data (pilot + data). Then, the terminal 100 may remove pilot information from the pilot coded data to obtain coded data (code data). Then, the terminal 100 may decode the coded data, and verify integrity of a code block (code block) based on check data in a check bit field. If the code block is complete, the terminal 100 may extract the code block (code block), and deliver the code block to the SLC layer through an inter-layer interface, where the code block is used as an SLC PDU of the SLC layer.

Herein, the pilot coded data is outbound data sent by the BeiDou network device 200, and the outbound data includes coded data of an S2C_d branch and pilot information of a pilot branch (S2C_p branch).

At the SLC layer, the terminal 100 may concatenate, based on frame header information of an SLC PDU, SLC PDUs belonging to a same SLC SDU into one SLC SDU. The terminal 100 may deliver the SLC SDU to the MDCP layer through an inter-layer interface, where the SLC SDU is used as an MDCP PDU of the MDCP layer.

At the MDCP layer, the terminal 100 may concatenate all MDCP PDUs belonging to a same MDCP SDU into one MDCP SDU. The terminal 100 may deliver the MDCP SDU to the APP layer through an inter-layer interface, where the MDCP SDU is used as an application layer packet received by the APP layer.

At the APP layer, the terminal 100 may decrypt and decompress the application layer packet based on a packet header of the application layer packet, to obtain original data.

In this embodiment of this application, the foregoing protocol processing process is merely an example for description, and a specific operation of protocol processing is not limited in this application.

**The following describes two feedback modes at an SLC layer in a BeiDou communication system according to embodiments of this application.**

(1) Stop and wait feedback mode.

FIG. 9 is a schematic diagram of a stop and wait feedback mode at an SLC layer according to an embodiment of this application.

As shown in FIG. 9, in the stop and wait feedback mode, after sending an SLC PDU to a receive end, a transmit end may wait for an ACK frame returned by the receive end. After the transmit end receives the ACK frame returned by the receive end, the transmit end may send a next SLC PDU to the receive end.

For example, the transmit end may send an $i^{th}$ SLC PDU to the receive end. After receiving the $i^{th}$ SLC PDU, the receive end may return an ACK frame to the transmit end. After receiving the ACK frame, the transmit end may send an $(i+1)^{th}$ SLC PDU to the receive end. After receiving the $(i+1)^{th}$ SLC PDU, the receive end may return an ACK frame to the transmit end. After receiving the ACK frame, the transmit end may send an $(i+2)^{th}$ SLC PDU to the receive end. After receiving the $(i+2)^{th}$ SLC PDU, the receive end may return an ACK frame to the transmit end.

When the transmit end is the terminal 100 in the foregoing BeiDou communication system 10, the receive end may be the BeiDou network device 200 in the BeiDou communication system 10. When the transmit end is the BeiDou network device 200 in the foregoing BeiDou communication system 10, the receive end may be the terminal 100 in the BeiDou communication system 10.

In the stop and wait feedback mode, the receive end may immediately feed back an ACK after receiving an SLC PDU. In this way, it can be ensured that the transmit end can receive feedback in time, a transmission delay and a scheduling delay are reduced, and a risk of a transmission failure of feedback information is reduced.

(2) Parallel feedback mode.

FIG. 10 is a schematic diagram of a parallel feedback mode at an SLC layer according to an embodiment of this application.

As shown in FIG. 10, in the parallel feedback mode, a transmit end may continuously send a group of SLC PDUs to a receive end, where the group of SLC PDUs includes N SLC PDUs. After continuously sending N SLC PDUs to the receive end, the transmit end may wait for an ACK frame returned by the receive end. After receiving the group of SLC PDUs sent by the transmit end, the receive end may return the ACK frame to the receive end. After the transmit end receives the ACK frame returned by the receive end, the transmit end may send a next group of SLC PDUs to the receive end.

When the transmit end is the terminal 100 in the foregoing BeiDou communication system 10, the receive end may be the BeiDou network device 200 in the BeiDou communication system 10. When the transmit end is the BeiDou network device 200 in the foregoing BeiDou communication system 10, the receive end may be the terminal 100 in the BeiDou communication system 10.

In the parallel feedback mode, the receive end may feed back an ACK frame only after receiving a group of SLC PDUs. In this way, because the receive end returns one ACK frame only after the transmit end sends a plurality of SLC PDUs, compared with the foregoing stop and wait feedback mode, signaling overheads fed back by the receive end can be reduced.

Advantages and disadvantages of the stop and wait feedback mode and the parallel feedback mode may be shown in Table 1.

**Table 1**

| Features | Stop and wait feedback mode | Parallel feedback mode |
|---|---|---|
| Feedback time | Immediate feedback | Delayed feedback |
| receiving state machine | Easy | Complex |
| Signaling overhead | Large | Small |
| Ultra multi-frame transmission at SLC layer | Supported | Not supported |

It can be learned from Table 1 that:

1. In the stop and wait feedback mode, the receive end needs to send feedback information to the transmit end immediately after receiving the SLC PDU sent by the transmit end. In parallel feedback mode, after receiving the SLC PDU sent by the transmit end, the receive end accumulates received SLC PDUs of a specific amount of data, and then sends feedback information to the transmit end. Due to a limitation caused by hardware implementation of the terminal 100 and the BeiDou network device 200, a sending time interval of downlink SLC PDUs is long (for example, greater than 2s). In this case, the sending time interval may be used to enable the terminal 100 to send the feedback information to the BeiDou network device 200.
2. In the stop and wait feedback mode, the receive end does not need to maintain a complex receiving state machine, and processing at the receive end is simple. In the parallel feedback mode, the receive end needs to maintain a complex receiving state machine, and a processing process is complex.
3. In the stop and wait feedback mode, feedback signaling overheads are large, but may be applicable to different user link quality. The transmit end may adjust a manner of sending the SLC PDU in time based on user link quality.
4. In the parallel feedback mode, the receiving state machine of the receive end needs to set a waiting time based on a quantity of SLC PDUs sent by the transmit end. Therefore, a total quantity of SLC PDU frames limits a quantity of data frames sent in a session at the SLC layer. In the stop and wait feedback mode, the receive end immediately sends feedback information to the transmit end after receiving an SLC PDU. Therefore, the receive end does not need to set a wait timer. Each time the transmit end sends an SLCPDU, the transmit end waits for an ACK from the receive end. Therefore, a sending radio frequency component of the transmit end obtains sufficient rest time, and a quantity of SLC PDUs sent by the transmit end at the SLC layer is not limited.

**The following describes a process in which a terminal 100 negotiates with a BeiDou network device 200 about a feedback mode according to an embodiment of this application.**

FIG. 11 is a schematic diagram of a frame format of an inbound SLC PDU according to an embodiment of this application.

As shown in FIG. 11, during inbound, frame header information of an SLC PDU sent by the terminal 100 to the BeiDou network device 200 may include: a version number field, a subtype indicator field, a user ID field, an acknowledgment mode enable (AM enable) field, a total frame quantity field, a frame sequence number field, an SAI field, and a reserve (reserve, RSV) field.

The version number field may indicate a version of a BeiDou communication protocol, and evolution of the BeiDou communication protocol for a format of each frame type may be supported based on the version number field. A length of the version number field may be 3 bits. The length of the version number field is not limited in embodiments of this application.

The subtype field may indicate that a frame type of a user frame sent by the terminal 100 is a general data frame, that is, the SLC PDU. A length of the subtype field may be 1 bit. For example, if a value of the subtype field is "0", it indicates that the user frame is the general data frame, that is, the SLC PDU. If a value of the subtype field is "1", it indicates that the user frame sent by the terminal 100 is an ACK frame. Because the SLC PDU is the general data frame sent by the terminal 100, the value of the subtype field in the SLC PDU is "0". The length of the subtype field is not limited in embodiments of this application.

The user ID field may indicate a device identifier of the terminal 100 in the BeiDou communication system. A length of the user ID field may be 44 bits. The length of the user ID field is not limited in embodiments of this application.

The AM enable field may indicate whether the terminal 100 sends the SLC PDU in an acknowledgment mode. A length of the AM enable field may be 1 bit. If a value of the AM enable field is a first value (for example, 1), it indicates that the BeiDou network device 200 needs to return an ACK to the terminal 100 after receiving the SLC PDU sent by the terminal 100. If a value of the AM enable field is a second value (for example, 0), it indicates that the BeiDou network device 200 does not need to return an ACK to the terminal 100 after receiving the SLC PDU. The length of the AM enable field and the specific value of the AM enable field are not limited in embodiments of this application.

For example, when a value of the AM enable field is "1", it indicates that the terminal 100 performs transmission in an acknowledgment mode, and the BeiDou network device 200 needs to return an ACK after receiving the SLC PDU sent by the terminal 100. When a value of the AM enable field is "0", it indicates that the terminal 100 performs transmission in a non-acknowledgment mode, and the BeiDou network device 200 does not need to return an ACK frame after receiving the SLC PDU.

The total frame quantity field may indicate a total quantity of SLC PDUs included in an SLC SDU to which an SLC PDU belongs. A length of the total frame quantity field may be 2 bits. When the length of the total frame quantity field is 2 bits, one SLC PDU may include a maximum of four SLC PDUs.

The frame sequence number field may indicate a sequence number of an SLC PDU in an SLC SDU. A length of the frame sequence number field may be 2 bits. The length of the frame sequence number field is not limited in embodiments of this application.

The service data unit alternated indicator (service data unit alternated Indicator, SAI) field may occupy one bit. When the terminal 100 sends the SLC PDU in the acknowledgment mode, that is, the value of the AM enable field is "1", the SAI field may indicate whether the SLC PDU is a resent SLC PDU. When the terminal 100 sends the SLC PDU in the non-acknowledgment mode, that is, the value of the AM enable field is "0", the SAI field may be reserved for use by another function.

The RSV field may occupy 4 bits and may be reserved for another function.

It may be understood that the frame format of the outbound SLC PDU shown in FIG. 12 is merely an example. A sequence of cell parameters in the frame header information field is not limited in embodiments of this application.

FIG. 12 is a schematic diagram of a frame format of an outbound SLC PDU according to an embodiment of this application.

As shown in FIG. 12, during outbound, frame header information of an SLC PDU sent by the BeiDou network device 200 to the terminal 100 may include: a frame type field, an acknowledgment mode enable (acknowledge mode enable, AM enable) field, a frame length field, a user ID field, a total frame quantity field, and a frame sequence number field.

The frame type field may indicate a type of an SLC frame. A length of the frame type field may be 2 bits. The length of the frame type field is not limited in embodiments of this application.

The AM enable field indicates whether the BeiDou network device 200 sends the SLC PDU in an acknowledgment mode. A length of the AM enable field may be 1 bit. If a value of the AM enable field is a first value (for example, 1), it indicates that the terminal 100 needs to return an ACK to the BeiDou network device 200 after receiving the SLC PDU sent by the BeiDou network device 200. If a value of the AM enable field is a second value (for example, 0), it indicates that the terminal 100 does not need to return an ACK to the BeiDou network device 200 after receiving the SLC PDU sent by the BeiDou network device 200. The length of the AM enable field and the specific value of the AM enable field are not limited in embodiments of this application.

For example, when a value of the AM enable field is "1", it indicates that the BeiDou network device 200 performs transmission in an acknowledgment mode, and the terminal 100 needs to return an ACK after receiving the SLC PDU sent by the BeiDou network device 200. When a value of the AM enable field is "0", it indicates that the BeiDou network device 200 performs transmission in a non-acknowledgment mode, and the terminal 100 does not need to return an ACK after receiving the SLC PDU sent by the BeiDou network 200.

The frame length field is used to identify a length of the SLC frame, and the length of the frame length field may be 8 bits. The length of the frame length field is not limited in embodiments of this application.

The user ID field may indicate that the SLCPDU is sent by the BeiDou network device 200 to the terminal 100, and an ID of the terminal 100 is the same as an ID shown in the user ID field. A length of the user ID field may be 34 bits. The length of the user ID field is not limited in embodiments of this application.

The total frame quantity field may indicate a total quantity of SLC PDUs included in an SLC SDU to which an SLC PDU belongs. A length of the total frame quantity field may be 2 bits. When the length of the total frame quantity field is 2 bits, one SLC PDU may include a maximum of four SLC PDUs.

The frame sequence number field may indicate a sequence number of an SLC PDU in an SLC SDU. A length of the frame sequence number field may be 2 bits. The length of the frame sequence number field is not limited in embodiments of this application.

It may be understood that the frame format of the outbound SLC PDU shown in FIG. 12 is merely an example. A sequence of cell parameters in the frame header information field is not limited in embodiments of this application.

Generally, in the parallel acknowledgment mode, the transmit end sends a group (N) of SLC PDUs belonging to one SLC SDU to the receive end. After receiving the group of SLC PDUs, the receive end needs to determine, based on the frame sequence number and the total frame quantity in the frame header information of the group of SLC PDUs, whether all SLC PDUs in the group of SLC PDUs are completely received. The receive end may return a corresponding ACK to the transmit end based on completeness of the group of SLC PDUs. In the parallel acknowledgment mode, the frame sequence number of the group of SLC SDUs is not greater than the total frame quantity of the group of SLC PDUs. However, an arrangement and combination case of a value of the frame sequence number field and a value of the total frame quantity field in the frame header information of the SLC PDU includes not only a case in which the frame sequence number is less than or equal to the value of the total frame quantity, but also a case in which the frame sequence number is greater than the total frame quantity.

For example, the length of the frame sequence number field may be 2 bits, and the length of the total frame quantity field may be 2 bits. Therefore, there are 16 arrangement and combination cases of the value of the frame sequence number field and the value of the total frame quantity field. There are 10 combination cases in which the value of the frame sequence number field is less than or equal to the value of the total frame quantity field, and there are 6 combination cases in which the value of the frame sequence number field is greater than the value of the total frame quantity field. Therefore, in the parallel acknowledgment mode, only 10 of the total 16 arrangement and combination cases of the value of the frame sequence number field and the value of the total frame quantity field are used, and there are still 6 remaining cases. The foregoing example is merely used to explain this application and shall not be construed as a limitation.

However, in the stop and wait acknowledgment mode, because the receive end returns an ACK to the transmit end after receiving v SLC PDU, the frame sequence number of the SLC PDU in the SLC SDU and the total frame quantity of the SLC PDU in the SLC SDU do not need to be known. In the stop and wait acknowledgment mode, the total frame quantity and the frame sequence number in the frame header information of the SLC PDU are not required. Therefore, in embodiments of this application, a combination case in which a value of the frame sequence number field in the frame header information of the SLC PDU is greater than a value of the total frame quantity field may indicate that the SLC PDU sent by the transmit end needs the receive end to return the ACK in the stop and wait acknowledgment mode.

Therefore, the transmit end may negotiate the acknowledgment mode with the receive end based on the total frame quantity field and the frame sequence number field in the frame header information of the data frame. In this way, when the transmit end negotiates the acknowledgment mode with the receive end, additional frame header overheads may not be required.

For example, the length of the frame sequence number field may be 2 bits, and the length of the total frame quantity field may be 2 bits. Definitions of combinations of the value of the frame sequence number field and the value of the total frame quantity field may be shown in Table 2.

**Table 2**

| Value of a total frame quantity field | Value of a frame sequence number field | Basic definition | Feedback mode |
|---|---|---|---|
| 0 | 0 | There is only one SLC PDU in an SLC SDU | An ACK is directly fed back without distinguishing between a stop and wait feedback mode and a parallel feedback mode |
| 0 | 1 | First SLC PDU in a stop and wait feedback mode | An ACK is immediately fed back, a next SLC PDU is waited, and a session at an SLC layer is terminated after a time specified by a maximum number of retransmissions expires |
| 0 | 2 | Second SLC PDU in a stop and wait feedback mode, or an SLC PDU next to an SLC PDU whose [total frame quantity, frame sequence number] is [0, 3] | An ACK is immediately fed back, a next SLC PDU is waited, and a session at an SLC layer is terminated after a time specified by a maximum number of retransmissions expires |
| 0 | 3 | An SLC PDU next to an SLC PDU whose [total frame quantity, frame sequence number] is [0, 2] in a stop and wait feedback mode | An ACK is immediately fed back, a next SLC PDU is waited, and a session at an SLC layer is terminated after a time specified by a maximum number of retransmissions expires |
| 1 | 2 | Last SLC PDU in a stop and wait feedback mode | An ACK is immediately fed back and a session is terminated |
| 1 | 0 | First SLC PDU among a total of 2 SLC PDUs in a parallel feedback mode | An ACK is fed back in a parallel feedback mode |
| 1 | 1 | Second SLC PDU among a total of 2 SLC PDUs in a parallel feedback mode | An ACK is fed back in a parallel feedback mode |
| 2 | 0 | First SLC PDU among a total of 3 SLC PDUs in a parallel feedback mode | An ACK is fed back in a parallel feedback mode |
| 2 | 1 | Second SLC PDU among a total of 3 SLC PDUs in a parallel feedback mode | An ACK is fed back in a parallel feedback mode |
| 2 | 2 | Third SLC PDU among a total of 3 SLC PDUs in a parallel feedback mode | An ACK is fed back in a parallel feedback mode |
| 3 | 0 | First SLC PDU among a total of 4 SLC PDUs in a parallel feedback mode | An ACK is fed back in a parallel feedback mode |
| 3 | 1 | Second SLC PDU among a total of 4 SLC PDUs in a parallel feedback mode | An ACK is fed back in a parallel feedback mode |
| 3 | 2 | Third SLC PDU among a total of 4 SLC PDUs in a parallel feedback mode | An ACK is fed back in a parallel feedback mode |
| 3 | 3 | Fourth SLC PDU among a total of 4 SLC PDUs in a parallel feedback mode | An ACK is fed back in a parallel feedback mode |
| 1 | 3 | Invalid | Discard |
| 2 | 3 | Invalid | Discard |

As shown in Table 2:

1. When the value of the total frame quantity field of the SLC PDU is "0", and the value of the frame sequence number field is "0", it may jointly indicate that the SLC PDU is a unique SLC PDU in the SLC SDU. The receive end does not need to distinguish between the stop and wait feedback mode and the parallel feedback mode, and directly feeds back the ACK after receiving the SLC PDU.

2. When the value of the total frame quantity field of the SLC PDU is "0", and the value of the frame sequence number field is "1", it may jointly indicate that the SLC PDU is the first SLC PDU in the SLC SDU in the stop and wait feedback mode. The receive end immediately feeds back the ACK after receiving the SLC PDU, and waits for a next SLC PDU. If the receive end still does not receive an SLC PDU after a time specified by a maximum number of retransmissions expires, the receive end may terminate an SLC SDU session. After a number of times that the transmit end resends the SLC PDU reaches the maximum number, if the transmit end does not receive the ACK returned by the receive end, the transmit end terminates the session at the SLC layer.

3. When the value of the total frame quantity field of the SLC PDU is "0" and the value of the frame sequence number field is "2", it may jointly indicate that the SLC PDU is the second SLC PDU in the stop and wait feedback mode, or the next SLC PDU of the SLC PDU whose [total frame quantity, frame sequence number] is [0, 3] The receive end immediately feeds back the ACK after receiving the SLC PDU, and waits for a next SLC PDU.

4. When the value of the total frame quantity field of the SLC PDU is "0", and the value of the frame sequence number field is "3", it may jointly indicate that the SLC PDU is the next SLC PDU of the SLC PDU whose [total frame quantity, frame sequence number] is [0, 2]. The receive end immediately feeds back the ACK after receiving the SLC PDU, and waits for a next SLC PDU.

5. When the value of the total frame quantity field of the SLC PDU is " 1 ", and the value of the frame sequence number field is "2", it may jointly indicate that the SLC PDU is the last SLC PDU in the stop and wait feedback mode. The receive end immediately feeds back the ACK after receiving the SLC PDU, and terminates the session at the SLC layer.

6. When the value of the total frame quantity field of the SLC PDU is " 1 ", and the value of the frame sequence number field is "0", it may jointly indicate that the SLC PDU is the first SLC PDU in the total of 2 SLC PDUs in the SLC SDU in the parallel feedback mode. After receiving the SLC PDU, the receive end may feed back the ACK in the parallel feedback mode.

7. When the value of the total frame quantity field of the SLC PDU is " 1 ", and the value of the frame sequence number field is "1", it may jointly indicate that the SLC PDU is the second SLC PDU in the total of 2 SLC PDUs in the SLC SDU in the parallel feedback mode. After receiving the SLC PDU, the receive end may feed back the ACK in the parallel feedback mode.

8. When the value of the total frame quantity field of the SLC PDU is "2", and the value of the frame sequence number field is "0", it may jointly indicate that the SLC PDU is the first SLC PDU in the total of 3 SLC PDUs in the SLC SDU in the parallel feedback mode. After receiving the SLC PDU, the receive end may feed back the ACK in the parallel feedback mode.

9. When the value of the total frame quantity field of the SLC PDU is "2", and the value of the frame sequence number field is "1", it may jointly indicate that the SLC PDU is the second SLC PDU in the total of 3 SLC PDUs in the SLC SDU in the parallel feedback mode. After receiving the SLC PDU, the receive end may feed back the ACK in the parallel feedback mode.

10. When the value of the total frame quantity field of the SLC PDU is "2", and the value of the frame sequence number field is "2", it may jointly indicate that the SLC PDU is the third SLC PDU in the total of 3 SLC PDUs in the SLC SDU in the parallel feedback mode. After receiving the SLC PDU, the receive end may feed back the ACK in the parallel feedback mode.

11. When the value of the total frame quantity field of the SLC PDU is "3", and the value of the frame sequence number field is "0", it may jointly indicate that the SLC PDU is the first SLC PDU in the total of 4 SLC PDUs in the SLC SDU in the parallel feedback mode. After receiving the SLC PDU, the receive end may feed back the ACK in the parallel feedback mode.

12. When the value of the total frame quantity field of the SLC PDU is "3", and the value of the frame sequence number field is "1", it may jointly indicate that the SLC PDU is the second SLC PDU in the total of 4 SLC PDUs in the SLC SDU in the parallel feedback mode. After receiving the SLC PDU, the receive end may feed back the ACK in the parallel feedback mode.

13. When the value of the total frame quantity field of the SLC PDU is "3", and the value of the frame sequence number field is "2", it may jointly indicate that the SLC PDU is the third SLC PDU in the total of 4 SLC PDUs in the SLC SDU in the parallel feedback mode. After receiving the SLC PDU, the receive end may feed back the ACK in the parallel feedback mode.

14. When the value of the total frame quantity field of the SLC PDU is "3", and the value of the frame sequence number field is "3", it may jointly indicate that the SLC PDU is the fourth SLC PDU in the total of 4 SLC PDUs in the SLC SDU in the parallel feedback mode. After receiving the SLC PDU, the receive end may feed back the ACK in the parallel feedback mode.

15. The value of the total frame quantity field of the SLC PDU is "1" and the value of the frame sequence number field is "3" are an invalid value combination. If the receive end receives the SLC PDU, the receive end directly discards the SLC PDU.

16. The value of the total frame quantity field of the SLC PDU is "2" and the value of the frame sequence number field is "3" are an invalid value combination. If the receive end receives the SLC PDU, the receive end directly discards the SLC PDU.

When an intermediate SLC PDU (not the first SLC PDU or the last SLC PDU) is sent, whether the intermediate SLC PDU is a resent SLC PDU may be indicated by inversion of a combination of values of total frame quantity fields and frame sequence number fields of two adjacent intermediate SLC PDUs. If a combination of values of a total frame quantity field and a frame sequence number field of a next SLC PDU is the same as a combination of values of a total frame quantity field and a frame sequence number field of a previous SLC PDU (that is, not reversed), the next SLC PDU is a resent SLC PDU of the previous SLC PDU. For example, combinations of values of [total frame quantity, frame sequence number] of [0, 2] and [0, 3] may indicate that two adjacent newly sent intermediate SLC PDUs are reversed.

For example, the transmit end may indicate, based on the total frame quantity field and the frame sequence number field in the SLC PDU, the receive end to return the ACK in the stop and wait acknowledgment mode. The transmit end may wait for the receive end to return an ACK each time an SLC PDU is sent. In a transmission process in the stop and wait acknowledgment mode, a value of a total frame quantity field of a first SLC PDU sent by the terminal 100 is "0", and a value of a frame sequence number field is "1". A value of a total frame quantity field of a second SLC PDU sent by the transmit end is "0", and a value of a frame sequence number field is "2". A value of a total frame quantity field of a third SLC PDU sent by the transmit end is "0", and a value of a frame sequence number field is "3". A value of a total frame quantity field of a fourth SLC PDU sent by the transmit end is "0", and a value of a frame sequence number field is "2". A value of a total frame quantity field of a fifth SLC PDU sent by the transmit end is "0", and a value of a frame sequence number field is "3". A value of a total frame quantity field of a sixth SLC PDU sent by the transmit end is "0", and a value of a frame sequence number field is "2". A value of a total frame quantity field of a last SLC PDU sent by the transmit end is "1", and a value of a frame sequence number field is "2".

In the foregoing example, when the transmit end is the terminal 100, the receive end may be the BeiDou network device 200. When the transmit end is the BeiDou network device 200, the receive end may be the terminal 100. The foregoing example is merely used to explain this application and shall not be construed as a limitation.

For another example, the transmit end may indicate, based on the total frame quantity field and the frame sequence number field in the SLC PDU, the receive end to return the ACK in the parallel acknowledgment mode. During transmission in the parallel acknowledgment mode, the transmit end needs to continuously send N SLC PDUs in the SLC SDU at intervals, and then waits for the receive end to return an ACK.

When N=1, a value of a total frame quantity field of a unique SLC PDU in an SLC SDU is "0", and a value of a frame sequence number field is "0".

When N=2, a value of a total frame quantity field of a first SLC PDU in an SLC SDU is "1", and a value of a frame sequence number field is "0". A value of a total frame quantity field of a second SLC PDU in the SLC SDU is "1", and a value of a frame sequence number field is "1".

When N=3, a value of a total frame quantity field of a first SLC PDU in an SLC SDU is "2", and a value of a frame sequence number field is "0". A value of a total frame quantity field of a second SLC PDU in the SLC SDU is "2", and a value of a frame sequence number field is "1". A value of a total frame quantity field of a third SLC PDU in the SLC SDU is "2", and a value of a frame sequence number field is "2".

When N=4, a value of a total frame quantity field of a first SLC PDU in an SLC SDU is "3", and a value of a frame sequence number field is "0". A value of a total frame quantity field of a second SLC PDU in the SLC SDU is "3", and a value of a frame sequence number field is "1". A value of a total frame quantity field of a third SLC PDU in the SLC SDU is "3", and a value of a frame sequence number field is "2". A value of a total frame quantity field of a fourth SLC PDU in the SLC SDU is "3", and a value of a frame sequence number field is "3".

In the foregoing example, when the transmit end is the terminal 100, the receive end may be the BeiDou network device 200. When the transmit end is the BeiDou network device 200, the receive end may be the terminal 100. The foregoing example is merely used to explain this application and shall not be construed as a limitation.

**The following describes a processing sequence of a stop and wait acknowledgment mode at an SLC layer when data is inbound in a BeiDou communication system 10 according to embodiments of this application.**

FIG. 13 is a diagram of the processing sequence of the stop and wait acknowledgment mode at the SLC layer when the data is inbound according to an embodiment of this application.

As shown in FIG. 13, an interaction process of the stop and wait acknowledgment mode of the BeiDou communication system 10 when the data is inbound may be as follows:

1. A terminal 100 may encapsulate a total frame quantity field and a frame sequence number field in frame header information of an $i^{th}$ SLC PDU according to a protocol rule of the stop and wait acknowledgment mode in Table 2.
2. After sending the $i^{th}$ SLC PDU to a BeiDou network device 200, the terminal 100 may switch radio frequency hardware from a transmitting (transmit, Tx) state to a receiving (receive, Rx) state. After switching to the receiving (Rx) state, the terminal 100 may wait to receive, in an ACK receiving window, an ACK returned by the BeiDou network device 200.

3. After receiving the $i^{th}$ SLC PDU sent by the terminal 100, the BeiDou network device 200 may determine, based on an AM enable field, the total frame quantity field, and the frame sequence number field in the frame header information of the $i^{th}$ SLC PDU, that the terminal 100 requests to return the ACK, and returns the ACK in the stop and wait acknowledgment mode. Therefore, the BeiDou network device 200 may return the ACK to the terminal 100 after a signal processing scheduling time. A length of a bitmap (Bitmap) part in the ACK is only 1 bit. The 1-bit bitmap in the ACK may indicate that the BeiDou network device 200 receives the $i^{th}$ SLC PDU.

4. The terminal 100 may determine a start moment (tUeStartRcvAck) of the ACK receiving window (tUeRevAck-Window) and an end moment (tUeEndRcvAck) of the ACK receiving window based on a time length (tUeUlFrameLen) of a physical frame sent by the terminal 100, duration (tTx2RxSwitch) of switching from the transmitting state to the receiving state, duration (tRx2TxSwitch) of switching from the receiving state to the transmitting state, an air interface propagation delay (tPropagate), a signal processing scheduling delay (tStationProcess) of the BeiDou network device 200, a time alignment deviation ($\delta$) of sending a physical frame by the BeiDou network device 200, and a time length (tStationDlFrameLen) of a physical frame sent by the BeiDou network device 200.

In the stop and wait acknowledgment mode, it should be ensured that the terminal 100 opens the ACK receiving window before the ACK arrives at the terminal 100. Therefore, assuming that a start point of sending the SLC PDU by the terminal 100 is a moment 0, the terminal 100 may determine the start moment (tUeStartRcvAck) of the ACK receiving window according to Formula (1):

$$t0 + tUeUlFrameLen + tTx2RxSwitch < tUeStartRcvAck < t0 + tUeUlFrameLen + 2 * tPropagate + tStationProcess \quad \text{Formula (1)}$$

In Formula (1), a value of tStationProcess is a minimum value (t_MinStatProc). According to test data, a value of t_MinStatProc may be 1 s, and a typical value of tPropagate may be 270 ms.

The terminal 100 may determine the end moment (tUeEndRcvAck) of the ACK receiving window according to Formula (2):

$$tUeEndRcvAck = t0 + UeUlFrameLen + tPropagate * 2 + tStationProcess + tStationDlFrameLen + \delta \quad \text{Formula (2)}$$

In Formula (2), a value of *tStationProcess* may be a maximum value (t _MaxStatProc), for example, 4 s. According to test data, a value of *tStationDlFrameLen* may be 125 ms, a value of $\delta$ may be 125 ms, and a typical value of tPropagate may be 270 ms.

5. After receiving the ACK, the terminal 100 may switch the radio frequency hardware from the receiving (Rx) state to the transmitting (Tx) state. After switching to the transmitting (Tx) state, the terminal 100 may send an $(i+1)^{th}$ SLC PDU.

If the terminal 100 does not receive, after the ACK receiving window ends, the ACK sent by the BeiDou network device 200, the terminal 100 may resend the $i^{th}$ SLC PDU to the BeiDou network device 200. After receiving the $i^{th}$ SLC PDU resent by the terminal 100, the BeiDou network device 200 may return the ACK to the terminal 100.

**The following describes a processing sequence of a stop and wait acknowledgment mode at an SLC layer when data is outbound in a BeiDou communication system 10 according to embodiments of this application.**

FIG. 14 is a diagram of the processing sequence of the stop and wait acknowledgment mode at the SLC layer when the data is outbound according to an embodiment of this application.

As shown in FIG. 14, an interaction process of the stop and wait acknowledgment mode of the BeiDou communication system 10 when the data is outbound may be as follows:

1. A BeiDou network device 200 may encapsulate a total frame quantity field and a frame sequence number field in frame header information of an $i^{th}$ SLC PDU according to a protocol rule of the stop and wait mode in Table 2.

2. After sending the $i^{th}$ SLC PDU to a terminal 100, the BeiDou network device 200 may wait to receive an ACK returned by the terminal 100.

3. After receiving the $i^{th}$ SLC PDU sent by the terminal 100, the terminal 100 may determine, based on an AM enable field, the total frame quantity field, and the frame sequence number field in the frame header information of the $i^{th}$ SLC PDU, that the terminal 100 requests to return the ACK, and returns the ACK in the stop and wait acknowledgment mode. Therefore, the terminal 100 may return the ACK to the BeiDou network device 200 after a signal processing scheduling time. A length of a bitmap (Bitmap) part in the ACK is only 1 bit. The 1-bit bitmap in the ACK may indicate that the terminal 100 receives the $i^{th}$ SLC PDU.

4. The BeiDou network device 200 may determine a start moment (tStationStartRcvAck) of the ACK receiving window (tStationRevAckWindow) and an end moment (tStationEndRcvAck) of the ACK receiving window based on a time length (tStationDlFrameLen) of an outbound physical frame, an air interface propagation delay (tPropagate), a signal processing scheduling time (tUeProcess) of the terminal 100, and duration (tRx2TxSwitch) of switching the terminal 100 from the receiving state to the transmitting state.

In the stop and wait acknowledgment mode, it should be ensured that the BeiDou network device 200 opens the ACK receiving window before the ACK arrives at the BeiDou network device 200. Therefore, assuming that a start point of sending the $i^{th}$ SLC PDU by the BeiDou network device 200 is a moment t1, the BeiDou network device 200 may determine the start moment (tStationStartRcvAck) of the ACK receiving window according to Formula (3):

$$t1 + tStationDlFrameLen < tStationStartRcvAck < t1 + tUeUlFrameLen + tPropagate * 2 + tUeProcess + tRx2TxSwitch + \mathrm{tStationDlFrameLe} \quad \text{Formula (3)}$$

In Formula (3), a value of *tUeProcess* may be a minimum value (t_MinUeProc). A value of tStationDlFrameLen may be 125 ms. According to test data, a typical value of tPropagate may be 270 ms.

The BeiDou network device 200 may determine the end moment (tStationEndRcvAck) of the ACK receiving window according to Formula (4):

$$tStationEndRcvAck = t1 + tStationDlFrameLen + 2 * tPropagate + tUeUlFrameLen + tUeProcess + tRx2TxSwitch \quad \text{Formula (4)}$$

In Formula (4), a value of *tUeProcess* may be a maximum value (t_MaxUeProc). According to test data, a value of tStationDlFrameLen may be 125 ms.

5. After receiving the ACK, the BeiDou network device 200 may send an $(i+1)^{th}$ SLC PDU in a transmission slot of a next physical frame. If the BeiDou network device 200 does not receive, after the ACK receiving window ends, the ACK sent by the terminal 100, the BeiDou network device 200 may end transmission of a subsequent SLC PDU.

Optionally, when the BeiDou network device 200 does not receive, after the ACK receiving window ends, the ACK sent by the terminal 100, the BeiDou network device 200 may resend the $i^{th}$ SLC PDU to the terminal 100 in the transmission slot of the next physical frame. After receiving the $i^{th}$ SLC PDU resent by the BeiDou network device 200, the terminal 100 may return the ACK to the BeiDou network device 200.

**The following describes a processing sequence of a parallel acknowledgment mode at an SLC layer when data is inbound in a BeiDou communication system 10 according to embodiments of this application.**

FIG. 15 is a diagram of the processing sequence of the parallel acknowledgment mode at the SLC layer when the data is inbound according to an embodiment of this application.

As shown in FIG. 15, an interaction process of the parallel acknowledgment mode of the BeiDou communication system 10 when the data is inbound may be as follows:

1. A terminal 100 may encapsulate total frame quantity fields and frame sequence number fields in frame header information of N (for example, a value of N is 4) SLC PDUs in an SLC SDU according to a protocol rule of the parallel acknowledgment mode in Table 2. The terminal 100 may continuously send the N SLC PDUs in the SLC SDU to the BeiDou network device 200 at intervals.
2. After the terminal 100 sends the N SLC PDUs in the SLC SDU to the BeiDou network device 200, the terminal 100 may switch radio frequency hardware from a transmitting (Tx) state to a receiving (Rx) state. After switching to the receiving (Rx) state, the terminal 100 may wait to receive, in an ACK receiving window, an ACK returned by the BeiDou network device 200.
3. After receiving the N SLC PDUs in the SLC SDU sent by the terminal 100, the BeiDou network device 200 may determine, based on an AM enable field, the total frame quantity field, and the frame sequence number field in the frame header information of the received SLC PDU, that the terminal 100 requests to return the ACK, and returns the ACK in the parallel acknowledgment mode. Therefore, the BeiDou network device 200 may return the ACK to the terminal 100 after a signal processing scheduling time. A length of a bitmap part of the ACK is N bits, which indicates a frame sequence number of the SLC PDU received by the BeiDou network device 200. An $x^{th}$ bit of the bitmap of the ACK may indicate whether the BeiDou network device 200 receives an $x^{th}$ SLC PDU in the SLC SDU, where $x \le N$.

Optionally, a data length of the bitmap part of the ACK may be a fixed value, and the fixed value is greater than or equal to N. First N bits of the bitmap part of the ACK may indicate the frame sequence number of the SLC PDU received by the BeiDou network device 200.

The BeiDou network device 200 may determine a remaining time length (tStationRevWindow) of an SLC PDU receiving window on the BeiDou network device 200 based on a receiving moment (tStaRevRctSP) at which a latest SLC PDU is received, a frame sequence number (nRevFrameSN) of the latest received SLC PDU, a total frame quantity (nUeTotalFrameNum) of SLC PDUs in a current SLC SDU session, a frame interval (tUeTxInterval) at which the terminal 100 sends a physical frame, and a time length (tUeUlFrameLen) of sending the physical frame by the terminal 100.

The BeiDou network device 200 determines the remaining time length (tStationRevWindow) of the SLC PDU receiving window according to Formula (5):

tStationRevWindow = tStaRevRctSP + (nUeTotalFrameNum - nRevFrameSN - 1) * (tUeTxInterval + tUeUlFrameLen) Formula (5)

In Formula (5), a value of *tUeTxInterval* is preset on the BeiDou network device 200. The foregoing *tUeTxInterval* = {0, 1, ..., *nUeTotalFrameNum*-1}.

The BeiDou network device 200 may determine, based on the remaining time length (tStationRevWindow) of the SLC PDU receiving window and a signal processing scheduling delay (tStationProcess) of the BeiDou network device 200, a time point (tStationSendAck) for sending the ACK.

The BeiDou network device 200 may determine the time point for returning the ACK according to Formula (6):

$$tStationSendAck = tStationRevWindow + tStationProcess + \delta \quad \text{Formula (6)}$$

In Formula (6), $\delta$ is a time alignment deviation of sending the outbound physical frame on the BeiDou network device 200.

4. The terminal 100 may determine, based on a moment (tUeTxEnd) at which the terminal 100 completes sending a last SLC PDU in the SLC SDU, duration (tTx2RxSwitch) for switching the terminal 100 from the transmitting state to the receiving state, an air interface propagation delay (tPropagate), and an outbound signal processing scheduling time (tStationProcess), a start moment (tUeStartRcvAck) at which the terminal 100 receives the ACK.

The terminal 100 may determine the start moment (tUeStartRcvAck) for receiving the ACK according to Formula (7):

*tUeTxEnd* + *tRx2TxSwitch* < *tUeStartRcvAck* < *tUeTxEnd* + 2 * *tPropagate* + *tStationProcess* Formula (7)

In Formula (7), a value of *tStationProcess* may be a minimum value (t _MinStatProc), for example, 1 s.

The terminal 100 may determine, based on the time length (tUeUlFrameLen) of sending the physical frame by the terminal 100, the air interface propagation delay (tPropagate) between the terminal 100 and the BeiDou network device 200, the signal processing scheduling time (tStationProcess), a time length (tStationDlFrameLen) of sending the physical frame by the BeiDou network device 200, and the time alignment deviation ($\delta$) of sending the physical frame on the BeiDou network device 200, an end moment (tUeEndRcvAck) at which the terminal 100 receives the ACK.

The terminal 100 may determine the end moment (tUeEndRcvAck) for returning the ACK according to Formula (8):

$$tUeEndRcvAck = tUeTxEnd + tUeUlFrameLen + 2 * tPropagate + tStationProcess + tStationDlFrameLen + \delta \quad \text{Formula (8)}$$

In Formula (8), a value of *tStationProcess* may be a maximum value (t_MaxStatProc), for example, 1 s. A value of *tStationDlFrameLen* may be 125 ms. In Formula (8), a value of $\delta$ may be 125 ms.

5. After receiving the ACK returned by the BeiDou network device 200, the terminal 100 may determine, based on the bitmap part of the ACK, a frame sequence number of an SLC PDU not received by the BeiDou network device 200. If the BeiDou network device 200 completely receives the N SLC PDUs in the current SLC SDU, the terminal 100 may switch the radio frequency hardware from the receiving (Rx) state to the transmitting (Tx) state, and send N SLC PDUs in a next SLC SDU.

If the BeiDou network device 200 does not receive an $i^{th}$ SLC PDU in the current SLC SDU, the terminal 100 may switch the radio frequency hardware from the transmitting (Rx) state to the receiving (Tx) state, and resend the $i^{th}$ SLC PDU. After the BeiDou network device 200 returns the ACK indicating that all the N SLC PDUs in the current SLC SDU are completely received, the terminal 100 may send the N SLC PDUs in the next SLC SDU.

**The following describes a processing sequence of a parallel acknowledgment mode at an SLC layer when data is outbound in a BeiDou communication system 10 according to embodiments of this application.**

FIG. 16 is a diagram of the processing sequence of the parallel acknowledgment mode at the SLC layer when the data is outbound according to an embodiment of this application.

As shown in FIG. 16, an interaction process of the parallel acknowledgment mode of the BeiDou communication system 10 when the data is outbound may be as follows:

1. ABeiDou network device 200 may encapsulate total frame quantity fields and frame sequence number fields in frame header information of N (for example, a value of N is 4) SLC PDUs in an SLC SDU according to a protocol rule of the parallel acknowledgment mode in Table 2. The terminal 100 may continuously send the N SLC PDUs in the SLC SDU to the terminal 100 at intervals.
2. After the BeiDou network device 200 sends the N SLC PDUs in the SLC SDU to the terminal 100, the BeiDou network device 200 may wait for an ACK returned by the terminal 100 in an ACK receiving window.
3. After receiving the N SLC PDUs in the SLC SDU sent by the BeiDou network device 200, the terminal 100 may determine, based on an AM enable field, the total frame quantity field, and the frame sequence number field in the frame header information of the received SLC PDU, that the BeiDou network device 200 requests to return the ACK, and returns the ACK in the parallel acknowledgment mode. Therefore, after the receiving window of the SLC PDU ends, the terminal 100 generates the ACK based on a receiving result of the N SLC PDUs, and returns the ACK to the BeiDou network device 200. In a communication system of a BeiDou short packet service, the BeiDou network device 200 does not support data retransmission, and the ACK sent by the terminal 100 does not need to indicate that frame sequence numbers of SLC PDUs are not completely received, and only needs to indicate that whether the N SLC PDUs are received or the N SLC PDUs are not received by the BeiDou network device 200. Therefore, a length of a bitmap part of the ACK may be 1 bit, and the 1 bit indicates whether the terminal 100 completely receives the N SLC PDUs of the current SLC SDU.

Optionally, in a communication system of a future evolution version of the BeiDou short packet service, the BeiDou network device 200 may also support data retransmission, and the ACK sent by the terminal 100 may also indicate that the frame sequence numbers are not completely received by the BeiDou network device 200. Therefore, the length of the bitmap part of the ACK may be N bits, and the N bits indicate whether the terminal 100 does not receive all frame sequence numbers of the N SLC PDUs in the current SLC SDU.

The terminal 100 may start an SLC SDU session after receiving a first SLC SDU in the SLC SDU. The terminal 100 may determine a remaining time length (tUeRevWindow) of an SLC PDU receiving window on the terminal 100 based on a frame sequence number (nStationRevFrameSN) of a latest SLC PDU received, the time at which the latest SLC PDU is received (tUeRevRctSP), a total frame quantity (nStationTotalFrameNum) of the SLC PDUs in the SLC SDU, an interval (tStationTxInterval) at which the BeiDou network device 200 sends an SLC PDU, and a time length (tStationDlFrameLen) of sending a physical frame by the BeiDou network device 200.

The terminal 100 determines the remaining time length (tUeRevWindow) of the SLC PDU receiving window according to Formula (9):

$$tUeRevWindow = tUeRevRctSP + (nStationTotalFrameNum - nStationRevFrameSN - 1) * (tStationTxInterval + tStationDlFrameLen) \quad \text{Formula (9)}$$

In Formula (9), a value of *tStatiomTxInterval* is preset on the terminal 100. *nStationRevFrameSN* = {0, 1, ..., *nStationTotalFrameNum*-1}. A value of $\delta$ may be 125 ms.

4. After the receiving window of the SLC PDU ends, the terminal 100 generates the ACK based on the receiving result of the N SLC PDUs, and returns the ACK to the BeiDou network device 200. The terminal 100 may determine, based on an air interface propagation delay (tPropagate), a signal processing scheduling delay (tUeProcess) of the terminal 100, duration (tRx2TxSwitch) of switching the terminal 100 from a receiving state to a transmitting state, and a receiving moment (tUeRevRctSP) at which the terminal 100 receives the latest SLC PDU, a time point (tUeSendAck) at which the terminal 100 sends the ACK

The terminal 100 may determine, according to Formula (10), the time point (tUeSendAck) at which the terminal 100 sends the ACK:

$$tUeSendAck = tUeRevWindow + tUeProcess + tRx2TxSwitch \quad \text{Formula (10)}$$

5. The BeiDou network device 200 may determine a start moment (tStationStartRcvAck) of the ACK receiving window (tStationRevAckWindow) and an end moment (tStationEndRcvAck) of the ACK receiving window based on a moment (tStationTxEnd) at which the BeiDou network device 200 sends a last SLC PDU in the SLC SDU, the air interface propagation delay (tPropagate), the duration (tRx2TxSwitch) of switching the terminal 100 from the receiving state to the transmitting state, and the signal processing scheduling delay (tUeProcess) of the terminal 100.

The BeiDou network device 200 may determine the start moment (tStationStartRcvAck) of the ACK receiving window (tStationRevAckWindow) according to Formula (11):

$$tStationTxEnd < tStationStartRcvAck < tStationTxEnd + \mathrm{tRx2TxSwitch} + 2 * tPropagate + tUeProcess \quad \text{Formula (11)}$$

In Formula (11), a value of tUeProcess may be a minimum value t_MinUeProc.

The BeiDou network device 200 may determine the end moment (tStationEndRcvAck) of the ACK receiving window (tStationRevAckWindow) according to Formula (12):

$$tStationEndRcvAck = tStationTxEnd + tUeProcess + tRx2TxSwitch + 2 * tPropagate + tUeUlFrameLen \quad \text{Formula (12)}$$

In Formula (12), a value of tUeProcess may be a maximum value t_MaxUeProc.

6. After receiving the ACK returned by the terminal 100, the BeiDou network device 200 may determine, based on the 1-bit bitmap part of the ACK, whether the terminal 100 completely receives the N SLC PDUs in the SLC SDU. If the terminal 100 completely receives all the N SLC PDUs in the current SLC SDU, the BeiDou network device 200 may send a plurality of SLC PDUs in a next SLC SDU.

If the terminal 100 does not completely receive all the N SLC PDUs in the current SLC SDU, the BeiDou network device 200 may end subsequent SLC SDU transmission.

FIG. 17 is a schematic flowchart of a multi-frame integrated transmission method in a BeiDou communication system according to an embodiment of this application.

As shown in FIG. 17, the multi-frame integrated transmission method in the BeiDou communication system includes the following steps:

S1701: A terminal 100 sends a first SLC PDU to a BeiDou network device.

Frame header information of the first SLC PDU includes a first total frame quantity field and a first frame sequence number field, and the first total frame quantity field and the first frame sequence number field jointly indicate an acknowledgment mode that the terminal requests the BeiDou network device to use.

For specific content that the first frame sequence number field and the first total frame quantity field jointly indicate the acknowledgment mode, refer to the foregoing embodiment. Details are not described herein again.

S1702: When the acknowledgment mode that is jointly indicated by the first total frame quantity field and the first frame sequence number in the first SLC PDU is a parallel acknowledgment mode, the BeiDou network device 200 continues to receive an SLC PDU in a first SLC SDU sent by the terminal 100.

S1703: Generate a first ACK when data M of SLC PDUs that are received by the BeiDou network device 200 and that are in the first SLC SDU is less than a total quantity N of SLC PDUs in the first SLC SDU.

S1704: The BeiDou network device 200 sends the first ACK to the terminal 100.

The first ACK indicates a frame sequence number of an SLC PDU that is in the N SLC PDUs of the first SLC SDU and that is not received by the BeiDou network device 200, and the N SLC PDUs of the first SLC SDU include the first SLC PDU. In the parallel acknowledgment mode, the first total frame quantity field indicates the total quantity N of the SLC PDUs in the first SLC SDU, and the first frame sequence number field indicates a frame sequence number of the first SLC PDU in the first SLC SDU.

S1705: After receiving the first ACK, the terminal 100 resends an SLC PDU that is in the first SLC SDU and that is not received by the BeiDou network device 200.

For specific description of feeding back the ACK by the BeiDou network device 200 in the parallel acknowledgment mode, refer to the embodiment shown in FIG. 15. Details are not described herein again.

The following describes some possible implementations performed by the terminal 100.

In a possible implementation, when the acknowledgment mode that is jointly indicated by the first total frame quantity field and the first frame sequence number field is the parallel acknowledgment mode, and the terminal 100 receives a second ACK sent by the BeiDou network device 200, the terminal 100 sends one or more SLC PDUs in a second SLC SDU to the BeiDou network device 200, where the second ACK indicates that the BeiDou network device 200 receives the N SLC PDUs in the first SLC SDU.

In a possible implementation, when the acknowledgment mode that is jointly indicated by the first total frame quantity field and the first frame sequence number field is the parallel acknowledgment mode, and the terminal 100 does not receive, in an ACK receiving time window after sending the N SLC PDUs in the first SLC SDU, an ACK sent by the BeiDou network device 200, the terminal 100 resends the N SLC PDUs in the first SLC SDU to the BeiDou network device 200.

In a possible implementation, when the acknowledgment mode that is jointly indicated by the first total frame quantity field and the first frame sequence number field is a stop and wait acknowledgment mode, the terminal 100 receives a third ACK sent by the BeiDou network device 200, where the third ACK indicates that the BeiDou network device 200 receives the first SLC PDU; and the terminal 100 sends a second SLC PDU to the BeiDou network device 200.

In a possible implementation, the method further includes: when the acknowledgment mode that is jointly indicated by the first total frame quantity field and the first frame sequence number field is a stop and wait acknowledgment mode, and the terminal 100 does not receive, in an ACK receiving time window after sending the first SLC PDU, an ACK sent by the BeiDou network device 200, the terminal 100 resends the first SLC PDU to the BeiDou network device 200.

In a possible implementation, in the stop and wait acknowledgment mode, a value of a second frame sequence number field in the second SLC PDU is different from a value of the first frame sequence number field, and a value of a second total frame quantity field is the same as a value of the first total frame quantity field; or a value of a second frame sequence number field is the same as a value of the first frame sequence number field, and a value of a second total frame quantity field is different from a value of the first total frame quantity field; or a value of a second frame sequence number field is different from a value of the first frame sequence number field, and a value of a second total frame quantity field is different from a value of the first total frame quantity field.

In a possible implementation, in the parallel acknowledgment mode, a value of the first total frame quantity field is greater than or equal to a value of the first frame sequence number field.

In a possible implementation, in the stop and wait acknowledgment mode, the value of the first total frame quantity field is less than the value of the first frame sequence number field.

In a possible implementation, in the parallel acknowledgment mode, the terminal 100 determines a start moment of the ACK receiving time window based on a moment at which the terminal 100 completes sending a last SLC PDU in the first SLC SDU, duration of switching the terminal 100 from a transmitting state to a receiving state, an air interface propagation delay, and a signal processing scheduling delay of the BeiDou network device 200; and the terminal 100 starts, at the start moment of the ACK receiving time window, to receive the ACK sent by the BeiDou network device 200.

A formula for determining, by the terminal 100, the start moment of the ACK receiving time window is:

$$tUeTxEnd + tTx2RxSwitch < tUeStartRcvAck < tUeTxEnd + 2 * tPropagate + tStationProcess,$$

*where*

*tUeStartRcvAck* is the start moment of the ACK receiving time window, *tUeTxEnd* is the moment at which the terminal 100 completes sending the last SLC PDU in the first SLC SDU, *tTx2RxSwitch* is the duration of switching the terminal 100 from the transmitting state to the receiving state, *tPropagate* is the air interface propagation delay, and *tStationProcess* is the signal processing scheduling delay of the BeiDou network device 200.

In a possible implementation, in the parallel acknowledgment mode, the terminal 100 determines an end moment of the ACK receiving time window based on a time length of a physical frame sent by the terminal 100, an air interface propagation delay, a signal processing scheduling delay of the BeiDou network device 200, a time length of a physical frame sent by the BeiDou network device 200, and a time alignment deviation of sending the physical frame by the BeiDou network device 200; and the terminal 100 stops, at the end moment of the ACK receiving time window, receiving the ACK sent by the BeiDou network device 200.

A formula for determining, by the terminal 100, the end moment of the ACK receiving time window is:

$$tUeEndRcvAck = tUeTxEnd + tUeUlFrameLen + 2 * tPropagate + tStationProcess + tStationDlFrameLen + \delta,$$

where *tUeEndRcvAck* is the end moment of the ACK receiving time window, *tUeUlFrameLen* is the time length of the physical frame sent by the terminal 100, *tPropagate* is the air interface propagation delay, *tStationProcess* is the signal processing scheduling delay of the BeiDou network device 200, *tStationDlFrameLen* is the time length of the physical frame sent by the BeiDou network device 200, and $\delta$ is the time alignment deviation of sending the physical frame by the BeiDou network device 200.

In a possible implementation, in the stop and wait acknowledgment mode, the terminal 100 determines a start moment of the ACK receiving time window based on a start moment at which the terminal 100 sends the first SLC PDU, a time length of a physical frame sent by the terminal 100, duration of switching the terminal 100 from a transmitting state to a receiving state, an air interface propagation delay, and a signal processing scheduling delay of the BeiDou network device 200; and the terminal 100 starts, at the start moment of the ACK receiving time window, to receive the ACK sent by the BeiDou network device 200.

A formula for determining, by the terminal 100, the start moment of the ACK receiving time window is:

$$t0 + tUeUlFrameLen + tTx2RxSwitch < tUeStartRcvAck < t0 + tUeUlFrameLen + 2 * tPropagate + tStationProcess,$$

where

*tUeEndRevAck* is the end moment of the ACK receiving time window, *t*0 is the start moment at which the terminal 100 sends the first SLC PDU, *tUeUlFrameLen* is the time length of the physical frame sent by the terminal 100, *tTx2RxSwitch* is the duration of switching the terminal 100 from the transmitting state to the receiving state, *tPropagate* is the air interface propagation delay, and *tStationProcess* is the signal processing scheduling delay of the BeiDou network device 200.

In a possible implementation, in the stop and wait acknowledgment mode, the terminal 100 determines an end moment of the ACK receiving time window based on a time length of a physical frame sent by the terminal 100, an air interface propagation delay, a signal processing scheduling delay of the BeiDou network device 200, a time length of a physical frame sent by the BeiDou network device 200, and a time alignment deviation of sending the physical frame by the BeiDou network device 200; and the terminal 100 stops, at the end moment of the ACK receiving time window, receiving the ACK sent by the BeiDou network device 200.

A formula for determining, by the terminal 100, the end moment of the ACK receiving time window is:

$$tUeEndRcvAck = t0 + UeUlFrameLen + tPropagate * 2 + tStationProcess + tStationDlFrameLen + \delta,$$

where

*tUeEndRcvAck* is the end moment of the ACK receiving time window, *t*0 is a start moment at which the terminal 100 sends the first SLC PDU, *tUeUlFrameLen* is the time length of the physical frame sent by the terminal 100, *tStationDlFrameLen* is the time length of the physical frame sent by the BeiDou network device 200, *tPropagate* is the air interface propagation delay, *tStationProcess* is the signal processing scheduling delay of the BeiDou network device 200, and $\delta$ is the time alignment deviation of sending the physical frame by the BeiDou network device 200.

The following describes some possible implementations performed by BeiDou network device 200.

In a possible implementation, when M is equal to N, the BeiDou network device 200 sends a second ACK to the terminal 100, where the second ACK indicates that the BeiDou network device 200 receives the N SLC PDUs in the first SLC SDU; and the BeiDou network device 200 receives one or more SLC PDUs in a second SLC SDU sent by the terminal 100.

In a possible implementation, when the acknowledgment mode that is jointly indicated by the first total frame quantity field and the first frame sequence number field is a stop and wait acknowledgment mode, the BeiDou network device 200 sends a third ACK to the terminal 100, where the third ACK indicates that the BeiDou network device 200 receives the first SLC PDU; and the BeiDou network device 200 receives a second SLC PDU sent by the terminal 100.

In a possible implementation, in the stop and wait acknowledgment mode, a value of a second frame sequence number field in the second SLC PDU is different from a value of the first frame sequence number field, and a value of a second total frame quantity field is the same as a value of the first total frame quantity field; or a value of a second frame sequence number field is the same as a value of the first frame sequence number field, and a value of a second total frame quantity field is different from a value of the first total frame quantity field; or a value of a second frame sequence number field is different from a value of the first frame sequence number field, and a value of a second total frame quantity field is different from a value of the first total frame quantity field.

In a possible implementation, in the parallel acknowledgment mode, a value of the first total frame quantity field is greater than or equal to a value of the first frame sequence number field.

In a possible implementation, in the stop and wait acknowledgment mode, the value of the first total frame quantity field is less than the value of the first frame sequence number field.

In a possible implementation, in the parallel acknowledgment mode, the BeiDou network device 200 determines a remaining time length of an SLC PDU receiving window based on the frame sequence number of the first SLC PDU, the total quantity of SLC PDUs in the first SLC SDU, a receiving moment of the first SLC PDU, a frame interval at which the terminal 100 sends a physical frame, and a time length of the physical frame sent by the terminal 100.

The BeiDou network device 200 determines the remaining time length of the SLC PDU receiving window according to the following formula:

$$\mathrm{tStationRevWindow} = \mathrm{tStaRevRctSP} + (\mathrm{nUeTotalFrameNum}\text{-}\mathrm{nRevFrameSN}\text{-}1) * (\mathrm{tUeTxInterval} + \mathrm{tUeUlFrameLen}),$$

where

*tStationRevWindow* is the remaining time length of the SLC PDU receiving window, *tStaRevRetSP* is the receiving moment of the first SLC PDU, *tStaRevRetSP* is the total quantity of SLC PDUs in the first SLC SDU, *nRevFrameSN* is the frame sequence number of the first SLC PDU, *tUeTxInterval* is the frame interval at which the terminal 100 sends a physical frame, and *tUeUlFrameLen* is the time length of the physical frame sent by the terminal 100.

In a possible implementation, in the parallel acknowledgment mode, the BeiDou network device 200 determines, based on the remaining time length of the SLC PDU receiving window and a signal processing scheduling delay of the BeiDou network device 200, a time point for sending an ACK.

The BeiDou network device 200 determines, according to the following formula, the time point for sending the ACK:

$$tStationSendAck = tStationRevWindow + tStationProcess + \delta,$$

where

*tStationSendAck* is the time point at which the BeiDou network device 200 sends the ACK, *tStationRevWindow* is the remaining time length of the SLC PDU receiving window, *tStationProcess* is the signal processing scheduling delay of the BeiDou network device 200, and $\delta$ is a sending time alignment deviation of an outbound physical frame on the BeiDou network device 200.

According to the multi-frame integrated transmission method in the BeiDou communication system provided in embodiments of this application. Therefore, in the BeiDou communication system, the transmit end may negotiate the acknowledgment mode with the receive end based on the total frame quantity field and the frame sequence number field that are in the frame header information of the data frame. In this way, when the transmit end negotiates the acknowledgment mode with the receive end, additional frame header cell overheads and control signaling overheads may not be required.

The foregoing content describes in detail the methods provided in this application. To better implement the foregoing solutions in embodiments of this application, embodiments of this application further provide corresponding apparatuses or devices.

In embodiments of this application, the terminal 100 may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

The following describes in detail communication apparatuses in embodiments of this application with reference to FIG. 18 to FIG. 21.

When an integrated unit is used, refer to FIG. 18. FIG. 18 is a schematic diagram of a structure of a communication apparatus 1800 according to an embodiment of this application. The communication apparatus 1800 may be the terminal 100 in the foregoing embodiments. Optionally, the communication apparatus 1800 may be a chip/chip system, for example, a BeiDou communication chip. As shown in FIG. 18, the communication apparatus 1800 may include a transceiver unit 1810 and a processing unit 1820.

In a design, the transceiver unit 1810 may be configured to send a first SLC PDU to a BeiDou network device 200.

Frame header information of the first SLC PDU includes a first total frame quantity field and a first frame sequence number field, and the first total frame quantity field and the first frame sequence number field jointly indicate an acknowledgment mode that the terminal requests the BeiDou network device to use.

The transceiver unit 1810 is further configured to: the acknowledgment mode that is jointly indicated by the first total frame quantity field and the first frame sequence number field is a parallel acknowledgment mode, receive a first ACK returned by the BeiDou network device 200. The first ACK indicates a frame sequence number of an SLC PDU that is in the first SLC SDU and that is not received by the BeiDou network device. In the parallel acknowledgment mode, the first total frame quantity field indicates the total quantity N of the SLC PDUs in the first SLC SDU, and the first frame sequence number field indicates a frame sequence number of the first SLC PDU in the first SLC SDU.

The processing unit 1820 may be configured to determine, based on the first ACK, the SLC PDU that is in the first SLC SDU and that is not received by the BeiDou network device 200.

The transceiver unit 1810 is further configured to resend, to the BeiDou network device 200, the SLC PDU that is in the first SLC SDU and that is not received by the BeiDou network device 200.

Optionally, the transceiver unit 1810 may be further configured to perform function steps related to sending and receiving that are performed by the terminal 100 in the method embodiment shown in FIG. 17.

Optionally, the processing unit 1820 may be further configured to perform function steps related to protocol parsing and encapsulation and operation determining that are performed by the terminal 100 in the method embodiment shown in FIG. 17.

It should be understood that the communication apparatus 1800 in this design may correspondingly perform the method steps performed by the terminal 100 in the foregoing embodiment. For brevity, details are not described herein again.

When an integrated unit is used, refer to FIG. 19. FIG. 19 is a schematic diagram of a structure of a communication apparatus 1900 according to an embodiment of this application. The communication apparatus 1900 may be the BeiDou network device 200 in the foregoing embodiments. Optionally, the communication apparatus 1900 may be a specific network element in the BeiDou network device 200, for example, one network element or a combination of a plurality of network elements in a BeiDou ground transceiver station 22, a BeiDou central station 23, and a BeiDou short packet converged communication platform 24. As shown in FIG. 19, the communication apparatus 1900 may include a transceiver unit 1910 and a processing unit 1920.

In a design, the transceiver unit 1910 may be configured to receive a first SLC PDU sent by a terminal 100, where frame header information of the first SLC PDU includes a first total frame quantity field and a first frame sequence number field, and the first total frame quantity field and the first frame sequence number field jointly indicate an acknowledgment mode that the terminal 100 requests the BeiDou network device 200 to use.

The transceiver unit 1910 is further configured to: when the acknowledgment mode that is jointly indicated by the first total frame quantity field and the first frame sequence number field is a parallel acknowledgment mode, continue to receive an SLC PDU in a first SLC SDU sent by the terminal 100. In the parallel acknowledgment mode, the first total frame quantity field indicates the total quantity N of the SLC PDUs in the first SLC SDU, and the first frame sequence number field indicates a frame sequence number of the first SLC PDU in the first SLC SDU.

The processing unit 1920 may be configured to generate a first ACK based on frame header information of received M SLC PDUs of the first SLC SDU.

The transceiver unit 1910 is further configured to: when M is less than N, send the first ACK to the terminal 100, where M is a positive integer, and the first ACK indicates a frame sequence number of an SLC PDU that is in the N SLC PDUs of the first SLC SDU and that is not received by the BeiDou network device 200.

The transceiver unit 1910 is further configured to receive the SLC PDU that is resent by the terminal 100 and that is in the first SLC SDU and that is not received by the BeiDou network device.

Optionally, the transceiver unit 1910 may be further configured to perform function steps related to sending and receiving that are performed by the BeiDou network device 200 in the method embodiment shown in FIG. 11.

Optionally, the processing unit 1920 may be further configured to perform function steps related to protocol parsing and encapsulation and operation determining that are performed by the BeiDou network device 200 in the method embodiment shown in FIG. 11.

It should be understood that the communication apparatus 1900 in this design may correspondingly perform the method steps performed by the BeiDou network device 200 in the foregoing embodiment. For brevity, details are not described herein again.

The terminal 100 and the BeiDou network device 200 in embodiments of this application are described above. It should be understood that a product in any form that has a function of the terminal 100 in FIG. 18 or a product in any form that has a function of the BeiDou network device 200 in FIG. 19 shall fall within the protection scope of embodiments of this application.

In a possible product form, the terminal 100 in embodiments of this application may be implemented by using general bus architectures.

FIG. 20 is a schematic diagram of a structure of a communication apparatus 2000 according to an embodiment of this application. The communication apparatus 2000 may be the terminal 100 or an apparatus in the terminal 100. As shown in FIG. 20, the communication apparatus 2000 includes a processor 2001 and a transceiver 2002 that is internally connected to and communicates with the processor. The processor 2001 is a general-purpose processor, a dedicated processor, or the like. For example, the processor 2001 may be a baseband processor or a central processing unit for satellite communication. The baseband processor for satellite communication may be configured to process a satellite communication protocol and satellite communication data, and the central processing unit may be configured to control a communication apparatus (for example, a baseband chip, a terminal, a terminal chip, and the like), execute a computer program, and process data of the computer program. The transceiver 2002 may be referred to as a transceiver unit, a transceiver, a transceiver circuit, or the like, and is configured to implement a transceiver function. The transceiver 2002 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 2000 may further include an antenna 2003 and/or a radio frequency unit (not shown in the figure). The antenna 2003 and/or the radio frequency unit may be located inside the communication apparatus 2000, or may be separated from the communication apparatus 2000. In other words, the antenna 2003 and/or the radio frequency unit may be deployed remotely or in a distributed manner.

Optionally, the communication apparatus 2000 may include one or more memories 2004. The memory 2004 may store instructions. The instructions may be a computer program. The computer program may be run on the communication apparatus 2000, so that the communication apparatus 2000 is enabled to perform the method described in the foregoing method embodiments. Optionally, the memory 2004 may further store data. The communication apparatus 2000 and the memory 2004 may be separately disposed, or may be integrated together.

The processor 2001, the transceiver 2002, and the memory 2004 may be connected through a communication bus.

In a design, the communication apparatus 2000 may be configured to perform a function of the terminal 100 in the foregoing embodiment. The processor 2001 may be configured to perform function steps related to protocol parsing and encapsulation and operation determining that are performed by the terminal 100 in the embodiment shown in FIG. 17, and/or another process used in the technology described in this specification. The transceiver 2002 may be configured to perform function steps related to sending and receiving that are performed by the terminal 100 in the embodiment shown in FIG. 17, and/or another process used in the technology described in this specification.

In any one of the foregoing designs, the processor 2001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to send or transfer a signal.

In any one of the foregoing designs, the processor 2001 may store instructions. The instructions may be a computer program. The computer program is run on the processor 2001, so that the communication apparatus 2000 is enabled to perform the method steps performed by the terminal 100 in the foregoing method embodiments. The computer program may be fixed in the processor 2000. In this case, the processor 2001 may be implemented by hardware.

In an implementation, the communication apparatus 2000 may include a circuit, and the circuit may implement a sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 20. The communication apparatus 2000 may be an independent device or may be a part of a large device. For example, the communication apparatus 2000 may be:

(1) an independent integrated circuit IC, a chip, or a chip system or subsystem;
(2) a set including one or more ICs, where optionally, the set of ICs may further include a storage component configured to store data and a computer program;
(3) an ASIC such as a modem (Modem);

(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, any network element (for example, the BeiDou ground transceiver station 22, the BeiDou central station 23, and the BeiDou short packet converged communication platform 24) in the BeiDou network device 200 in embodiments of this application may be implemented by using a general bus architecture.

FIG. 21 is a schematic diagram of a structure of a communication apparatus 2100 according to an embodiment of this application. The communication apparatus 2100 may be the BeiDou network device 200 or an apparatus in the BeiDou network device 200. As shown in FIG. 21, the communication apparatus 2100 includes a processor 2101 and a transceiver 2102 that is internally connected to and communicates with the processor. The processor 2101 is a general-purpose processor, a dedicated processor, or the like. For example, the processor 2101 may be a baseband processor or a central processing unit for satellite communication. The baseband processor for satellite communication may be configured to process a satellite communication protocol and satellite communication data, and the central processing unit may be configured to control a communication apparatus (for example, a baseband chip, and the like), execute a computer program, and process data of the computer program. The transceiver 2102 may be referred to as a transceiver unit, a transceiver, a transceiver circuit, or the like, and is configured to implement a transceiver function. The transceiver 2102 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 2100 may further include an antenna 2103 and/or a radio frequency unit (not shown in the figure). The antenna 2103 and/or the radio frequency unit may be located inside the communication apparatus 2100, or may be separated from the communication apparatus 2100. In other words, the antenna 2103 and/or the radio frequency unit may be deployed remotely or in a distributed manner.

Optionally, the communication apparatus 2100 may include one or more memories 2104. The memory 2104 may store instructions. The instructions may be a computer program. The computer program may be run on the communication apparatus 2100, so that the communication apparatus 2100 is enabled to perform the method described in the foregoing method embodiments. Optionally, the memory 2104 may further store data. The communication apparatus 2100 and the memory 2104 may be separately disposed, or may be integrated together.

The processor 2101, the transceiver 2102, and the memory 2104 may be connected through a communication bus.

In a design, the communication apparatus 2100 may be configured to perform a function of the BeiDou network device 200 in the foregoing embodiment. The processor 2101 may be configured to perform function steps related to protocol parsing and encapsulation and operation determining that are performed by the BeiDou network device 200 in the embodiment shown in FIG. 17, and/or another process used in the technology described in this specification. The transceiver 2102 may be configured to perform function steps related to sending and receiving that are performed by the BeiDou network device 200 in the embodiment shown in FIG. 17, and/or another process used in the technology described in this specification.

In any one of the foregoing designs, the processor 2101 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to send or transfer a signal.

In any one of the foregoing designs, the processor 2101 may store instructions. The instructions may be a computer program. The computer program is run on the processor 2101, so that the communication apparatus 2100 is enabled to perform the method steps performed by the terminal 100 in the foregoing method embodiments. The computer program may be fixed in the processor 2101. In this case, the processor 2101 may be implemented by hardware.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a BeiDou communication system, including a terminal 100 and a BeiDou network device 200. The terminal 100 and the BeiDou network device 200 may perform the method in any one of the foregoing embodiments.

In this application, a short packet communication function in a BeiDou communication system is described in detail. It may be understood that another satellite system may also have a short packet communication function. Therefore, this is not limited to the BeiDou communication system. If another satellite system also supports a short packet communication function, the method described in this application is also applicable to communication of the another satellite system.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

Persons skilled in the art should be aware that in the foregoing one or more examples, functions described in this application may be implemented by hardware, software, firmware, or any combination thereof. When the functions are implemented by software, the foregoing functions may be stored in a computer-readable medium or sent as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose computer or a special-purpose computer.

The foregoing embodiments are merely intended for describing the technical solutions of this application, but not for limiting this application, that is limited by the appended claims.

## Claims

1. A multi-frame integrated transmission method in a satellite communication system, that supports a short packet communication function, comprising:

    sending (S1701), by a terminal, a first satellite link control layer protocol data unit SLC PDU to a satellite network device, that supports a short packet communication function, wherein frame header information of the first SLC PDU comprises a first total frame quantity field and a first frame sequence number field, and the first total frame quantity field and the first frame sequence number field jointly indicate an acknowledgment mode that the terminal requests the satellite network device to use; and

    when (S1702) the acknowledgment mode that is jointly indicated by the first total frame quantity field and the first frame sequence number field is a parallel acknowledgment mode, and the terminal receives a first acknowledgment character ACK sent by the satellite network device, resending (S1705), by the terminal to the satellite network device, an SLC PDU that is in a first SLC SDU and that is not received by the satellite network device, wherein

    the first ACK indicates a frame sequence number of the SLC PDU that is in N SLC PDUs of the first satellite link control layer service data unit SLC SDU and that is not received by the satellite network device, the N SLC PDUs of the first SLC SDU comprise the first SLC PDU, the first total frame quantity field indicates a total quantity N of SLC PDUs in the first SLC SDU, and the first frame sequence number field indicates a frame sequence number of the first SLC PDU in the first SLC SDU.

2. The method according to claim 1, wherein the method further comprises:
   when the acknowledgment mode that is jointly indicated by the first total frame quantity field and the first frame sequence number field is the parallel acknowledgment mode, and the terminal receives a second ACK sent by the satellite network device, sending, by the terminal, one or more SLC PDUs in a second SLC SDU to the satellite network device, wherein the second ACK indicates that the satellite network device receives the N SLC PDUs in the first SLC SDU.

**3.** The method according to claim 1, wherein the method further comprises:
when the acknowledgment mode that is jointly indicated by the first total frame quantity field and the first frame sequence number field is the parallel acknowledgment mode, and the terminal does not receive, in an ACK receiving time window after sending the N SLC PDUs in the first SLC SDU, an ACK sent by the satellite network device, resending, by the terminal, the N SLC PDUs in the first SLC SDU to the satellite network device.

**4.** The method according to claim 1, wherein the method further comprises:

when the acknowledgment mode that is jointly indicated by the first total frame quantity field and the first frame sequence number field is a stop and wait acknowledgment mode, receiving, by the terminal, a third ACK sent by the satellite network device, wherein the third ACK indicates that the satellite network device receives the first SLC PDU; and
sending, by the terminal, a second SLC PDU to the satellite network device.

**5.** The method according to claim 1, wherein the method further comprises:
when the acknowledgment mode that is jointly indicated by the first total frame quantity field and the first frame sequence number field is a stop and wait acknowledgment mode, and the terminal does not receive, in an ACK receiving time window after sending the first SLC PDU, an ACK sent by the satellite network device, resending, by the terminal, the first SLC PDU to the satellite network device.

**6.** The method according to claim 4, wherein a value of a second frame sequence number field in the second SLC PDU is different from a value of the first frame sequence number field, and a value of a second total frame quantity field is the same as a value of the first total frame quantity field; or

a value of a second frame sequence number field is the same as a value of the first frame sequence number field, and a value of a second total frame quantity field is different from a value of the first total frame quantity field; or
a value of a second frame sequence number field is different from a value of the first frame sequence number field, and a value of a second total frame quantity field is different from a value of the first total frame quantity field.

**7.** The method according to any one of claims 1 to 3, wherein a value of the first total frame quantity field is greater than or equal to a value of the first frame sequence number field.

**8.** The method according to any one of claims 4 to 6, wherein the value of the first total frame quantity field is less than the value of the first frame sequence number field.

**9.** The method according to any one of claims 1 to 3 or claim 7, wherein the method further comprises:

determining, by the terminal, a start moment of the ACK receiving time window based on a moment at which the terminal completes sending a last SLC PDU in the first SLC SDU, duration of switching the terminal from a transmitting state to a receiving state, an air interface propagation delay, and a signal processing scheduling delay of the satellite network device; and
starting, by the terminal at the start moment of the ACK receiving time window, to receive the ACK sent by the satellite network device.

**10.** The method according to claim 9, wherein a formula for determining, by the terminal, the start moment of the ACK receiving time window is:

$$tUeTxEnd + \mathit{tTx2RxSwitch} < tUeStartRcvAck < tUeTxEnd + 2 * \mathit{tPropagate} + \mathit{tStationProcess},$$

wherein
tUeStartRcvAck is the start moment of the ACK receiving time window, tUeTxEnd is the moment at which the terminal completes sending the last SLC PDU in the first SLC SDU, t *Tx2RxSwitch* is the duration of switching the terminal from the transmitting state to the receiving state, tPropagate is the air interface propagation delay, and tStationProcess is the signal processing scheduling delay of the satellite network device.

**11.** The method according to any one of claims 1 to 3 or claim 7, wherein the method further comprises:

determining, by the terminal, an end moment of the ACK receiving time window based on a time length of a physical frame sent by the terminal, an air interface propagation delay, a signal processing scheduling delay of the satellite network device, a time length of a physical frame sent by the satellite network device, and a time alignment deviation of sending the physical frame by the satellite network device; and
stopping, by the terminal at the end moment of the ACK receiving time window, receiving the ACK sent by the satellite network device.

**12.** The method according to claim 11, wherein a formula for determining, by the terminal, the end moment of the ACK receiving time window is:

$$tUeEndRcvAck = tUeTxEnd + tUeUlFrameLen + 2 * tPropagate + tStationProcess + tStationD1FrameLen + \delta,$$

wherein
tUeEndRcvAck is the end moment of the ACK receiving time window, tUeUlFrameLen is the time length of the physical frame sent by the terminal, tPropagate is the air interface propagation delay, tStationProcess is the signal processing scheduling delay of the satellite network device, *tStationD1FrameLen* is the time length of the physical frame sent by the satellite network device, and δ is the time alignment deviation of sending the physical frame by the satellite network device.

**13.** The method according to any one of claims 4 to 6 or claim 8, wherein the method further comprises:

determining, by the terminal, a start moment of the ACK receiving time window based on a start moment at which the terminal sends the first SLC PDU, a time length of a physical frame sent by the terminal, duration of switching the terminal from a transmitting state to a receiving state, an air interface propagation delay, and a signal processing scheduling delay of the satellite network device; and
starting, by the terminal at the start moment of the ACK receiving time window, to receive the ACK sent by the satellite network device.

**14.** A communication apparatus, comprising one or more processors, one or more memories, and a transceiver, wherein the transceiver and the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 13.

**15.** A computer-readable storage medium, wherein the computer-readable storage medium stores instructions, and when the instructions are run on a computer, the computer is enabled to perform the method according to any one of claims 1 to 13.

## Patentansprüche

**1.** Integriertes Mehrfachrahmen-Übertragungsverfahren in einem Satellitenkommunikationssystem, das eine Kurzpaketkommunikationsfunktion unterstützt, umfassend:

Senden (S1701), durch ein Endgerät, einer ersten Satellitenverbindungssteuerungsschicht-Protokolldateneinheit, SLC PDU, an ein Satellitennetzwerkgerät, das eine Kurzpaketkommunikationsfunktion unterstützt,
wobei die Rahmenkopfdateninformationen der ersten SLC PDU ein erstes Gesamtrahmenanzahlfeld und ein erstes Rahmensequenznummernfeld umfassen und das erste Gesamtrahmenanzahlfeld und das erste Rahmensequenznummernfeld gemeinsam einen Bestätigungsmodus anzeigen, zu dessen Verwendung das Satellitennetzwerkgerät von dem Endgerät aufgefordert wird; und
wenn (S1702) der Bestätigungsmodus, der gemeinsam durch das erste Gesamtrahmenanzahlfeld und das erste Rahmensequenznummernfeld angezeigt wird, ein paralleler Bestätigungsmodus ist und das Endgerät ein erstes Bestätigungszeichen, ACK, empfängt, das durch das Satellitennetzwerkgerät gesendet wird, erneutes Senden (S1705), durch das Endgerät an das Satellitennetzwerkgerät, einer SLC PDU, die sich in einer ersten SLC SDU befindet und die nicht durch das Satellitennetzwerkgerät empfangen wird, wobei

das erste ACK eine Rahmensequenznummer der SLC PDU anzeigt, die sich in N SLC PDUs der ersten Satellitenverbindungssteuerungsschicht-Dienstdateneinheit, SLC SDU, befindet und nicht durch das Satellitennetzwerkgerät empfangen wird, die N SLC PDUs der ersten SLC SDU die erste SLC PDU umfassen, das Gesamtrahmenanzahlfeld eine Gesamtanzahl N von SLC PDUs in der ersten SLC SDU anzeigt und das erste Rahmensequenznummernfeld eine Rahmensequenznummer der ersten SLC PDU in der ersten SLC SDU anzeigt.

**2.** Verfahren nach Anspruch 1, wobei das Verfahren ferner Folgendes umfasst:
wenn der Bestätigungsmodus, der gemeinsam durch das erste Gesamtrahmenanzahlfeld und das erste Rahmensequenznummernfeld angezeigt wird, der parallele Bestätigungsmodus ist und das Endgerät ein zweites ACK empfängt, das durch das Satellitennetzwerkgerät gesendet wurde, Senden, durch das Endgerät, einer oder mehrerer SLC PDUs in einer zweiten SLC SDU an das Satellitennetzwerkgerät, wobei das zweite ACK anzeigt, dass das Satellitennetzwerkgerät die N SLC PDUs in der ersten SLC SDU empfängt.

**3.** Verfahren nach Anspruch 1, wobei das Verfahren ferner Folgendes umfasst:
wenn der Bestätigungsmodus, der gemeinsam durch das erste Gesamtrahmenanzahlfeld und das erste Rahmensequenznummernfeld angezeigt wird, der parallele Bestätigungsmodus ist und das Endgerät in einem ACK-Empfangszeitfenster nach dem Senden der N SLC PDUs in der ersten SLC SDU kein ACK empfängt, das durch das Satellitennetzwerkgerät gesendet wurde, erneutes Senden, durch das Endgerät, der N SLC PDUs in der ersten SLC SDU an das Satellitennetzwerkgerät.

**4.** Verfahren nach Anspruch 1, wobei das Verfahren ferner Folgendes umfasst:

wenn der Bestätigungsmodus, der gemeinsam durch das erste Gesamtrahmenanzahlfeld und das erste Rahmensequenznummernfeld angezeigt wird, ein Stop-and-Wait-Bestätigungsmodus ist, Empfangen, durch das Endgerät, eines dritten ACK, das durch das Satellitennetzwerkgerät gesendet wurde, wobei das dritte ACK anzeigt, dass das Satellitennetzwerkgerät die erste SLC PDU empfängt; und
Senden, durch das Endgerät, einer zweiten SLC PDU an das Satellitennetzwerkgerät.

**5.** Verfahren nach Anspruch 1, wobei das Verfahren ferner Folgendes umfasst:
wenn der Bestätigungsmodus, der gemeinsam durch das erste Gesamtrahmenanzahlfeld und das erste Rahmensequenznummernfeld angezeigt wird, ein Stop-and-Wait-Bestätigungsmodus ist und das Endgerät in einem ACK-Empfangszeitfenster nach dem Senden der ersten SLC PDU kein ACK empfängt, das durch das Satellitennetzwerkgerät gesendet wurde, erneutes Senden, durch das Endgerät, der ersten SLC PDU an das Satellitennetzwerkgerät.

**6.** Verfahren nach Anspruch 4, wobei sich ein Wert eines zweiten Rahmensequenznummernfelds in der zweiten SLC PDU von einem Wert des ersten Rahmensequenznummernfelds unterscheidet und ein Wert eines zweiten Gesamtrahmenanzahlfelds der gleiche wie ein Wert des ersten Gesamtrahmenanzahlfelds ist; oder

ein Wert eines zweiten Rahmensequenznummernfelds der gleiche wie ein Wert des ersten Rahmensequenznummernfelds ist und sich ein Wert eines zweiten Gesamtrahmenanzahlfelds von einem Wert des ersten Gesamtrahmenanzahlfelds unterscheidet; oder
sich ein Wert eines zweiten Rahmensequenznummernfelds von einem Wert des ersten Rahmensequenznummernfelds unterscheidet und sich ein Wert eines zweiten Gesamtrahmenanzahlfelds von einem Wert des ersten Gesamtrahmenanzahlfelds unterscheidet.

**7.** Verfahren nach einem der Ansprüche 1 bis 3, wobei ein Wert des ersten Gesamtrahmenanzahlfelds größer als oder gleich einem Wert des ersten Rahmensequenznummernfelds ist.

**8.** Verfahren nach einem der Ansprüche 4 bis 6, wobei der Wert des ersten Gesamtrahmenanzahlfelds kleiner als der Wert des ersten Rahmensequenznummernfelds ist.

**9.** Verfahren nach einem der Ansprüche 1 bis 3 oder Anspruch 7, wobei das Verfahren ferner Folgendes umfasst:

Bestimmen, durch das Endgerät, eines Startzeitpunkts des ACK-Empfangszeitfensters basierend auf einem Zeitpunkt, zu dem das Endgerät Senden einer letzten SLC PDU in der ersten SLC SDU abschließt, einer Dauer des Umschaltens des Endgeräts von einem Übertragungszustand in einen Empfangszustand, einer Luftschnittstellenausbreitungsverzögerung und einer Signalverarbeitungsplanungsverzögerung des Satellitennetzwerkgeräts; und
Starten, durch das Endgerät zum Startzeitpunkt des ACK-Empfangszeitfensters, das ACK, das durch das Satellitennetzwerkgerät gesendet wird, zu empfangen.

**10.** Verfahren nach Anspruch 9, wobei eine Formel zum Bestimmen, durch das Endgerät, des Startzeitpunkts des ACK-Empfangszeitfensters wie folgt lautet:

tUeTxEnd + *tTx2RxSwitch* < tUeStartRcvAck < tUeTxEnd +2* *tPropagate* + *tStationProcess,* wobei tUeStartRcvAck der Startzeitpunkt des ACK-Empfangszeitfensters ist, tUeTxEnd der Zeitpunkt ist, zu dem das Endgerät das Senden der letzten SLC PDU in der ersten SLC SDU abschließt, *tTx2RxSwitch* die Dauer des Umschaltens des Endgeräts von dem Übertragungszustand in den Empfangszustand ist, tPropagate die Luftschnittstellenausbreitungsverzögerung ist und tStationProcess die Signalverarbeitungsplanungsverzögerung des Satellitennetzwerkgeräts ist.

**11.** Verfahren nach einem der Ansprüche 1 bis 3 oder Anspruch 7, wobei das Verfahren ferner Folgendes umfasst:

Bestimmen, durch das Endgerät, eines Endzeitpunkts des ACK-Empfangszeitfensters basierend auf einer Zeitlänge eines physischen Rahmens, der durch das Endgerät gesendet wird, einer Luftschnittstellenausbreitungsverzögerung, einer Signalverarbeitungsplanungsverzögerung des Satellitennetzwerkgeräts, einer Zeitlänge eines physischen Rahmens, der durch das Satellitennetzwerkgerät gesendet wird, und einer Abweichung der zeitlichen Ausrichtung des Sendens des physischen Rahmens durch das Satellitennetzwerkgerät; und
Anhalten, durch das Endgerät zum Endzeitpunkt des ACK-Empfangszeitfensters, des Empfangens des ACK, das durch das Satellitennetzwerkgerät gesendet wird.

**12.** Verfahren nach Anspruch 11, wobei eine Formel zum Bestimmen, durch das Endgerät, des Endzeitpunkts des ACK-Empfangszeitfensters wie folgt lautet:

$$tUeEnd\,R\,cvAck = tUeTxEnd + tUeU1Frame\,L\,en + 2^* tPropagate + tStationProcess + tStationD1FrameLen + \delta,$$

wobei
t*UeE*nd*R*cv*A*ck der Endzeitpunkt des ACK-Empfangszeitfensters ist, t*UeU*1*F*rame*L*en die Zeitlänge des physischen Rahmens ist, der durch das Endgerät gesendet wird, t*P*ropagate die Luftschnittstellenausbreitungsverzögerung ist, t*S*tation*P*rocess die Signalverarbeitungsplanungsverzögerung des Satellitennetzwerkgeräts ist, *tStationD*1*F*rame*Len* die Zeitlänge des physischen Rahmens ist, der durch das Satellitennetzwerkgerät gesendet wird, und δ die Abweichung der zeitlichen Ausrichtung des Sendens des physischen Rahmens durch das Satellitennetzwerkgerät ist.

**13.** Verfahren nach einem der Ansprüche 4 bis 6 oder Anspruch 8, wobei das Verfahren ferner Folgendes umfasst:

Bestimmen, durch das Endgerät, eines Startzeitpunkts des ACK-Empfangszeitfensters basierend auf einem Startzeitpunkt, zu dem das Endgerät die erste SLC PDU sendet, einer Zeitlänge eines physischen Rahmens, der durch das Endgerät gesendet wird, einer Dauer des Umschaltens des Endgeräts von einem Übertragungszustand in einen Empfangszustand, einer Luftschnittstellenausbreitungsverzögerung und einer Signalverarbeitungsplanungsverzögerung des Satellitennetzwerkgeräts; und
Starten, durch das Endgerät zum Startzeitpunkt des ACK-Empfangszeitfensters, das ACK, das durch das Satellitennetzwerkgerät gesendet wird, zu empfangen.

**14.** Kommunikationsvorrichtung, umfassend einen oder mehrere Prozessoren, einen oder mehrere Speicher und einen Sendeempfänger, wobei der Sendeempfänger und der eine oder die mehreren Speicher an den einen oder die mehreren Prozessoren gekoppelt sind, der eine oder die mehreren Speicher dazu konfiguriert sind, Computerprogrammcode zu speichern, der Computerprogrammcode Computeranweisungen umfasst und, wenn der eine oder die mehreren Prozessoren die Computeranweisungen ausführen, die Kommunikationsvorrichtung in die Lage versetzt wird, das Verfahren nach einem der Ansprüche 1 bis 13 durchzuführen.

**15.** Computerlesbares Speichermedium, wobei das computerlesbare Speichermedium Anweisungen speichert und, wenn die Anweisungen auf einem Computer laufen, der Computer in die Lage versetzt wird, das Verfahren nach einem der Ansprüche 1 bis 13 durchzuführen.

## Revendications

**1.** Procédé de transmission intégrée multi-trames dans un système de communication par satellite, prenant en charge une fonction de communication par paquets courts, comprenant :

l'envoi (S1701), par un terminal, d'une première unité de données de protocole de couche de commande de liaison satellite SLC PDU à un dispositif de réseau satellite, prenant en charge une fonction de communication par paquets courts,
dans lequel les informations d'en-tête de trame de la première SLC PDU comprennent un premier champ de quantité totale de trames et un premier champ de numéro de séquence de trames, et le premier champ de quantité totale de trames et le premier champ de numéro de séquence de trames indiquent conjointement un mode d'accusé de réception que le terminal demande au dispositif de réseau satellite d'utiliser ; et
lorsque (S1702) le mode d'accusé de réception indiqué conjointement par le premier champ de quantité totale de trames et le premier champ de numéro de séquence de trames est un mode d'accusé de réception parallèle, et que le terminal reçoit un premier caractère d'accusé de réception ACK envoyé par le dispositif de réseau satellite, le renvoi (S1705), par le terminal au dispositif de réseau satellite, d'une SLC PDU qui se trouve dans une première SLC SDU et qui n'est pas reçue par le dispositif de réseau satellite, dans lequel
le premier ACK indique un numéro de séquence de trame de la SLC PDU qui se trouve dans N SLC PDU de la première unité de données de service de couche de commande de liaison par satellite SLC SDU et qui n'est pas reçu par le dispositif de réseau satellite, les N SLC PDU de la première SLC SDU comprennent la première SLC PDU, le premier champ de quantité totale de trames indique une quantité totale N de SLC PDU dans la première SLC SDU, et le premier champ de numéro de séquence de trames indique un numéro de séquence de trame de la première SLC PDU dans la première SLC SDU.

**2.** Procédé selon la revendication 1, dans lequel le procédé comprend également :
lorsque le mode d'accusé de réception indiqué conjointement par le premier champ de quantité totale de trames et le premier champ de numéro de séquence de trames est le mode d'accusé de réception parallèle, et que le terminal reçoit un deuxième ACK envoyé par le dispositif de réseau satellite, l'envoi, par le terminal, d'une ou de plusieurs SLC PDU dans une seconde SLC SDU au dispositif de réseau satellite, dans lequel le deuxième ACK indique que le dispositif de réseau satellite reçoit les N SLC PDU dans la première SLC SDU.

**3.** Procédé selon la revendication 1, dans lequel le procédé comprend également :
lorsque le mode d'accusé de réception indiqué conjointement par le premier champ de quantité totale de trames et le premier champ de numéro de séquence de trames est le mode d'accusé de réception parallèle, et que le terminal ne reçoit pas, dans une fenêtre de temps de réception d'ACK après l'envoi des N SLC PDU dans la première SLC SDU, de ACK envoyé par le dispositif de réseau satellite, le renvoi, par le terminal, des N SLC PDU dans la première SLC SDU au dispositif de réseau satellite.

**4.** Procédé selon la revendication 1, dans lequel le procédé comprend également :

lorsque le mode d'accusé de réception indiqué conjointement par le premier champ de quantité totale de trames et le premier champ de numéro de séquence de trames est un mode d'accusé de réception d'arrêt et d'attente, la réception, par le terminal, d'un troisième ACK envoyé par le dispositif de réseau satellite, dans lequel le troisième ACK indique que le dispositif de réseau satellite reçoit la première SLC PDU ; et
l'envoi, par le terminal, d'une seconde SLC PDU au dispositif de réseau satellite.

**5.** Procédé selon la revendication 1, dans lequel le procédé comprend également :
lorsque le mode d'accusé de réception indiqué conjointement par le premier champ de quantité totale de trames et le premier champ de numéro de séquence de trames est le mode d'accusé de réception d'arrêt et d'attente, et que le terminal ne reçoit pas, dans une fenêtre de temps de réception d'ACK après l'envoi de la première SLC PDU, de ACK envoyé par le dispositif de réseau satellite, le renvoi, par le terminal, de la première SLC PDU au dispositif de réseau satellite.

**6.** Procédé selon la revendication 4, dans lequel une valeur d'un second champ de numéro de séquence de trames dans la seconde SLC PDU est différente d'une valeur du premier champ de numéro de séquence de trames, et une valeur d'un second champ de quantité totale de trames est identique à une valeur du premier champ de quantité totale de trames ; ou

une valeur d'un second champ de numéro de séquence de trames est identique à une valeur du premier champ de numéro de séquence de trames, et une valeur d'un second champ de quantité totale de trames est différente d'une valeur du premier champ de quantité totale de trames ; ou
une valeur d'un second champ de numéro de séquence de trames est différente d'une valeur du premier champ de numéro de séquence de trames, et une valeur d'un second champ de quantité totale de trames est différente d'une valeur du premier champ de quantité totale de trames.

**7.** Procédé selon l'une quelconque des revendications 1 à 3, dans lequel une valeur du premier champ de quantité totale de trames est supérieure ou égale à une valeur du premier champ de numéro de séquence de trames.

**8.** Procédé selon l'une quelconque des revendications 4 à 6, dans lequel la valeur du premier champ de quantité totale de trames est inférieure à la valeur du premier champ de numéro de séquence de trames.

**9.** Procédé selon l'une quelconque des revendications 1 à 3 ou de la revendication 7, dans lequel le procédé comprend également :

la détermination, par le terminal, d'un moment de démarrage de la fenêtre de temps de réception d'ACK sur la base d'un moment auquel le terminal termine l'envoi d'une dernière SLC PDU dans la première SLC SDU, de la durée de commutation du terminal d'un état de transmission à un état de réception, d'un délai de propagation d'interface radio et d'un délai de planification de traitement de signal du dispositif de réseau satellite ; et
le démarrage, par le terminal au moment de démarrage de la fenêtre de temps de réception d'ACK, pour recevoir l'ACK envoyé par le dispositif de réseau satellite.

**10.** Procédé selon la revendication 9, dans lequel une formule pour déterminer, par le terminal, le moment de démarrage de la fenêtre de temps de réception d'ACK est :

tUeTxEnd + *tTx2RxSwitch* < tUeStartRcvAck < tUeTxEnd +2* *tPropagate* + *tStationProcess,*

dans laquel
tUeStartRcvAck est le moment de démarrage de la fenêtre de temps lequel de réception d'ACK, tUeTxEnd est le moment auquel le terminal termine l'envoi de la dernière SLC PDU dans la première SLC SDU, *tTx2RxSwitch* est la durée de commutation du terminal de l'état de transmission à l'état de réception, t*P*ropagate est le délai de propagation d'interface radio et t*S*tation*P*rocess est le délai de planification de traitement de signal du dispositif de réseau satellite.

**11.** Procédé selon l'une quelconque des revendications 1 à 3 ou de la revendication 7, dans lequel le procédé comprend également :

la détermination, par le terminal, d'un moment de fin de la fenêtre de temps de réception d'ACK sur la base d'une durée d'une trame physique envoyée par le terminal, d'un délai de propagation d'interface radio, d'un délai de planification de traitement de signal du dispositif de réseau satellite, d'une durée d'une trame physique envoyée par le dispositif de réseau satellite et d'un écart d'alignement temporel d'envoi de la trame physique par le dispositif de réseau satellite ; et
l'arrêt, par le terminal au moment de fin de la fenêtre de temps de réception d'ACK, de la réception de l'ACK envoyé par le dispositif de réseau satellite.

**12.** Procédé selon la revendication 11, dans lequel une formule pour déterminer, par le terminal, le moment de fin de la fenêtre de temps de réception d'ACK est :

$$tUeEnd\ R\ cvAck =$$
$$tUeTx\ End + tUeU1Frame\ L\ en + 2 * tPropagate + tStationProcess + tStationD1FrameLen + \delta,$$

dans lequel
t*UeE*nd*R*cv*A*ck est le moment de fin de la fenêtre de temps de réception d'ACK, t*UeU*1*F*rame*L*en est la durée de la trame physique envoyée par le terminal, t*P*ropagate est le délai de propagation d'interface radio, t*S*tation*P*rocess est le délai de planification de traitement de signal du dispositif de réseau satellite, *tSta-tionD1FrameLen* est la durée de la trame physique envoyée par le dispositif de réseau satellite, et δ est l'écart d'alignement temporel de l'envoi de la trame physique par le dispositif de réseau satellite.

**13.** Procédé selon l'une quelconque des revendications 4 à 6 ou de la revendication 8, dans lequel le procédé comprend également :

la détermination, par le terminal, d'un moment de démarrage de la fenêtre de temps de réception d'ACK sur la base d'un moment de démarrage auquel le terminal envoie la première SLC PDU, d'une durée d'une trame physique envoyée par le terminal, d'une durée de commutation du terminal d'un état de transmission à un état de réception, d'un délai de propagation d'interface radio et d'un délai de planification de traitement de signal du dispositif de réseau satellite ; et
le démarrage, par le terminal au moment de démarrage de la fenêtre de temps de réception d'ACK, pour recevoir l'ACK envoyé par le dispositif de réseau satellite.

**14.** Appareil de communication, comprenant un ou plusieurs processeurs, une ou plusieurs mémoires et un émetteur-récepteur, dans lequel l'émetteur-récepteur et les une ou plusieurs mémoires sont couplées aux un ou plusieurs processeurs, les une ou plusieurs mémoires sont configurées pour stocker un code de programme informatique, le code de programme informatique comprend des instructions informatiques, et lorsque les un ou plusieurs processeurs exécutent les instructions informatiques, l'appareil de communication est activé pour réaliser le procédé selon l'une quelconque des revendications 1 à 13.

**15.** Support de stockage lisible par ordinateur, dans lequel le support de stockage lisible par ordinateur stocke des instructions, et lorsque les instructions sont exécutées sur un ordinateur, l'ordinateur est activé pour réaliser le procédé selon l'une quelconque des revendications 1 à 13.

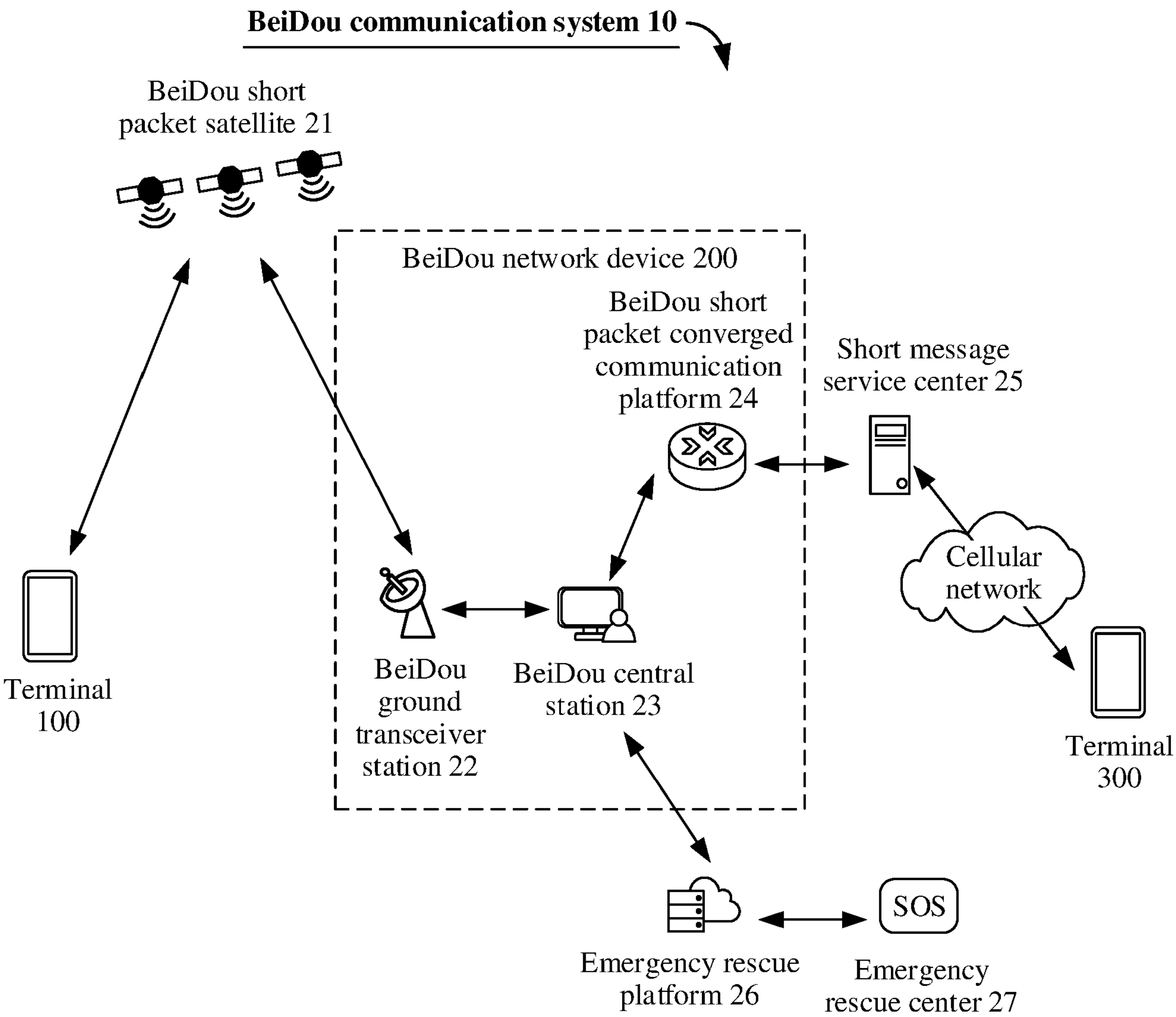
BeiDou communication system 10
BeiDou short packet satellite 21
BeiDou network device 200
BeiDou short packet converged communication platform 24
Short message service center 25
Cellular network
Terminal 100
BeiDou ground transceiver station 22
BeiDou central station 23
Terminal 300
SOS
Emergency rescue platform 26
Emergency rescue center 27

FIG. 1

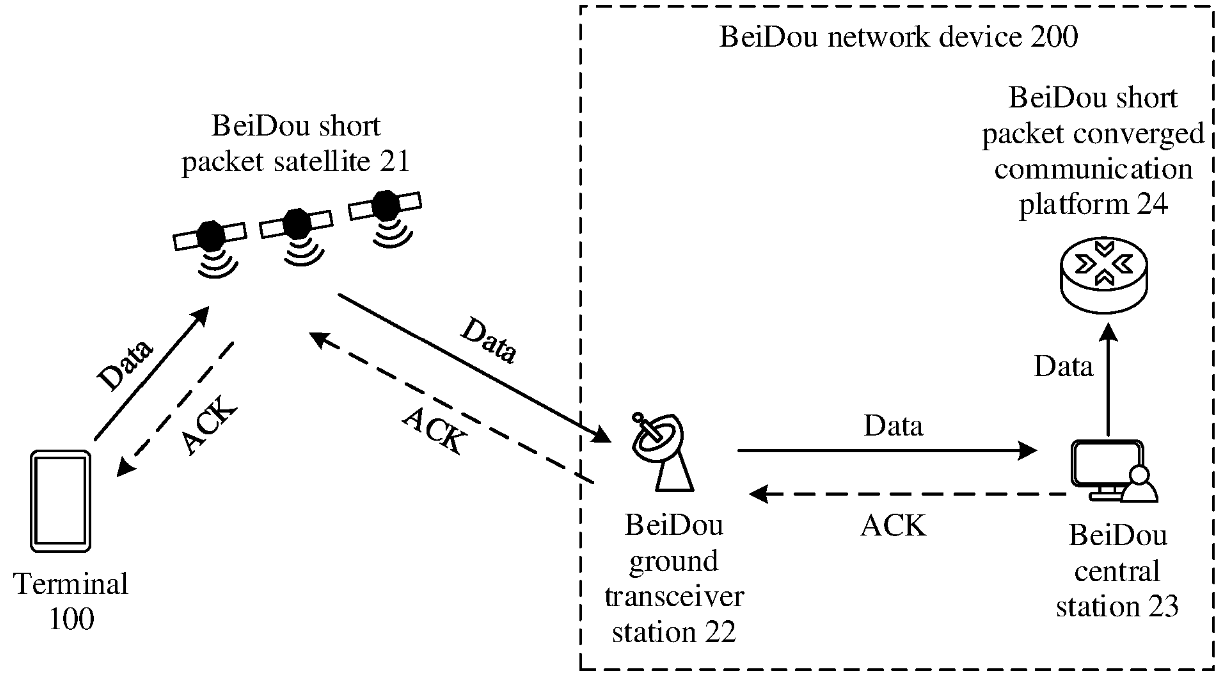
BeiDou network device 200
BeiDou short packet converged communication platform 24
BeiDou short packet satellite 21
Data
ACK
Data
ACK
Data
Data
ACK
Terminal 100
BeiDou ground transceiver station 22
BeiDou central station 23

FIG. 2A

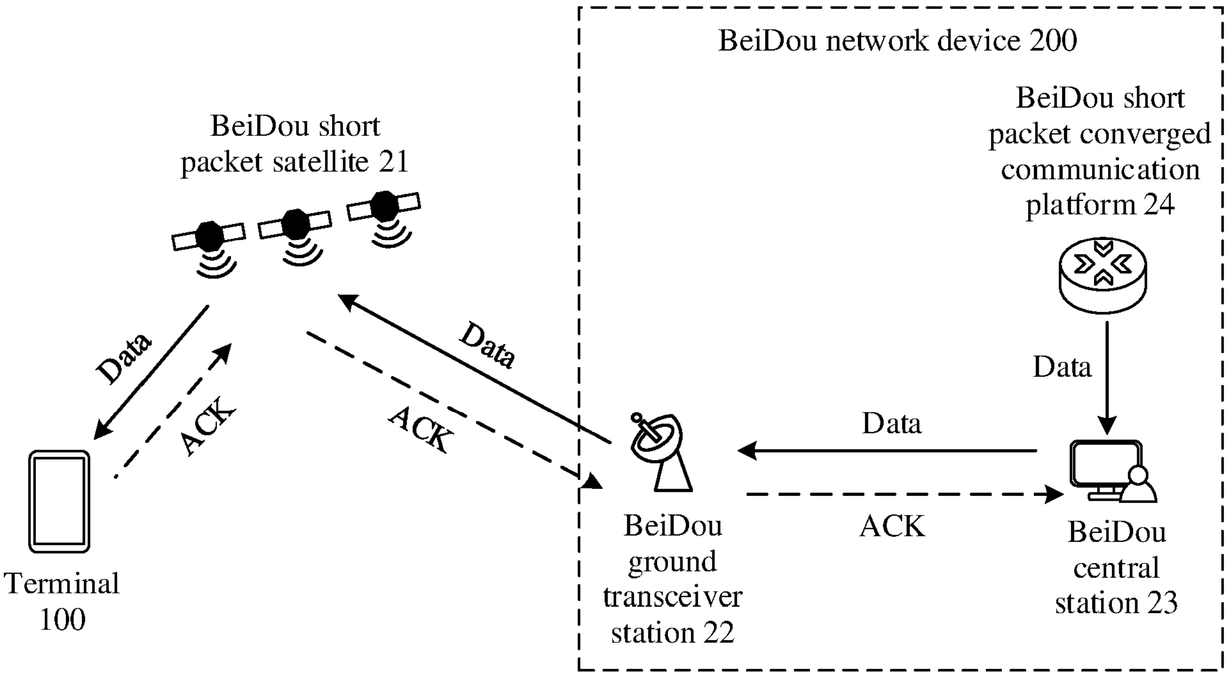
BeiDou network device 200
BeiDou short packet converged communication platform 24
BeiDou short packet satellite 21
Data
ACK
Data
ACK
Data
Data
ACK
Terminal 100
BeiDou ground transceiver station 22
BeiDou central station 23

FIG. 2B

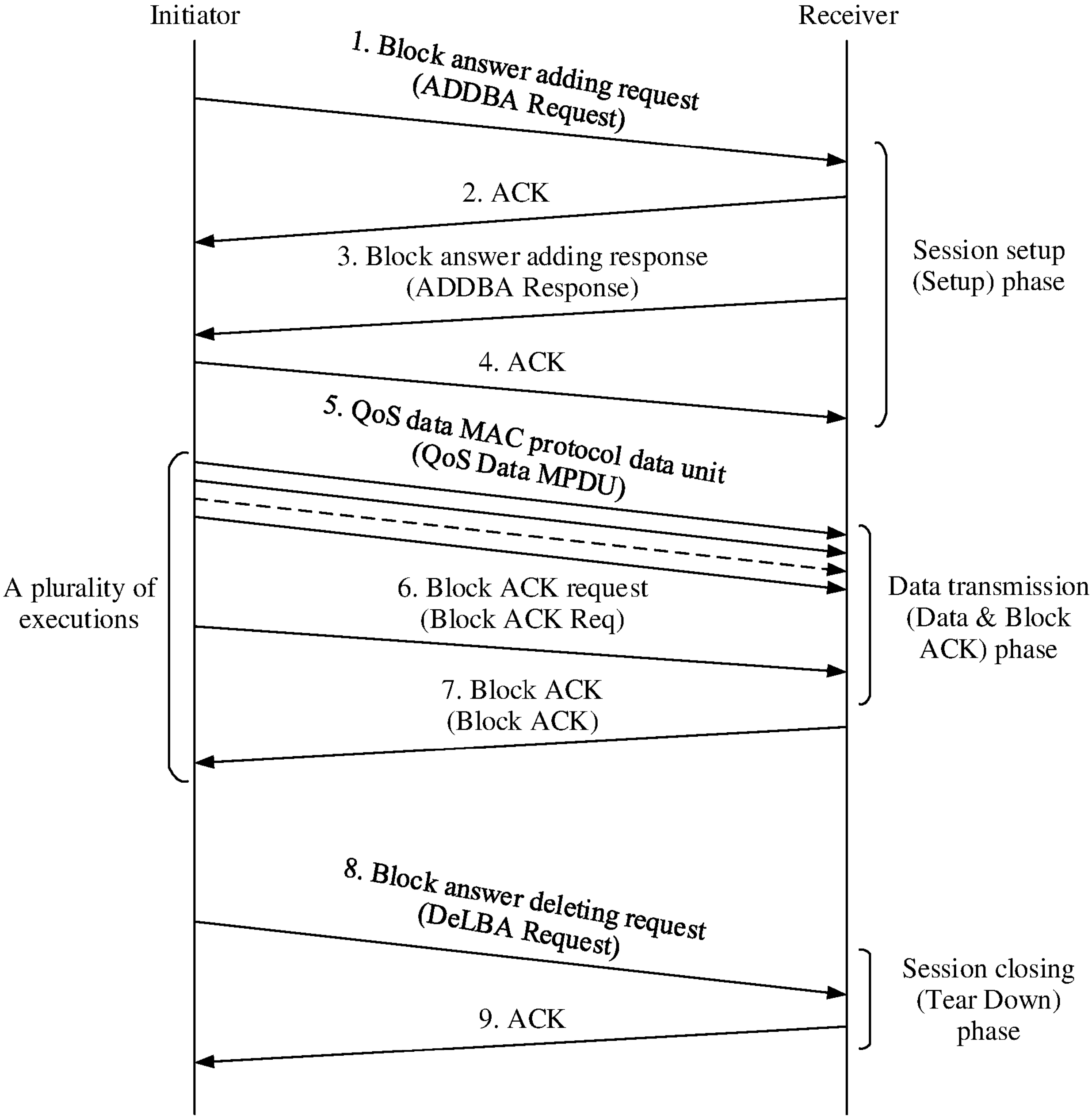
Initiator
Receiver
1. Block answer adding request
(ADDBA Request)
2. ACK
3. Block answer adding response
(ADDBA Response)
4. ACK
Session setup
(Setup) phase
5. QoS data MAC protocol data unit
(QoS Data MPDU)
A plurality of
executions
6. Block ACK request
(Block ACK Req)
Data transmission
(Data & Block
ACK) phase
7. Block ACK
(Block ACK)
8. Block answer deleting request
(DeLBA Request)
Session closing
(Tear Down)
phase
9. ACK

FIG. 3

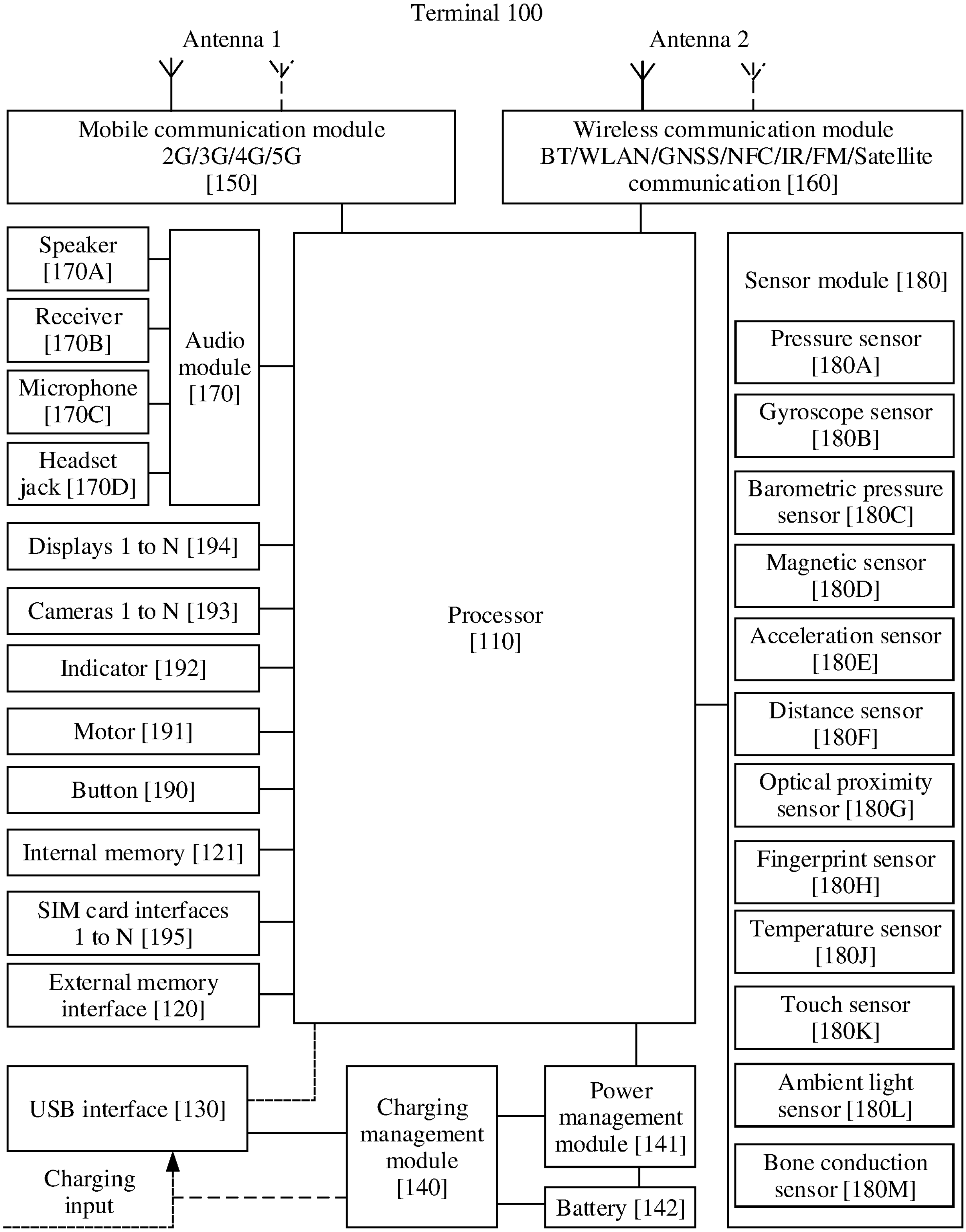
Terminal 100
Antenna 1
Antenna 2
Mobile communication module 2G/3G/4G/5G [150]
Wireless communication module BT/WLAN/GNSS/NFC/IR/FM/Satellite communication [160]
Speaker [170A]
Receiver [170B]
Microphone [170C]
Headset jack [170D]
Audio module [170]
Displays 1 to N [194]
Cameras 1 to N [193]
Indicator [192]
Motor [191]
Button [190]
Internal memory [121]
SIM card interfaces 1 to N [195]
External memory interface [120]
Processor [110]
Sensor module [180]
Pressure sensor [180A]
Gyroscope sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]
USB interface [130]
Charging input
Charging management module [140]
Power management module [141]
Battery [142]

FIG. 4

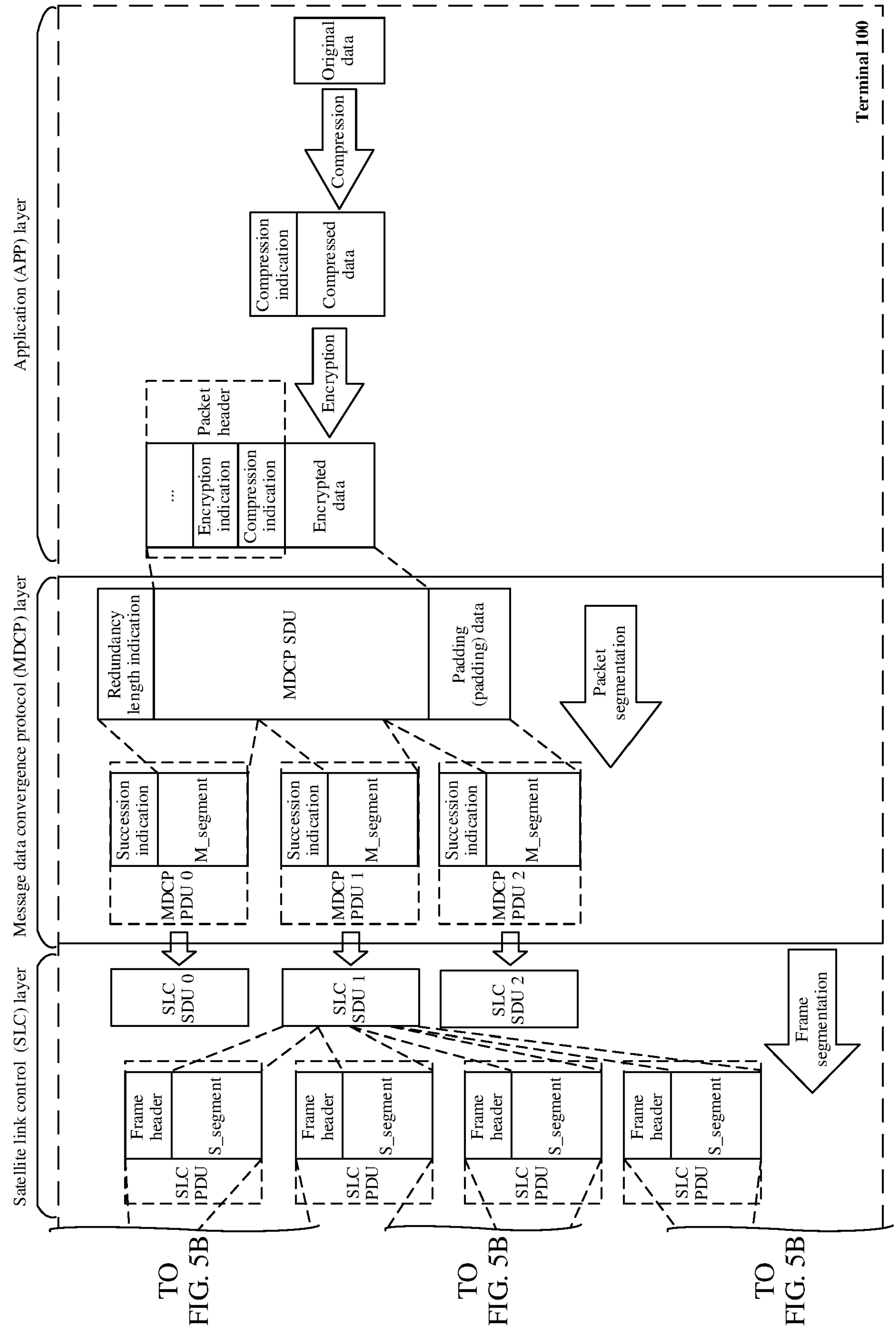
Application (APP) layer
Terminal 100
Original data
Compression
Compression indication
Compressed data
Encryption
Packet header
...
Encryption indication
Compression indication
Encrypted data
Message data convergence protocol (MDCP) layer
Redundancy length indication
MDCP SDU
Padding (padding) data
Packet segmentation
Succession indication
M_segment
MDCP PDU 0
MDCP PDU 1
MDCP PDU 2
Satellite link control (SLC) layer
SLC SDU 0
SLC SDU 1
SLC SDU 2
Frame segmentation
Frame header
S_segment
SLC PDU
TO FIG. 5B
TO FIG. 5B
TO FIG. 5B

FIG. 5A

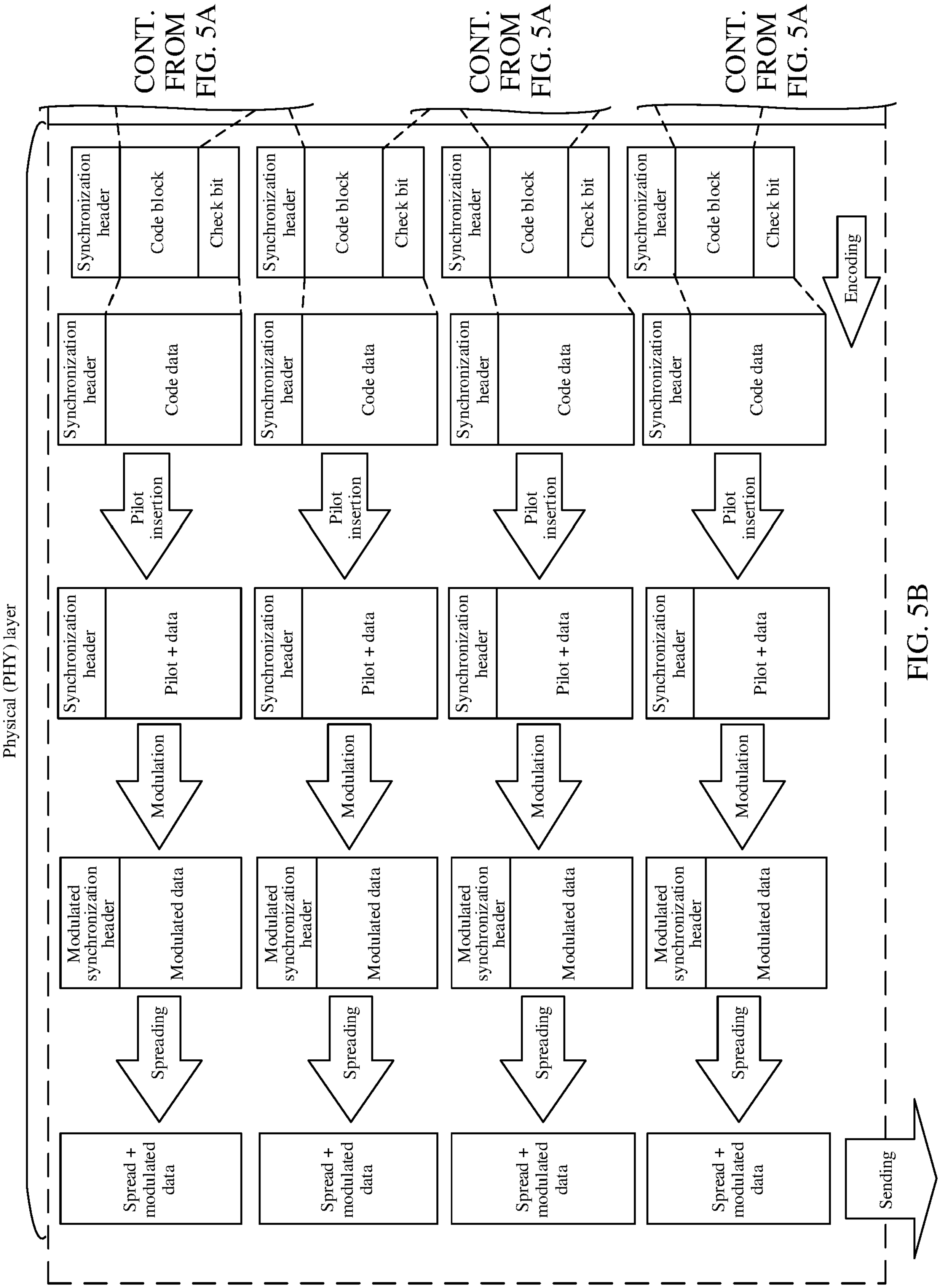
CONT. FROM FIG. 5A
CONT. FROM FIG. 5A
CONT. FROM FIG. 5A
Physical (PHY) layer
Synchronization header
Code block
Check bit
Encoding
Synchronization header
Code data
Pilot insertion
Synchronization header
Pilot + data
Modulation
Modulated synchronization header
Modulated data
Spreading
Spread + modulated data
Sending

FIG. 5B

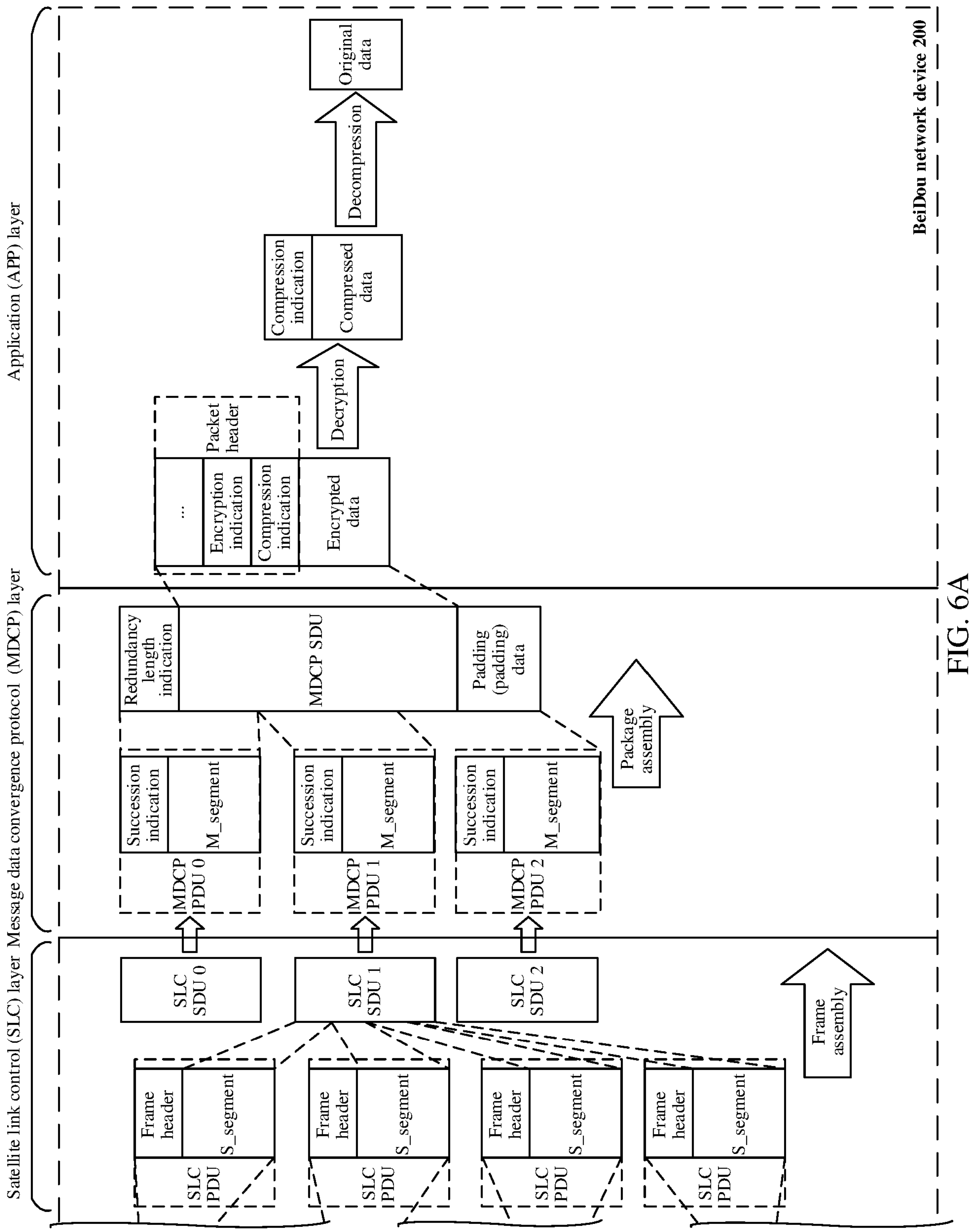


FIG. 6A

TO FIG. 6B

TO FIG. 6B

TO FIG. 6B

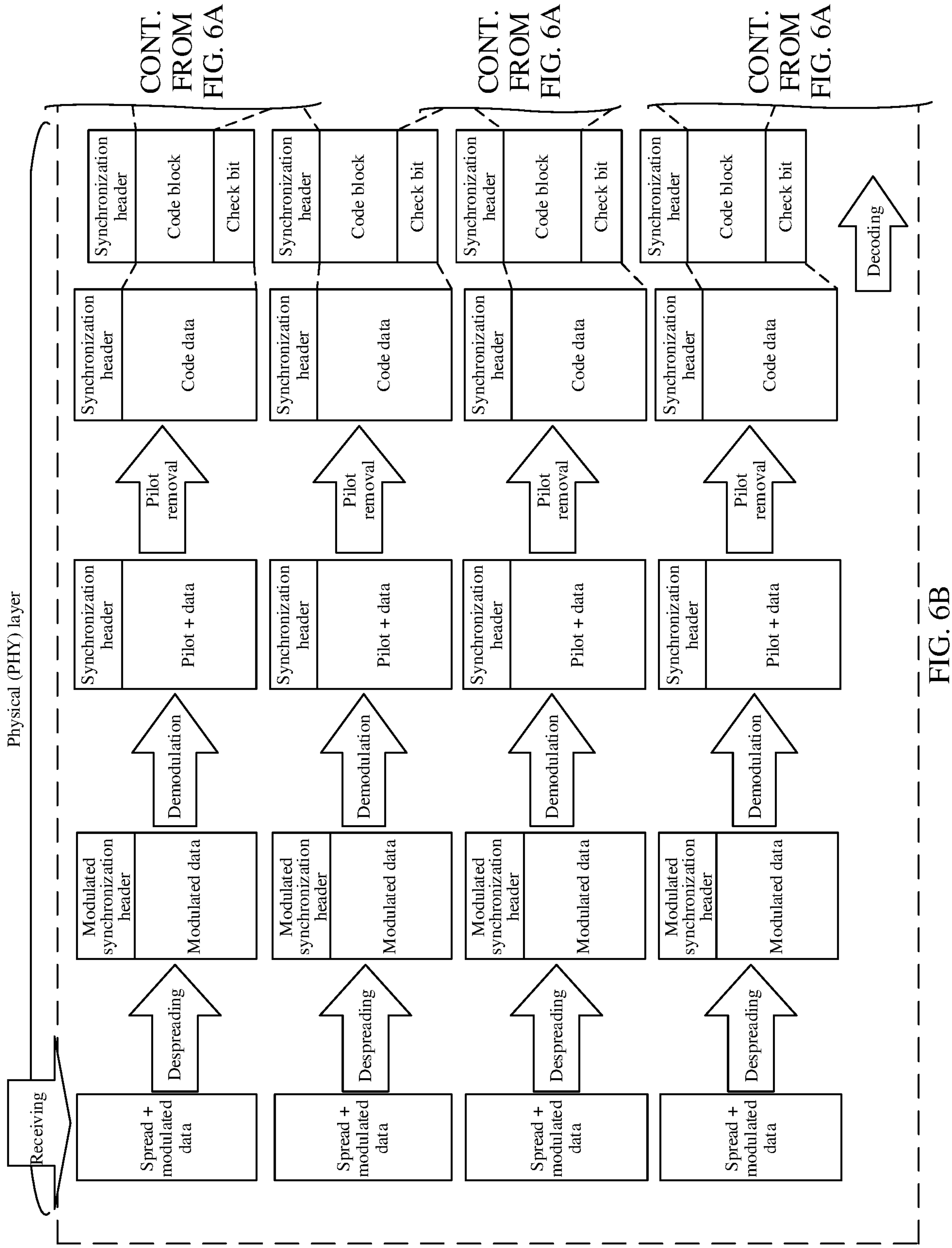
Physical (PHY) layer
Receiving
Spread + modulated data
Despreading
Modulated synchronization header
Modulated data
Demodulation
Synchronization header
Pilot + data
Pilot removal
Synchronization header
Code data
Synchronization header
Code block
Check bit
Decoding
CONT. FROM FIG. 6A
CONT. FROM FIG. 6A
CONT. FROM FIG. 6A

FIG. 6B

TO
FIG. 7B

TO
FIG. 7B

TO
FIG. 7B

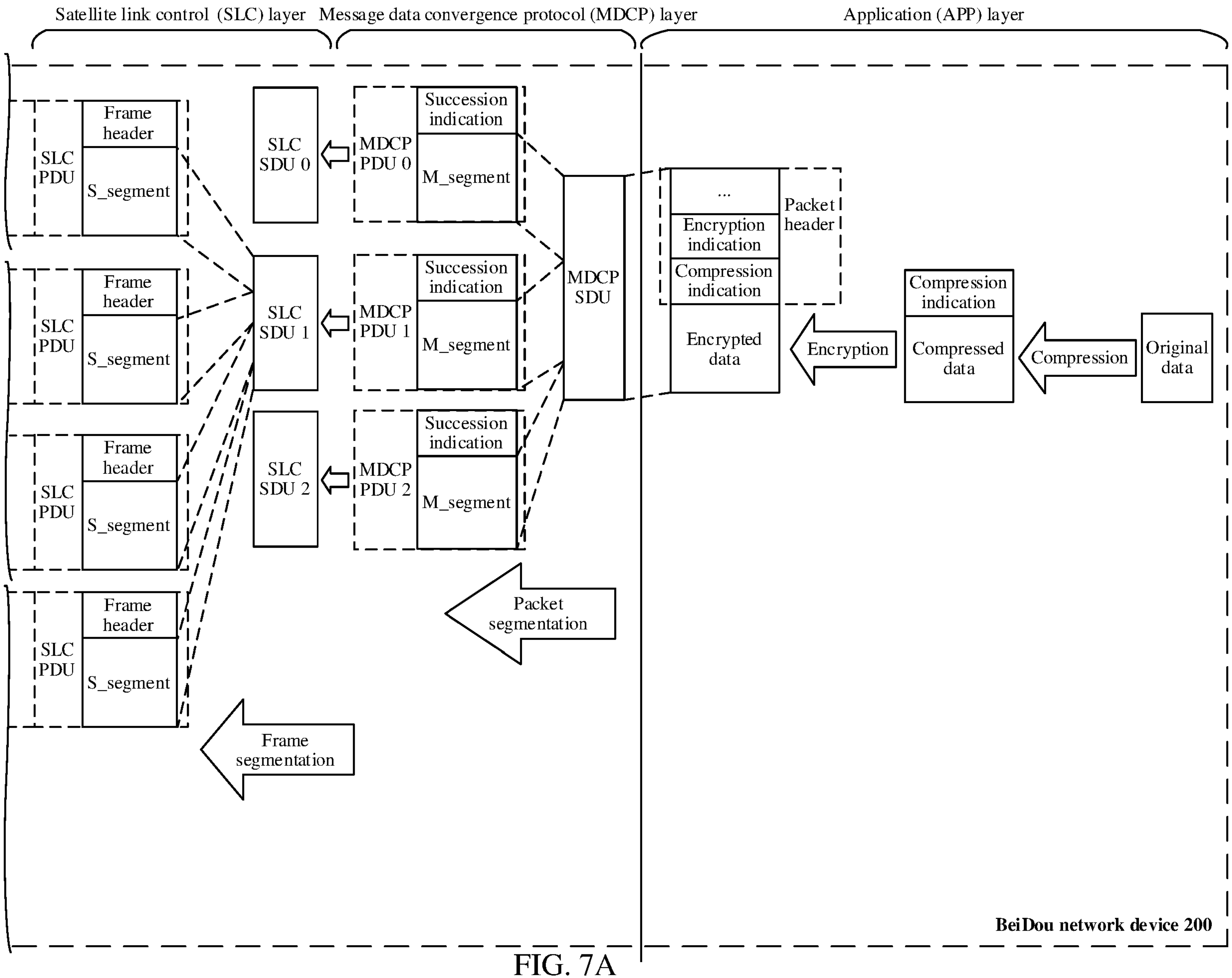


FIG. 7A

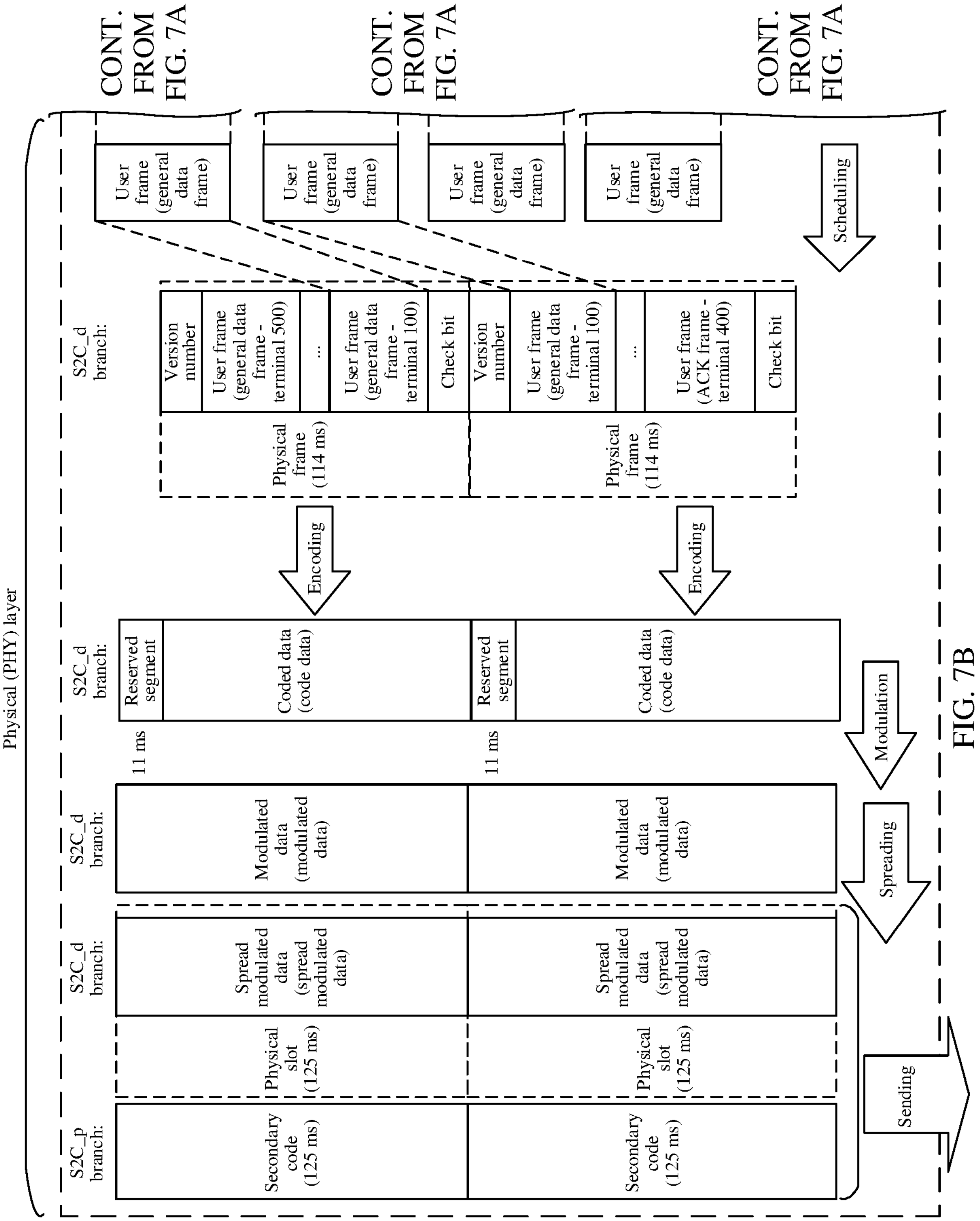
CONT. FROM FIG. 7A
CONT. FROM FIG. 7A
CONT. FROM FIG. 7A
Physical (PHY) layer
S2C_d branch:
User frame (general data frame)
User frame (general data frame)
User frame (general data frame)
User frame (general data frame)
Scheduling
Version number
User frame (general data frame - terminal 500)
...
User frame (general data frame - terminal 100)
Check bit
Version number
User frame (general data frame - terminal 100)
...
User frame (ACK frame - terminal 400)
Check bit
Physical frame (114 ms)
Physical frame (114 ms)
Encoding
Encoding
S2C_d branch:
Reserved segment
Coded data (code data)
Reserved segment
Coded data (code data)
11 ms
11 ms
Modulation
S2C_d branch:
Modulated data (modulated data)
Modulated data (modulated data)
Spreading
S2C_d branch:
Spread modulated data (spread modulated data)
Spread modulated data (spread modulated data)
Physical slot (125 ms)
Physical slot (125 ms)
S2C_p branch:
Secondary code (125 ms)
Secondary code (125 ms)
Sending

FIG. 7B

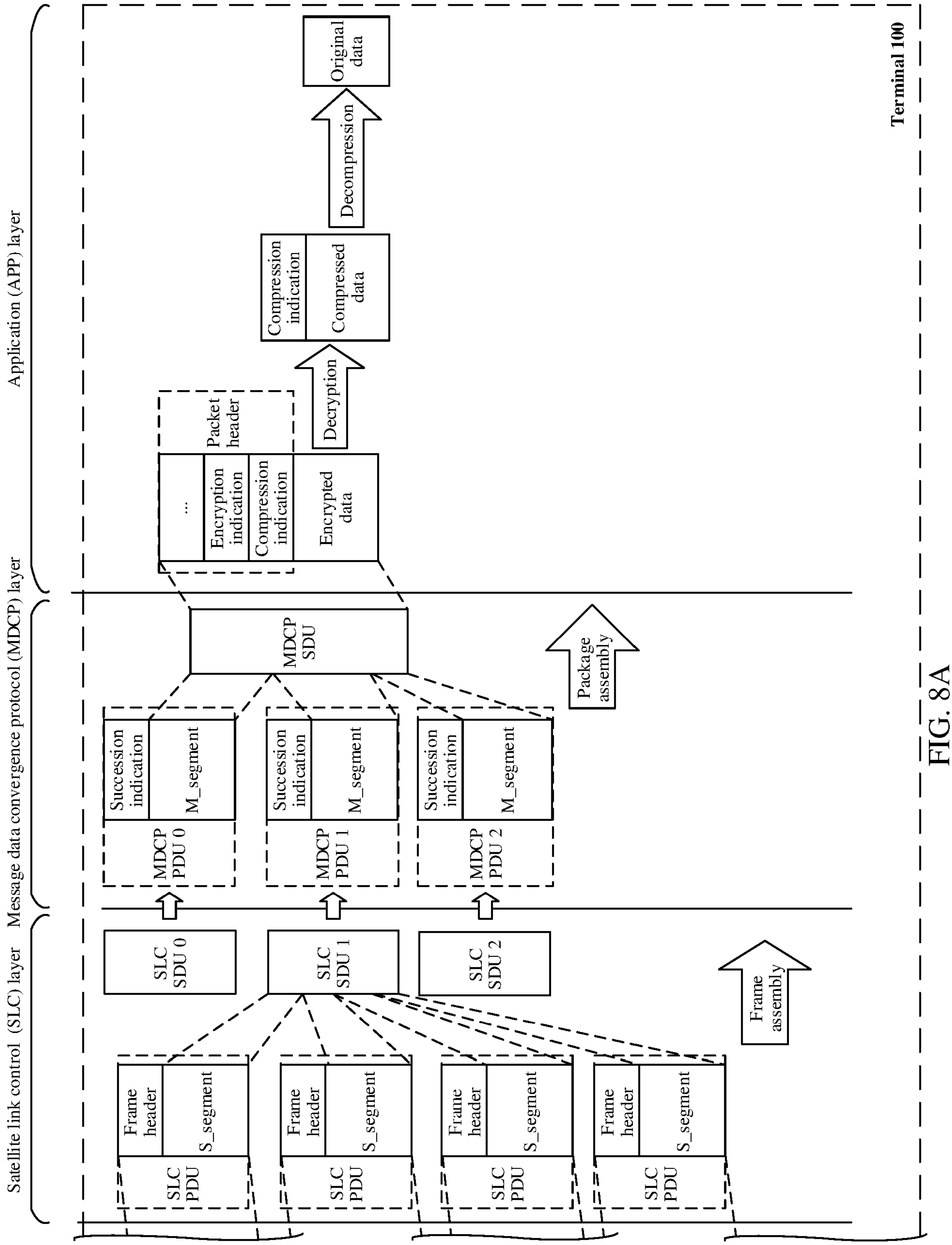


FIG. 8A

TO FIG. 8B
TO FIG. 8B
TO FIG. 8B

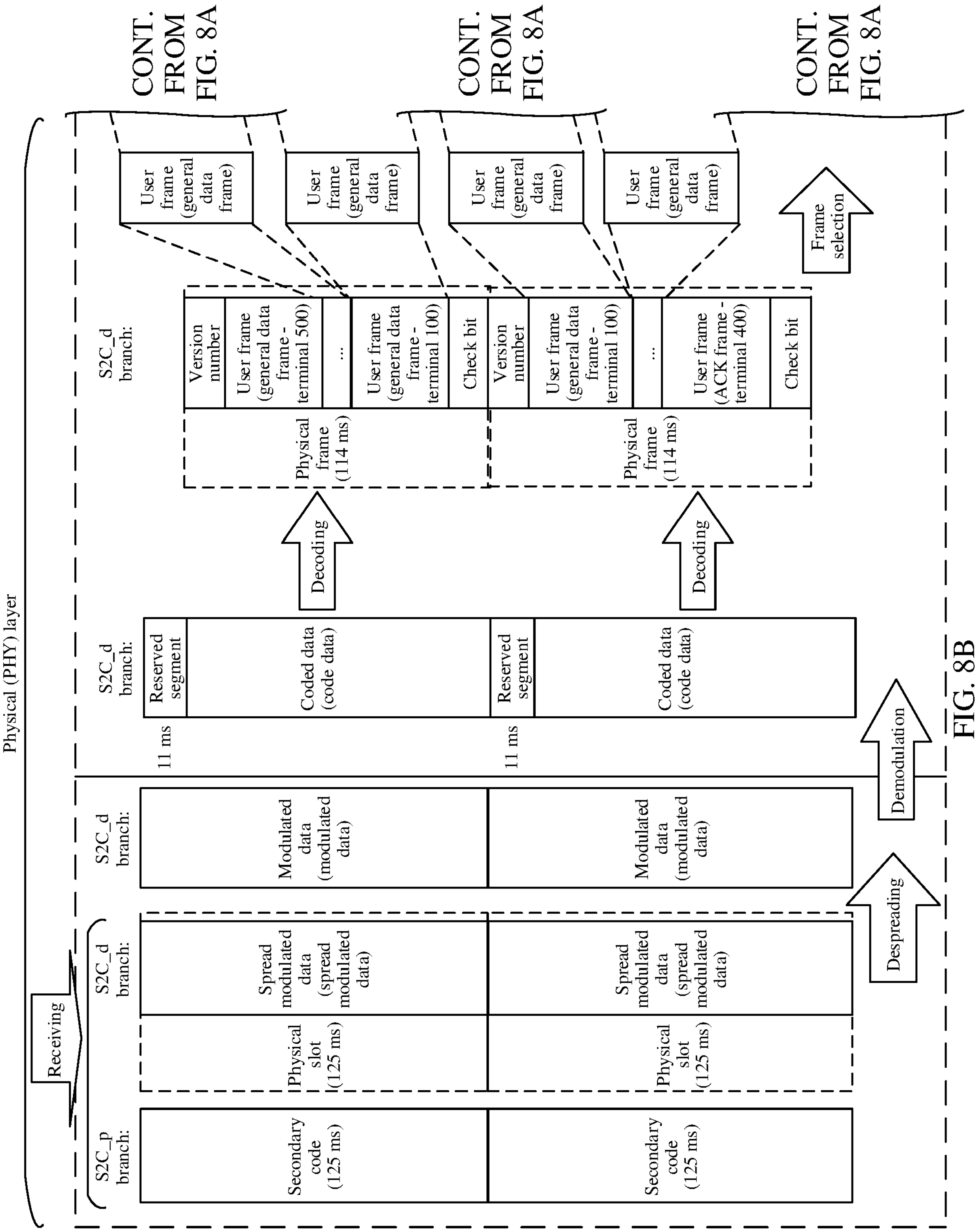

Physical (PHY) layer
Receiving
S2C_p branch:
Secondary code (125 ms)
Secondary code (125 ms)
S2C_d branch:
Physical slot (125 ms)
Spread modulated data (spread modulated data)
Physical slot (125 ms)
Spread modulated data (spread modulated data)
Despreading
S2C_d branch:
Modulated data (modulated data)
Modulated data (modulated data)
Demodulation
S2C_d branch:
11 ms
Reserved segment
Coded data (code data)
11 ms
Reserved segment
Coded data (code data)
Decoding
Decoding
S2C_d branch:
Physical frame (114 ms)
Version number
User frame (general data frame - terminal 500)
...
User frame (general data frame - terminal 100)
Check bit
Physical frame (114 ms)
Version number
User frame (general data frame - terminal 100)
...
User frame (ACK frame - terminal 400)
Check bit
Frame selection
User frame (general data frame)
User frame (general data frame)
User frame (general data frame)
User frame (general data frame)
CONT. FROM FIG. 8A
CONT. FROM FIG. 8A
CONT. FROM FIG. 8A


FIG. 8B

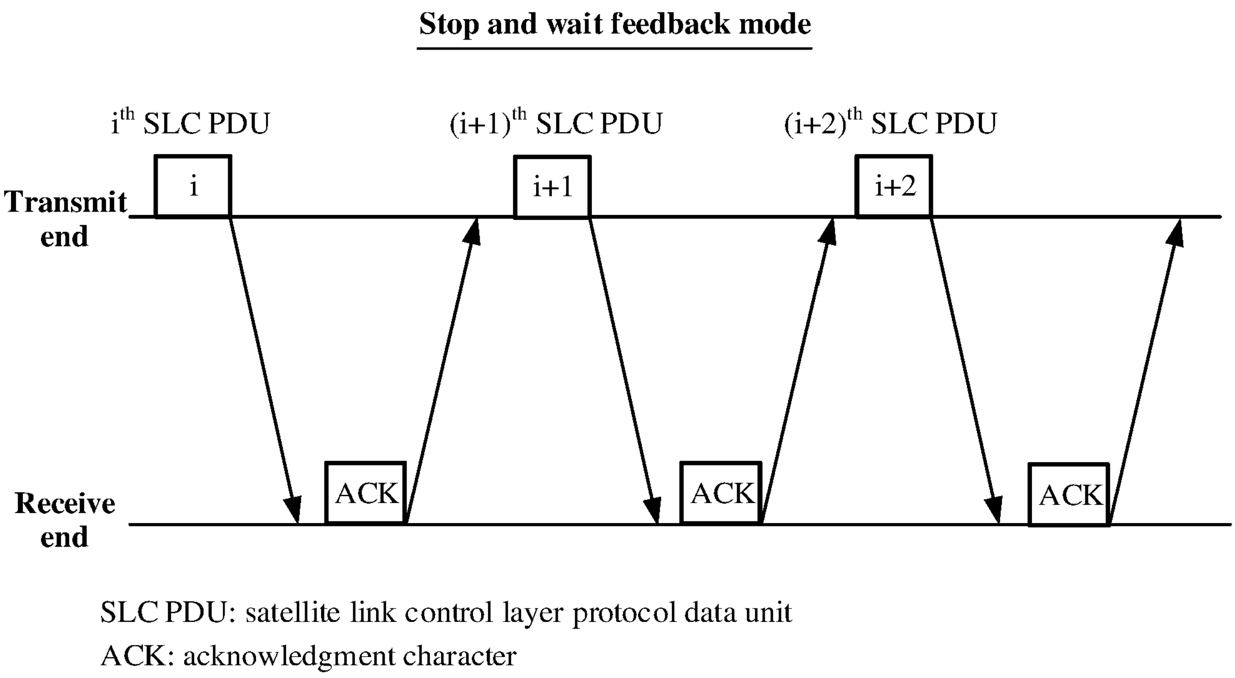
Stop and wait feedback mode
i^th SLC PDU
(i+1)^th SLC PDU
(i+2)^th SLC PDU
i
i+1
i+2
Transmit end
Receive end
ACK
ACK
ACK
SLC PDU: satellite link control layer protocol data unit
ACK: acknowledgment character

FIG. 9

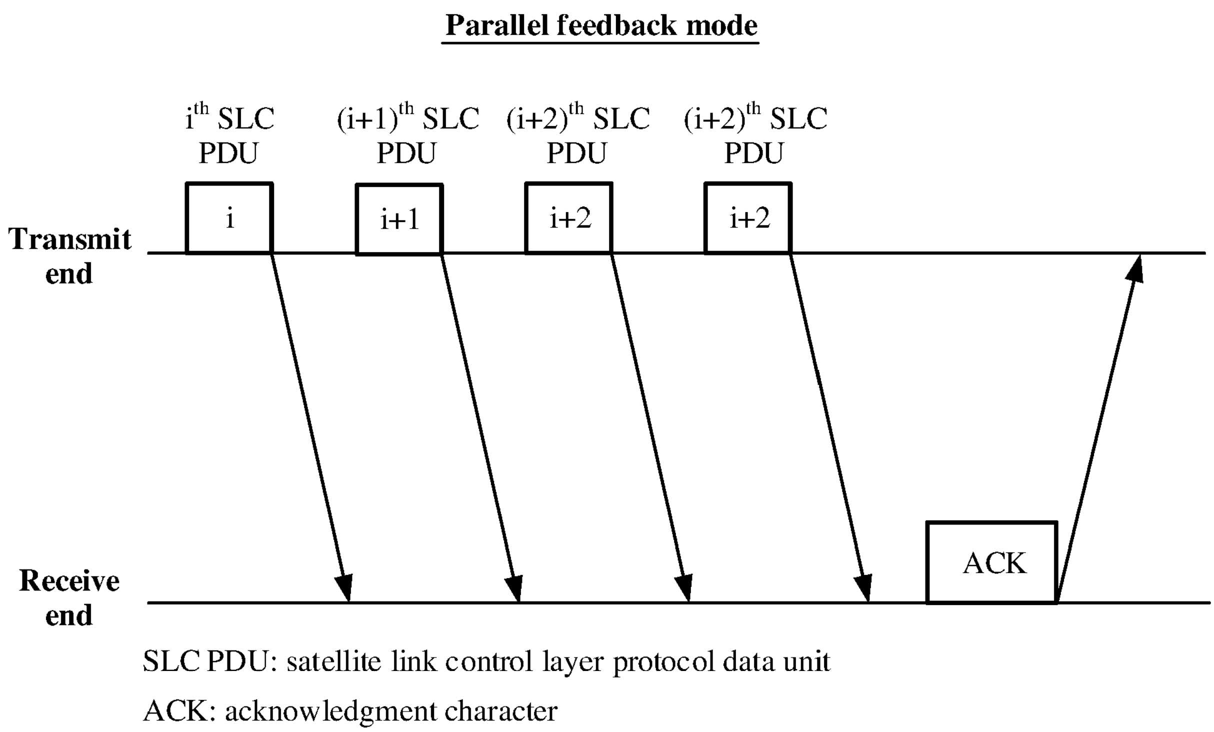
Parallel feedback mode
i^th SLC PDU
(i+1)^th SLC PDU
(i+2)^th SLC PDU
(i+2)^th SLC PDU
i
i+1
i+2
i+2
Transmit end
Receive end
ACK
SLC PDU: satellite link control layer protocol data unit
ACK: acknowledgment character

FIG. 10

**Frame format of an inbound SLC PDU**

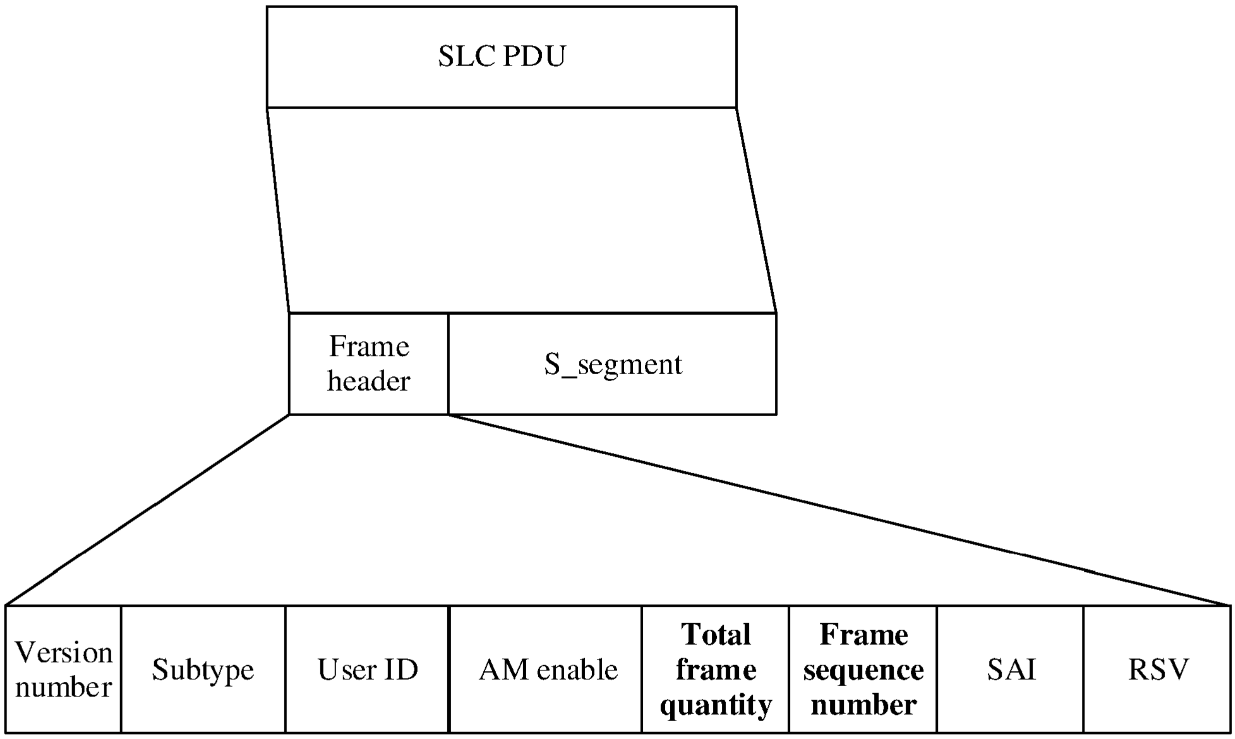


SLC PDU: satellite link control layer protocol data unit

AM enable: acknowledgment mode enable

SAI: service data unit alternated indicator

RSV: reserved

FIG. 11

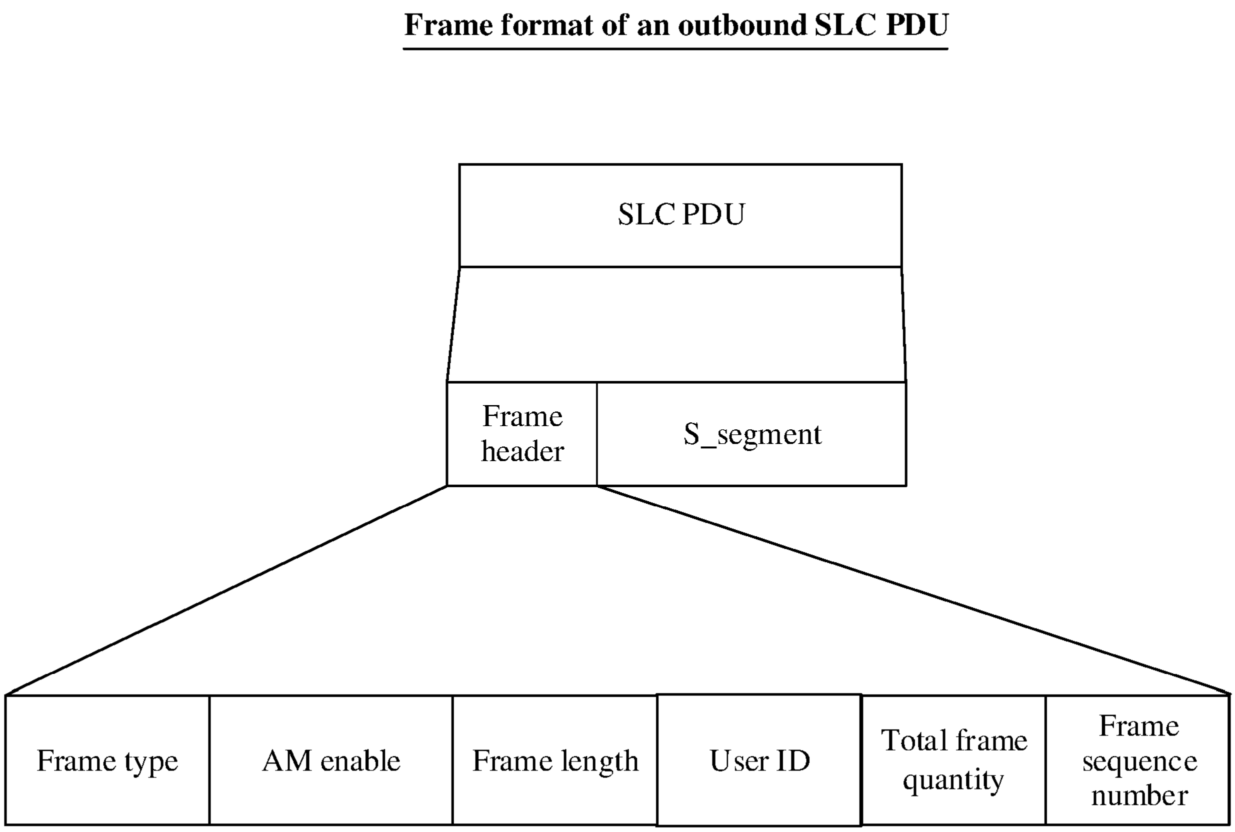


SLC PDU: satellite link control layer protocol data unit

AM enable: acknowledgment mode enable

S_segment: satellite link control layer segment data

FIG. 12

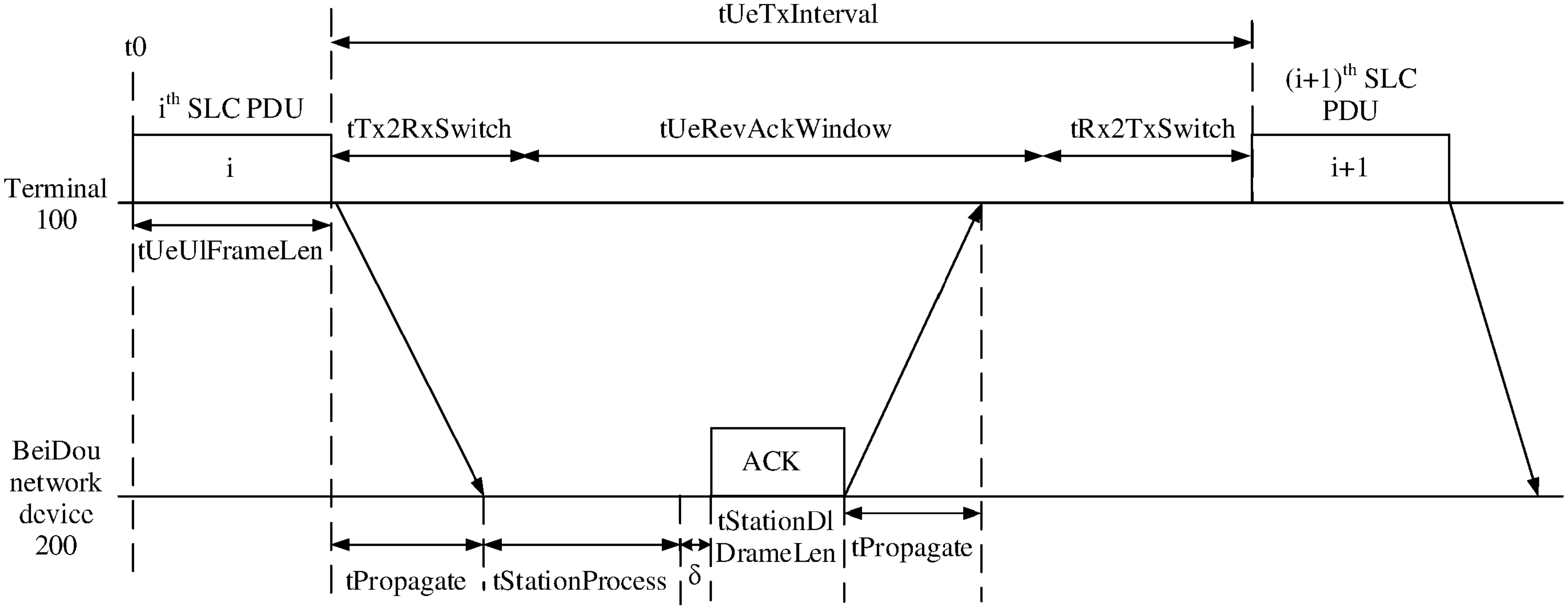


SLC PDU: satellite link control layer protocol data unit

ACK: acknowledgment character

tUeUlFrameLen: time length of a physical frame sent by the terminal 100

tTx2RxSwitch: duration of switching from a transmitting state to a receiving state

tRx2TxSwitch: duration of switching from a receiving state to a transmitting state

tUeTxInterval: time interval at which the terminal 100 sends an SLC PDU

tUeRevAckWindow: ACK receiving window of the terminal 100

tPropagate: air interface propagation delay

tStationProcess: signal processing scheduling delay of the BeiDou network device 200

tStationDlDrameLen: time length of a physical frame sent by the BeiDou network device 200

δ: time alignment deviation of sending a physical frame by the BeiDou network device 200

t0: start moment at which the terminal 100 sends the $i^{th}$ SLC PDU

FIG. 13

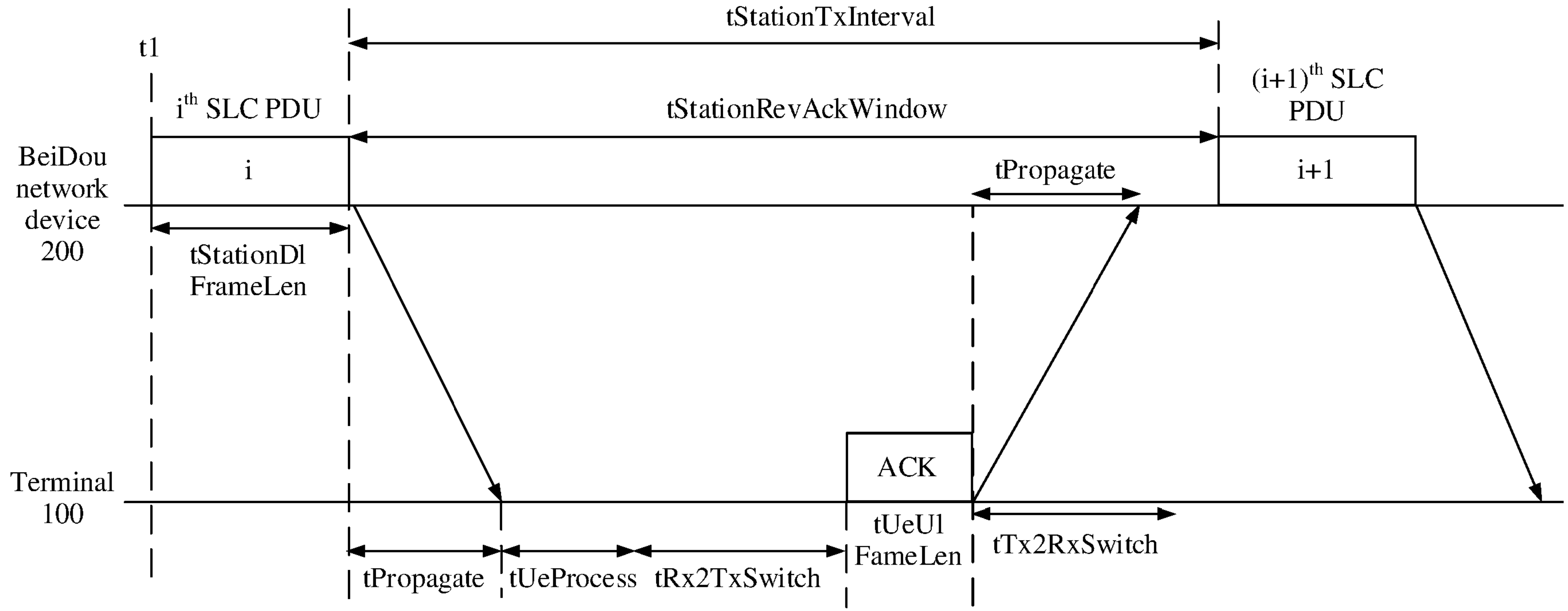


SLC PDU: satellite link control layer protocol data unit

ACK: acknowledgment character

tUeUlFrameLen: time length of a physical frame sent by the terminal 100

tTx2RxSwitch: duration of switching from a transmitting state to a receiving state

tRx2TxSwitch: duration of switching from a receiving state to a transmitting state

tStationTxInterval: time interval at which the BeiDou network device 200 sends an SLC PDU

tStationRevAckWindow: ACK receiving window of the BeiDou network device 200

tPropagate: air interface propagation delay

tUeProcess: signal processing scheduling delay of the terminal 100

tStationDlDrameLen: time length of a physical frame sent by the BeiDou network device 200

t1: start moment at which the BeiDou network device 200 sends the $i^{th}$ SLC PDU

FIG. 14

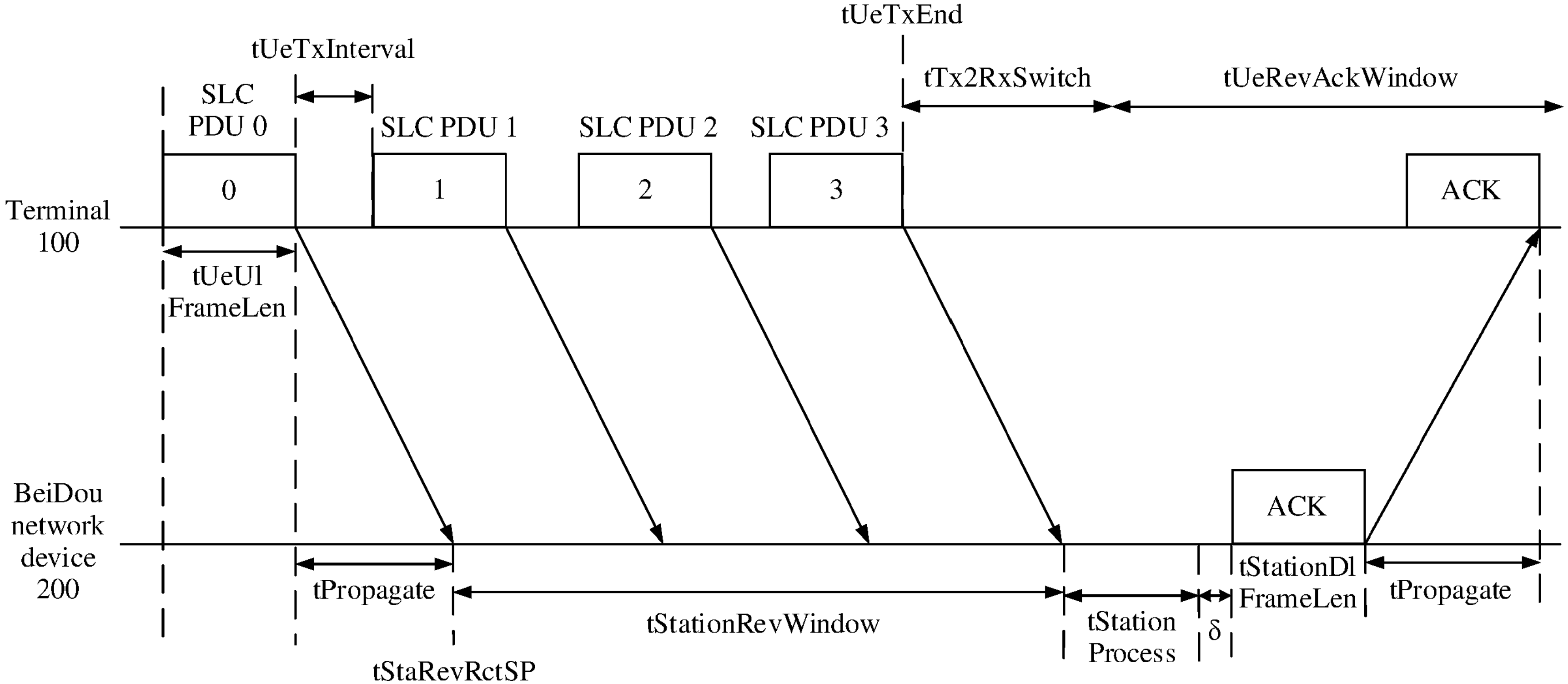


SLC PDU: satellite link control layer protocol data unit
ACK: acknowledgment character
tUeUlFrameLen: time length of a physical frame sent by the terminal 100
tTx2RxSwitch: duration of switching from a transmitting state to a receiving state
tRx2TxSwitch: duration of switching from a receiving state to a transmitting state
tUeTxInterval: time interval at which the terminal 100 sends an SLC PDU
tStationRevWindow: remaining time length of an SLC PDU receiving window of the BeiDou network device 200

tUeRevAckWindow: ACK receiving window of the terminal 100
tPropagate: air interface propagation delay
tStationProcess: signal processing scheduling delay of the BeiDou network device 200
tStationDlDrameLen: time length of a physical frame sent by the BeiDou network device 200
tUeTxEnd: moment at which the terminal 100 completes sending a last SLC PDU in an SLC SDU
δ: time alignment deviation of sending a physical frame by the BeiDou network device 200
tStaRevRctSP: moment at which the BeiDou network device 200 receives a latest SLC PDU

FIG. 15

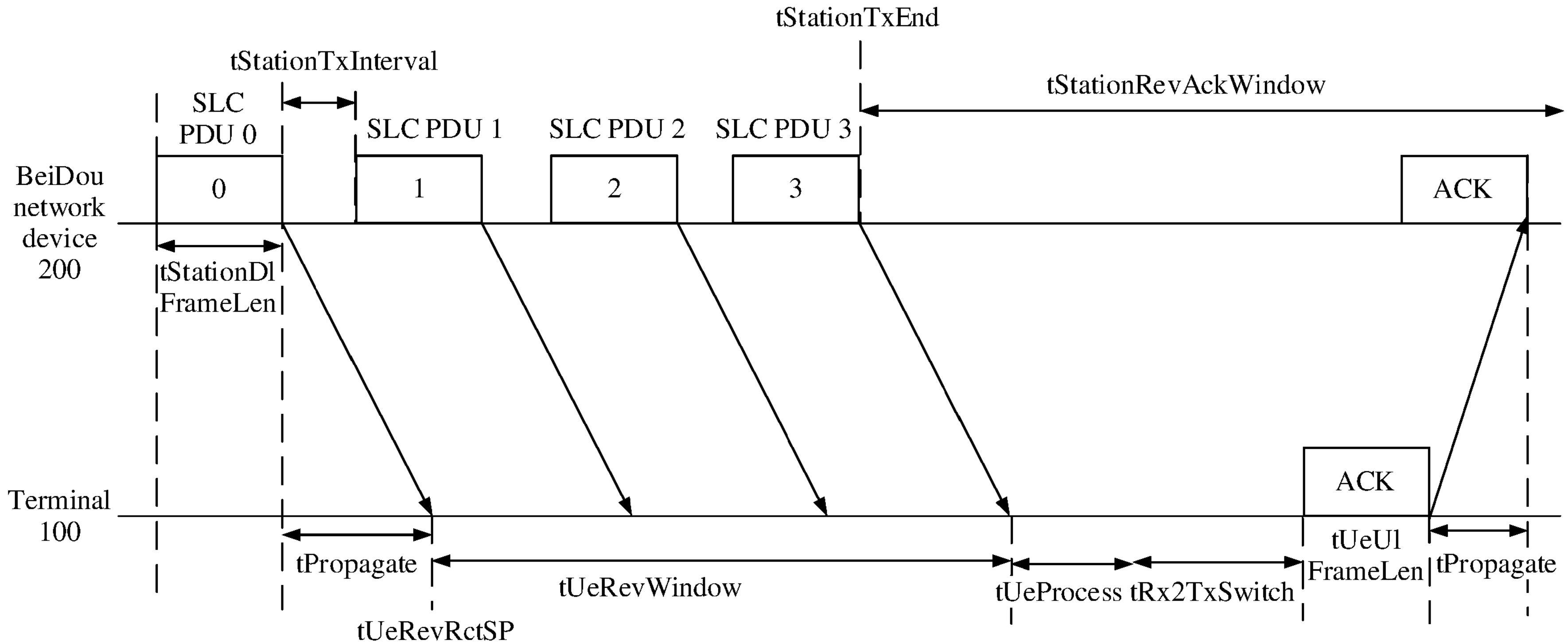


SLC PDU: satellite link control layer protocol data unit
ACK: acknowledgment character
tUeUlFrameLen: time length of a physical frame sent by the terminal 100
tRx2TxSwitch: duration of switching from a receiving state to a transmitting state
tStationTxInterval: time interval at which the BeiDou network device 200 sends an SLC PDU
tUeRevWindow: remaining time length of an SLC PDU receiving window of the terminal 100
tStationRevAckWindow: ACK receiving window of the BeiDou network device 200
tPropagate: air interface propagation delay
tUeProcess: signal processing scheduling delay of the terminal 100
tStationDlDrameLen: time length of a physical frame sent by the BeiDou network device 200
tStationTxEnd: moment at which the BeiDou network device 200 completes sending a last SLC PDU in an SLC SDU
tUeRevRctSP: moment at which the terminal 100 receives a latest SLC PDU

FIG. 16

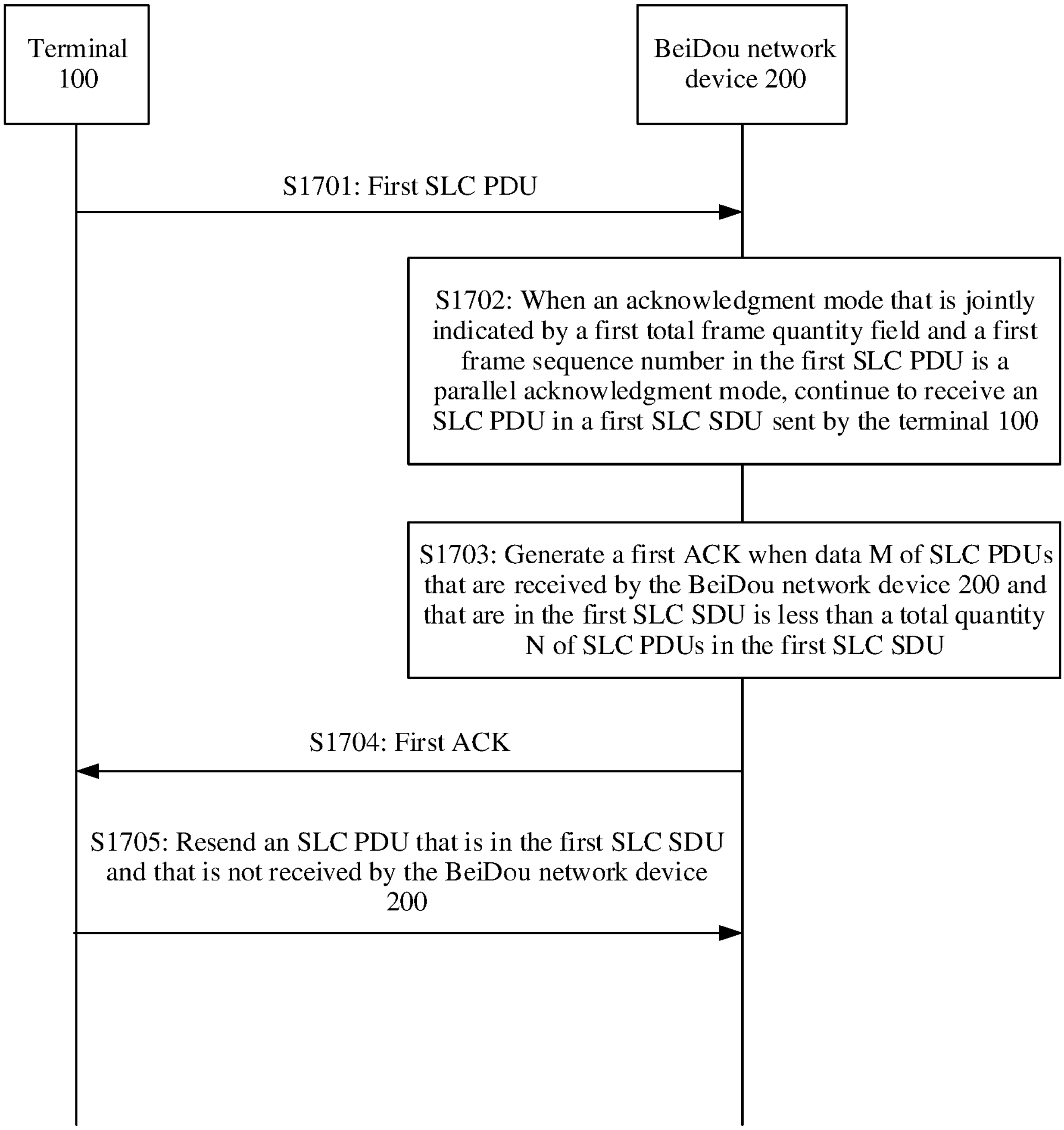
Terminal 100
BeiDou network device 200
S1701: First SLC PDU
S1702: When an acknowledgment mode that is jointly indicated by a first total frame quantity field and a first frame sequence number in the first SLC PDU is a parallel acknowledgment mode, continue to receive an SLC PDU in a first SLC SDU sent by the terminal 100
S1703: Generate a first ACK when data M of SLC PDUs that are received by the BeiDou network device 200 and that are in the first SLC SDU is less than a total quantity N of SLC PDUs in the first SLC SDU
S1704: First ACK
S1705: Resend an SLC PDU that is in the first SLC SDU and that is not received by the BeiDou network device 200

FIG. 17

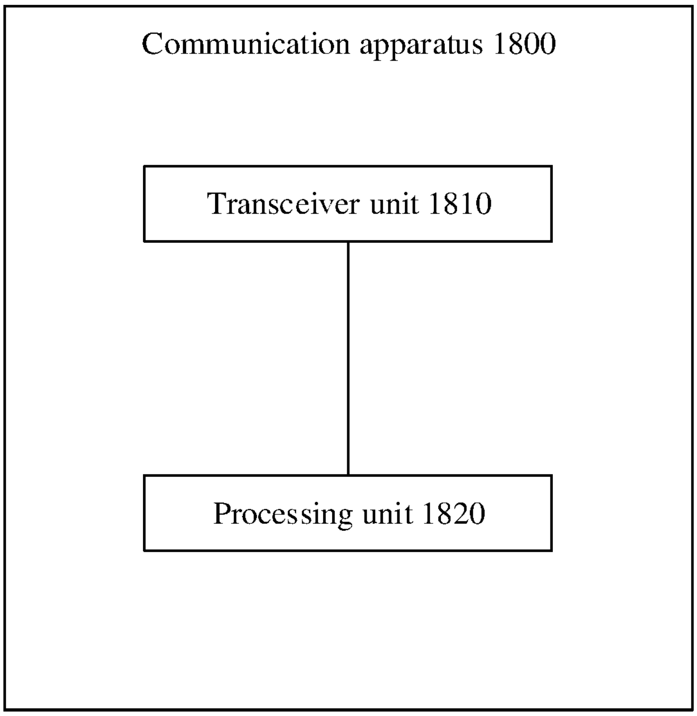
Communication apparatus 1800
Transceiver unit 1810
Processing unit 1820

FIG. 18

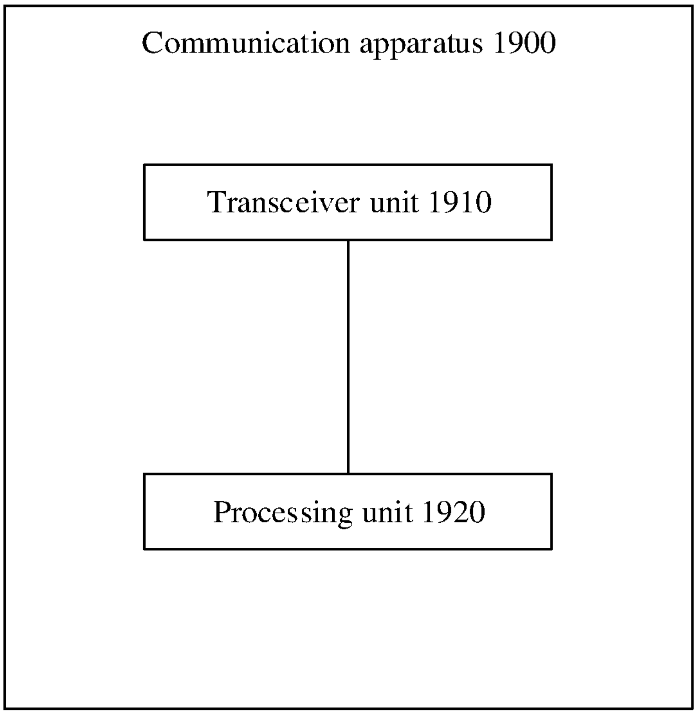
Communication apparatus 1900
Transceiver unit 1910
Processing unit 1920

FIG. 19

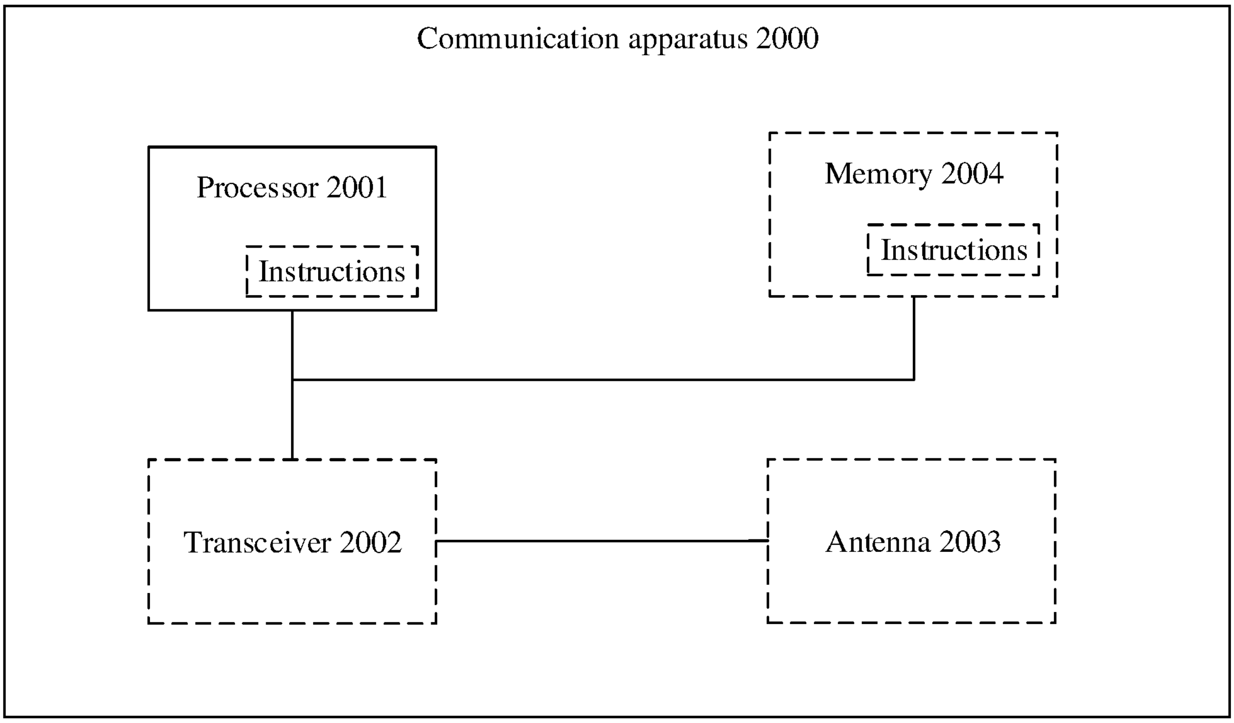
Communication apparatus 2000
Processor 2001
Instructions
Memory 2004
Instructions
Transceiver 2002
Antenna 2003

FIG. 20

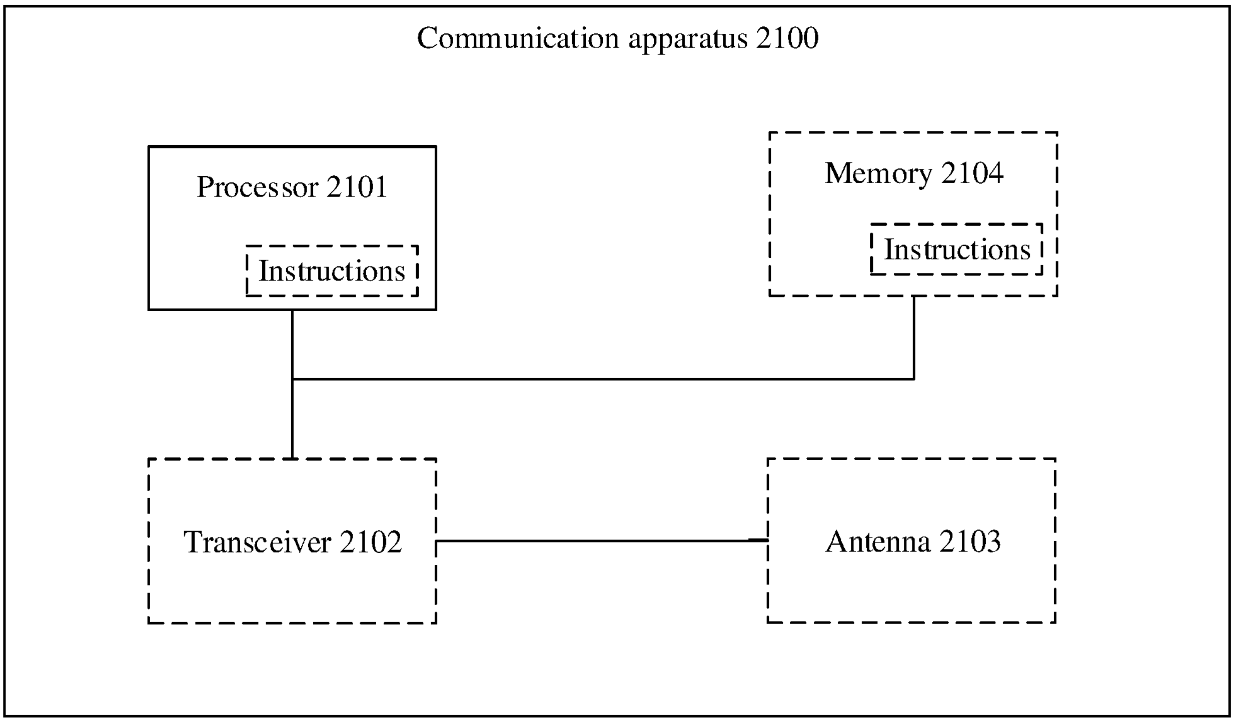
Communication apparatus 2100
Processor 2101
Instructions
Memory 2104
Instructions
Transceiver 2102
Antenna 2103

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110877395
- US 2003212822 A